# EUROPEAN PATENT APPLICATION

(11) **EP 0 703 540 A2**
(43) Date of publication of application: **27.03.1996**
(21) Application number: 95306784.0
(22) Date of filing: 26.09.1995
(51) Int. Cl.: G06F 17/60

(54) **Survey tool for email**

(30) Priority: 26.09.1994 US 311795
(71) Applicant: SUN MICROSYSTEMS, INC., Mountain View, CA 94043 (US)
(72) Inventor: Sanders, James B., Stanford, California 94305 (US)
(74) Representative: W.P. Thompson & Co.

(57) **Abstract**

The present invention provides a survey tool for use with an electronic mail (email) system implemented in a computer network having a plurality of nodes interconnecting a corresponding plurality of computers. In the preferred embodiment, the survey tool includes three modules; a builder module for composing a survey, an answer module for responding to the survey, and a collector module for generating survey results. The builder module provides a graphical interface for generating a graphical survey. The survey is then encoded in a survey description language (SDL). Next, the builder module attaches the SDL encoded survey to a survey email together with the email headers, and transmits the survey email to one or more targeted users via the computer network. The targeted user retrieves the survey email and attempts to invoke the answer module. If a copy of the answer module cannot be located at the receiving computer, a copy of the answer module can be transferred from a remote location via the computer network. Upon execution of the answer module, graphical prompts are generated for the targeted user. In turn, the targeted user provides appropriate survey response which are recorded by the answer module. The survey response is then encoded into a survey result language (SRL), attached to an answer email and transmitted to a survey cache of the computer network. Finally, the collector module accesses the survey cache and retrieve the SRL survey response(s). The SRL encoded survey responses are decoded, interpreted and tabulated. Appropriate graphical displays and/or reports can then be generated.

## Description

This invention relates to surveys and in particular to a survey tool useful in association with a computer network.

A survey is a very efficient way to solicit similar information from a large number of users. Typically, conducting a survey involves several processes, namely, creating a list of queries, disseminating the queries, recording responses corresponding to the queries, collecting and tabulating the responses to generate meaningful reports.

With the proliferation of personal computers in an increasingly paperless environment, the use of electronic mail (email) in a computer network as a primary medium for communication is fast becoming the norm. Hence, in such an automated environment, an originator of a survey, i.e., the enquirer, can compose a survey in the form of an email message which includes a list of textual questions, each requiring a textual or numeric response. Multiple copies of the email message is then disseminated via the computer network to a targeted group of users.

Upon receiving the email message with the list of queries, a targeted user will either generate a reply by creating a new email message with the appropriate responses, or by editing the original email message and appending appropriate responses to each query. The targeted user then transmits the email message containing his/her response back to the enquirer.

Conventionally, the enquirer receives the emails containing the responses via his/her email mailbox, retrieves each email message, reads each message in turn, and manually extracts the desired raw data. The extracted raw data is then tabulated manually or with the aid of a commercial spreadsheet program by converting the raw data into a format compatible with the spreadsheet program.

The above described conventional method of conducting the survey has several disadvantages. These disadvantages originate from problems related to the above identified processes, i.e., survey creation, answering and collection processes. The result is an excessive amount of human interaction required at the various processes despite of the use of a paperless electronic medium.

One problem is related to the survey creation process and the wide variety of applications where surveys are used. Ideally, for ease of implementation, a survey tool should adopt a standardized format while accommodating a wide variety of applications. In practice, multiple customized survey formats may be required for different surveys. Further, to enhance adaptability, a survey must also be able to generate both textual and graphical prompts and be able to receive both graphical and textual responses. Because, conventional email formats are essentially textual in nature, these emails are not well suited for generating graphical prompts and receiving graphical input.

Another problem is related to the survey answering process and the amount of time required by the targeted users on the computer network to respond to the survey. Since each targeted user has to expend a substantial amount of time manually manipulating textual files and formulating answers for a responding email, the total amount of time expended by a typical large group of targeted user is significant.

Yet another problem is related to collection process, i.e., the difficulty and time required for retrieving, tabulating and compiling the results of the survey into a meaning report. Incompatibility between computer networking software and spreadsheet software is the primary source of the problem. In order to be compatible with the networking software, the survey emails have to be in a specific email format which have been optimized for transmission efficiencies, typically a textual format such as ASCII with special control characters. However, email formats are generally incompatible with the formats of spreadsheet programs. This is because spreadsheet programs which have distinct input and output file formats optimized for storage and retrieval efficiencies. As a result, the typical enquirer has to read every email to extract the relevant information before manually inputting the responses into the incompatible spreadsheet program to compile the results into a report. This is a monumental task when the targeted user group is large.

Hence, there is a need for a flexible, user-friendly and efficient survey tool that can accommodate a wide range of user applications with a minimal amount of human interaction. In addition, the survey tool should also be easily adapted for different hardware and computer networking platforms.

The present invention is a survey tool for use with an electronic mail (email) system implemented in a computer network having a plurality of nodes interconnecting a corresponding plurality of computers. In the preferred embodiment, the survey tool includes three modules; a builder module for composing a survey, an answer module for responding to the survey, and a collector module for tabulating the results of the survey into a meaningful report.

The builder module provides a user-friendly builder graphical interface for generating at least one query of a graphical survey. This is accomplished by providing graphical prompts to an enquirer. The process of generating query(s) is repeated by the enquirer until the survey is complete. The survey is then encoded in a survey description language (SDL). The SDL includes ASCII characters. Next, the builder module attaches the SDL encoded survey to a survey email together with the email headers, and transmits the survey email to at least one targeted user at a receiving computer coupled to the computer network. Duplicate survey emails can be distributed to multiple targeted users.

The targeted user receives the survey email in his/her email mailbox at the receiving computer. The targeted user then browses through the mailbox, retrieves the survey email and attempts to invoke the answer module for decoding the attached SDL survey. If a copy of the answer module cannot be located at the receiving computer, a Bourne shell script attached to the survey email provides the ability to locate and transfer a copy of the answer module from a remote location via the computer network.

Upon execution of the answer module, graphical prompts are generated for the queries of the survey. In turn, the targeted user provides appropriate responses which are recorded by the answer module. The survey response is then encoded into a survey result language (SRL). The SRL encoded survey response is attached to an answer email with the appropriate email headers and transmitted to a predetermined location at the computer network, for example a survey cache coupled to a node of the computer network.

When the targeted users have had an opportunity to respond by sending their respective answer emails, the collector module is used to access the survey cache and retrieve the SRL survey response(s). The SRL encoded survey responses are then decoded, interpreted and tabulated. Finally, appropriate graphical displays and/or reports are generated.

By way of example only, a specific embodiment of the present invention will now be described, with reference to the accompanying drawings, in which:

**Figure 1A** illustrates a computer network having a plurality of nodes interconnecting a plurality of computers.

**Figures 1B and 1C** are block diagrams of two of the plurality of computers of Figure 1A.

**Figure 2** is a block diagram showing three main modules of a survey tool in accordance with the invention.

**Figure 3** is a block diagram illustrating the format of an electronic mail (email) with an email attachment.

**Figure 4** is a block diagram illustrating the format of a survey email attachment of the present invention.

**Figure 5** is a block diagram illustrating the format of an answer email attachment of the present invention.

**Figures 6A-6B** are flowcharts illustrating a builder module of the survey tool of the present invention.

**Figures 7A-7D** are flowcharts illustrating an answer module of the survey tool of the present invention.

**Figures 8A-8B** are flowcharts illustrating a collector module of the survey tool of the present invention.

### DEFINITIONS

Bourne shell script: A collection of textual commands which are interpreted by a UNIX Bourne shell interpreter which executes the commands.
SDL : Survey description language.
SRL : Survey result language.
Bourne shell archive : A segment of a Bourne shell script for encapsulating a survey description language (SDL) encoded survey.
Instantiation : A run time loading of data which defines the behavior of an executable program.
Encapsulation: A segment within an email attachment.

### DETAILED DESCRIPTION OF THE INVENTION

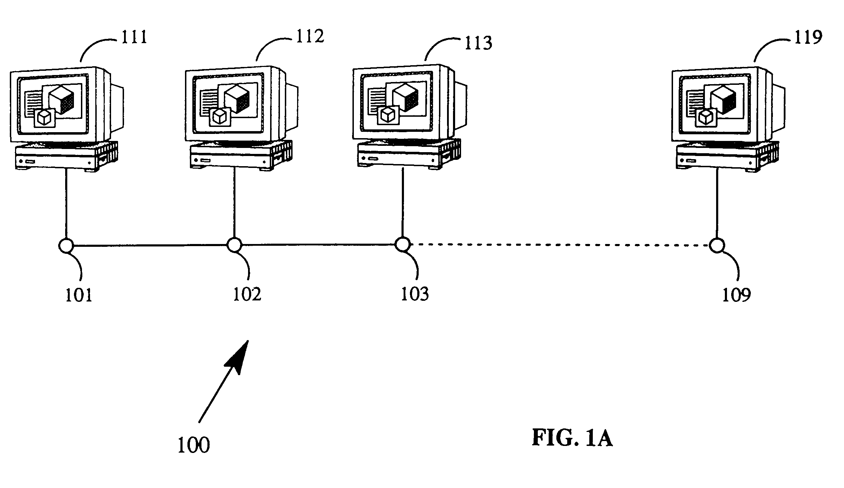

Figure 1A shows a computer network 100 having a plurality of nodes 101, 102, ... 109, for interconnecting a plurality of computers 111, 112, ... 119. As known to one skilled in the art, a computer network can interconnect a wide variety of computers at various locations and can include sub-networks such as local area networks (LANs), and wide area networks (WANs) coupled via dedicated lines, switched lines or wireless connections. An electronic mail (email) system is implemented over computer network 100 enabling users on computers 111, 112, ... 119 to communicate with each other via email.

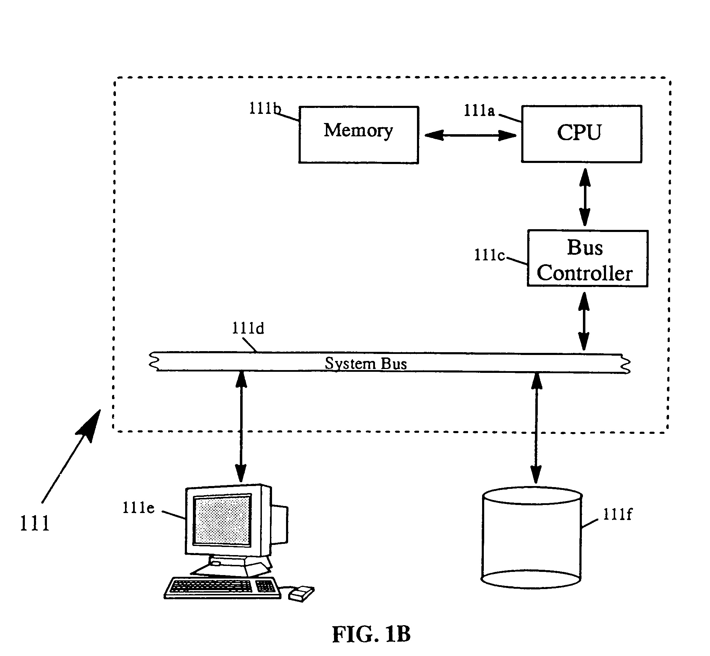

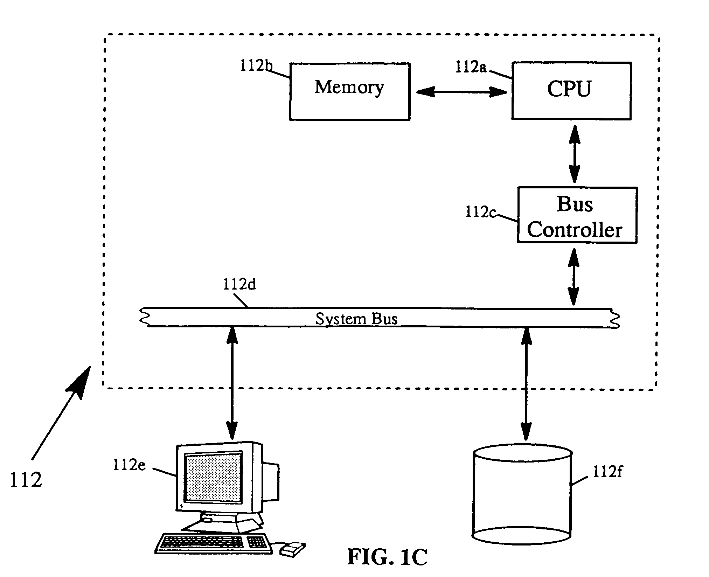

Figures 1B and 1C are block diagrams of two of computers 111, 112, ... 119, e.g., computers 111, 112 respectively. Computer 111 includes a central processing unit 111a, a memory 111b coupled to CPU 111a, a bus controller 111c coupled to CPU 111a, a system bus 111d coupled to bus controller 111c, a monitor/keyboard/mouse 111e coupled to system bus 111d, and an optional mass stage device 111f coupled to system bus 111d. Similarly, computer 112 includes a central processing unit 112a, a memory 112b coupled to CPU 112a, a bus controller 112c coupled to CPU 112a, a system bus 112d coupled to bus controller 112c, a monitor/keyboard/mouse 112e coupled to system bus 112d, and an optional mass stage device 112f coupled to system bus 112d.

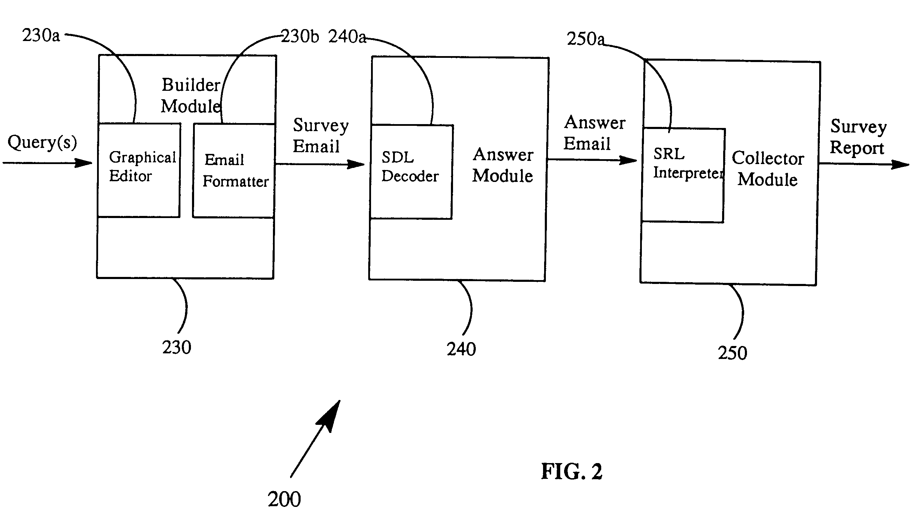

Figure 2 is a block diagram illustrating three main processes of a survey tool 200 implemented over computer network 100 in accordance with one embodiment of the invention. Survey tool 200 includes three main modules, a builder module 230, an answer module 240 and a collector module 250. An originator of a survey, i.e., the enquirer, executes builder module 230 which prompts the enquirer to begin creating a list of queries. Builder module 230 generates a survey email, i.e., a survey attached to an email, to at least one targeted user on computers 111, 112, ... 119. When the survey email arrives at a receiving computer, the targeted user retrieves and executes answer module 240 to respond by generating an answer email, i.e., an answer attached to an email, to the enquirer or to a predetermined return node on computer network 100. Eventually, the responding answer email(s) are decoded and the results tabulated in a meaningful report by executing collector module 250.

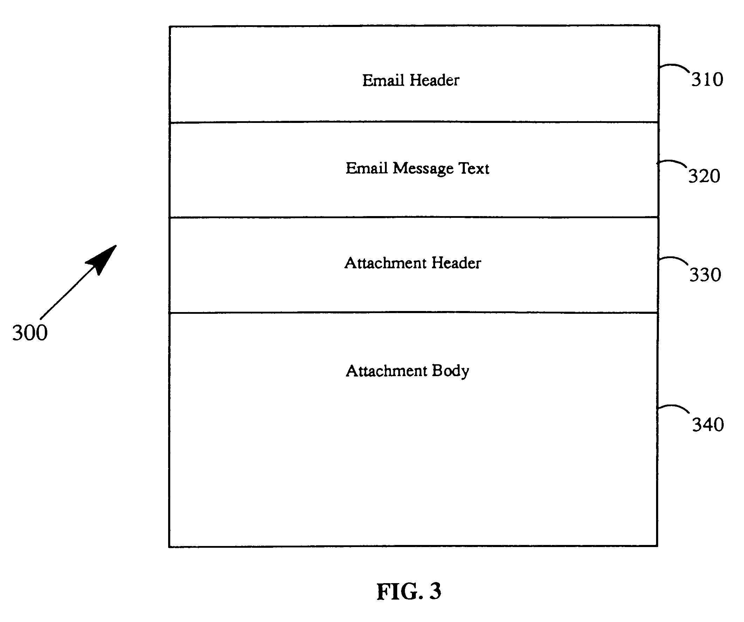

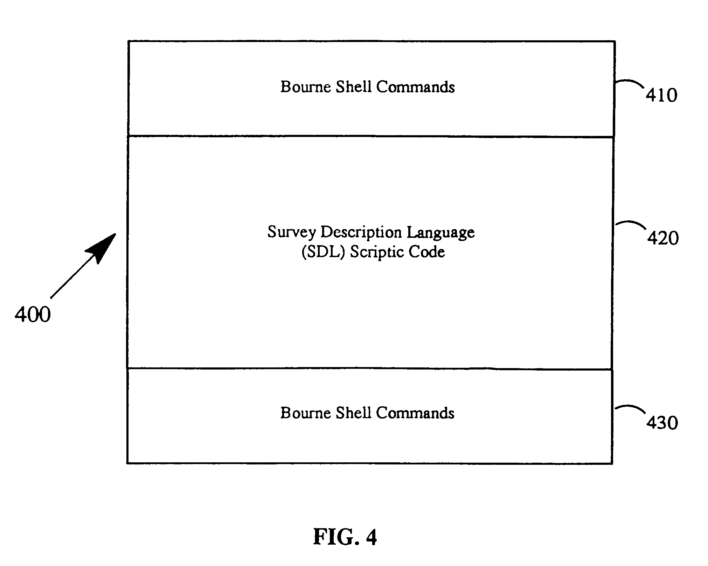

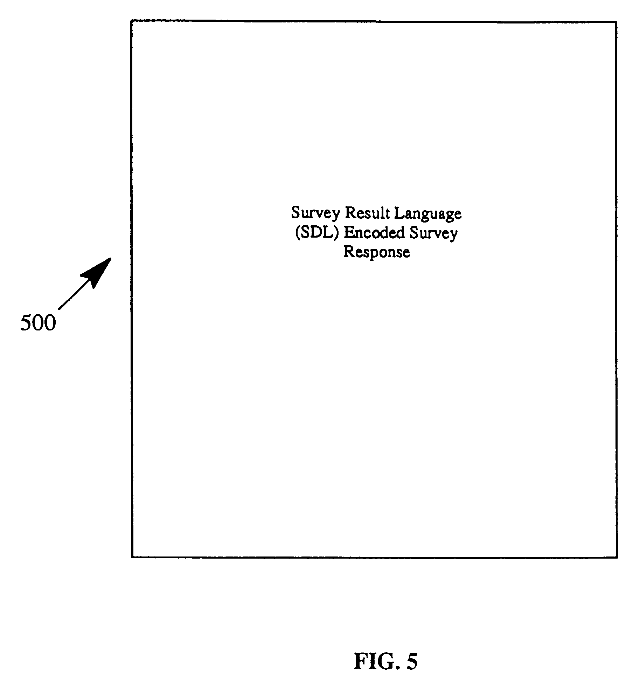

Figure 3 is a block diagram showing the format of an email 300 suitable for implementing both the survey email and the answer email in accordance with the invention. Email 300 includes an email header 310, an email textual message box 320, an attachment header 330 and an attachment body 340. Email header 310 includes sender and addressee information. Email textual message box 320 allows a sender to include a textual message. Attachment header 330 provides information about the location and size of attachment body 340. Attachment body 340 provides a vehicle for emailing the surveys and survey responses. Figures 4 and 5 are block diagrams illustrating the respective formats of a survey email attachment 400 and an answer email attachment 500 corresponding to the survey email and the answer email of the present invention. Both attachments 400, 500 are described in greater detail below.

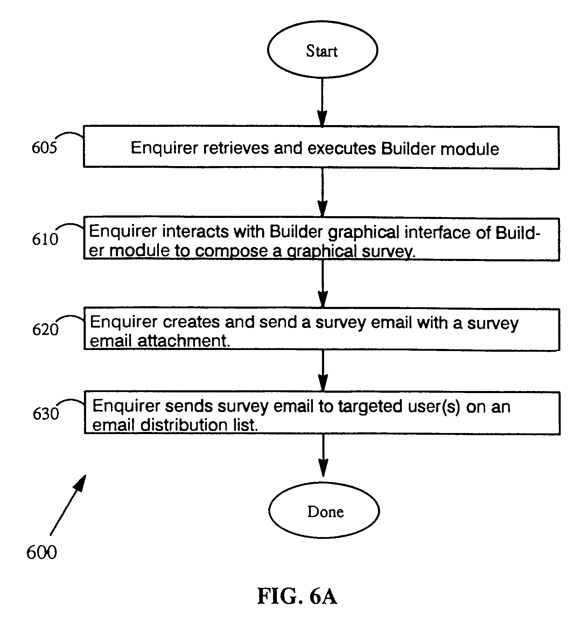

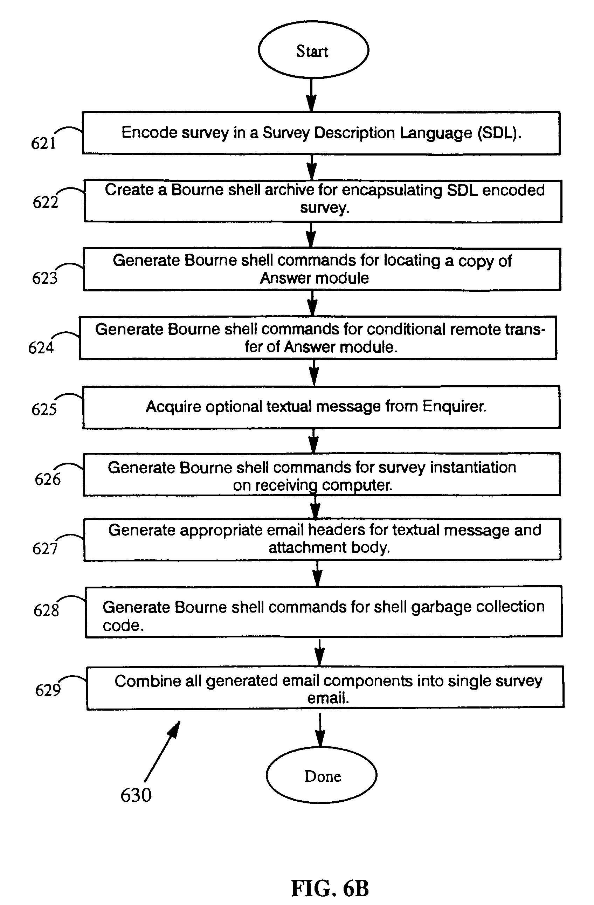

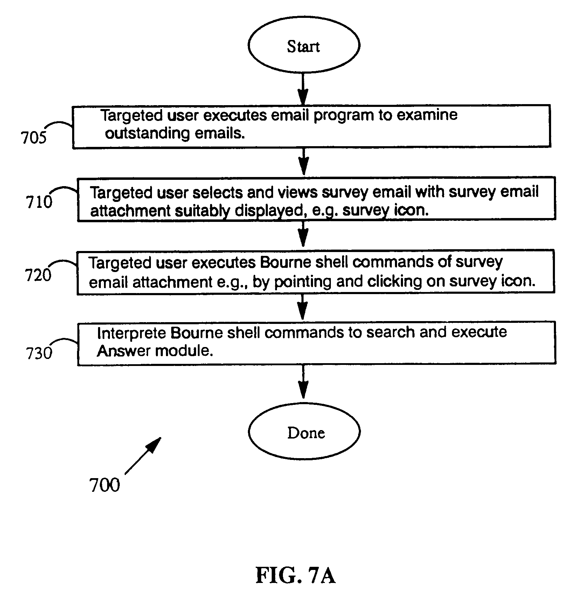

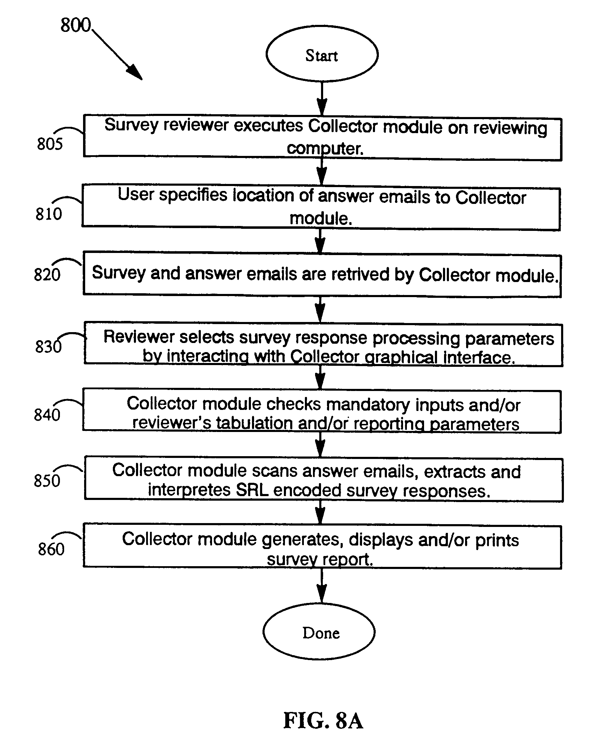

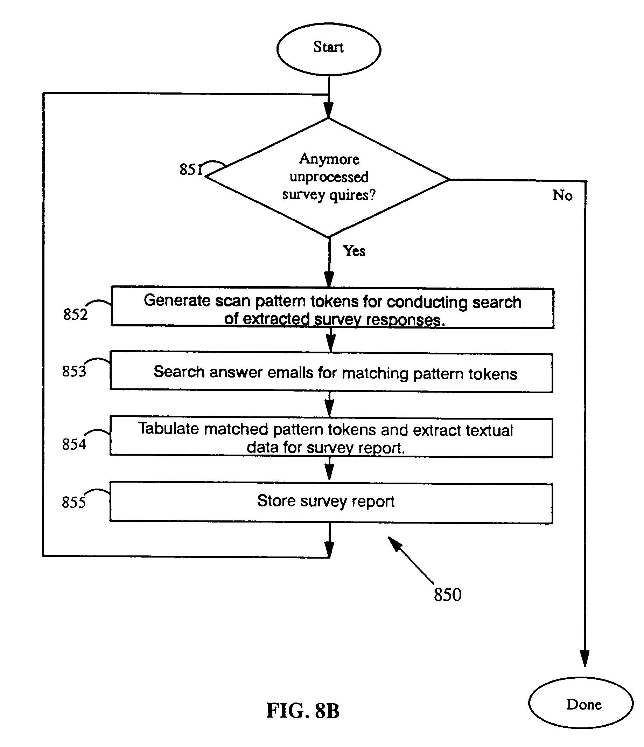

Figures 6A, 6B, 7A-7D, 8A and 8B are flowcharts illustrating one embodiment of survey tool 200 in greater detail. Figures 6A and 6B show process steps of builder module 230, Figures 7A through 7D show process steps of answer module 240, and Figures 8A and 8B show process steps of collector module 250. These figures illustrate one embodiment of survey tool 200 and are not intended to limit the scope of the invention. Appendix A is a User's Guide for survey tool 200.

Referring to Figure 6A, first the enquirer retrieves and executes builder module 230, which includes a graphical editor 230a and an email formatter 230b, on an enquiring computer, e.g., computer 111 (step 605). Graphical editor 230a provides a user-friendly bit-mapped graphical interface on monitor 111e for generating graphical prompts such as icons and "radio buttons", and for receiving parameters and/or input data from the enquirer in response to the prompts. The enquirer interacts with the builder graphical interface to compose at least one query for the survey (step 610). The builder graphical interface records both graphical and textual input such as keyboard strokes in response the graphical prompts. In some embodiments of builder module 230, when the interactive process of composing the survey is completed, the enquirer can test the survey by routing the survey back to himself/herself. Modifications and corrections to the survey if any can be performed at this time.

When the enquirer is satisfied with the "look and feel" of the survey, graphical editor 230a is terminated and email formatter 230b is used to create the survey email. Next, survey email attachment 400, as illustrated by Figure 4, is generated for the survey email (step 620). Finally, builder module 230 transmit the survey email with the survey email attachment 400 to targeted user(s) on an email distribution list at one or more receiving computers of said plurality of computers 111, 112, ... 119 (step 630).

Referring now to Figure 6B, step 620 for building survey email attachment 400 is described in greater detail. Survey email attachment 400 is essentially a Bourne shell script which includes Bourne shell commands 410, 430 to be interpreted by the operating system of the receiving computer. First, the survey created above by the enquirer is encoded in a survey description language (SDL) format (step 621). In one implementation, the SDL includes ASCII characters. A Bourne shell archive 420 is then created for encapsulating the SDL encoded survey (step 622). In addition, code for Bourne shell commands 410 capable of locating and remote transferring an executable copy of answer module 230 are generated in case a conditional remote file transfer of answer module 230 is requested by the receiving computer (steps 623 and 624).

Next, builder module 230 acquires any optional textual message generated by the enquirer, such as a cover memo summarizing the nature and purpose of the survey, and inserts the message into email textual message box 320 (step 625). Builder module 230 then generates additional code for Bourne shell commands 410, 430, enabling answer module 230 to instantiate the SDL encoded survey on the receiving computer(s) (step 626). Builder module 230 is also responsible for generating appropriate email headers 310, 330 for textual message box 320 and attachment body 340, respectively (step 627). Preferable, Bourne shell commands 430 also includes garbage collection code for ensuring that any temporary files that are created by answer module 230 are deleted after use (step 628). Finally, the above described email components are combined to form the survey email (step 629).

The enquirer is now ready to distribute the survey email using a email distribution list specified by the enquirer. A return email address for storing answer emails is also specified. This return email address is generally the enquirer's email address but can be a different email address. Builder module 230 then transmits the survey email with the attached SDL encoded survey to at least one targeted user. Appendix B is an example of an SDL encoded survey.

Figure 7A is a flowchart illustrating the process steps at the receiving computer, e.g., computer 112, for processing the incoming survey email and generating a responding answer email. In this embodiment, a targeted user examines his/her outstanding email(s) in his/her electronic mailbox using an email program which automatically fetches outstanding emails in the targeted user's mailbox (step 705). Next, the targeted user selects the survey email for viewing via monitor 112e of receiving computer 112, with the email attachment of the survey email suitably displayed, e.g., as a survey icon (step 710). The survey email attachment can now be selected for execution, e.g., by pointing and double clicking on the survey icon with mouse 112e (step 720). The mouse clicking executes Bourne shell commands 410 of the survey email attachment which searches for and executes answer module 240 (step 730).

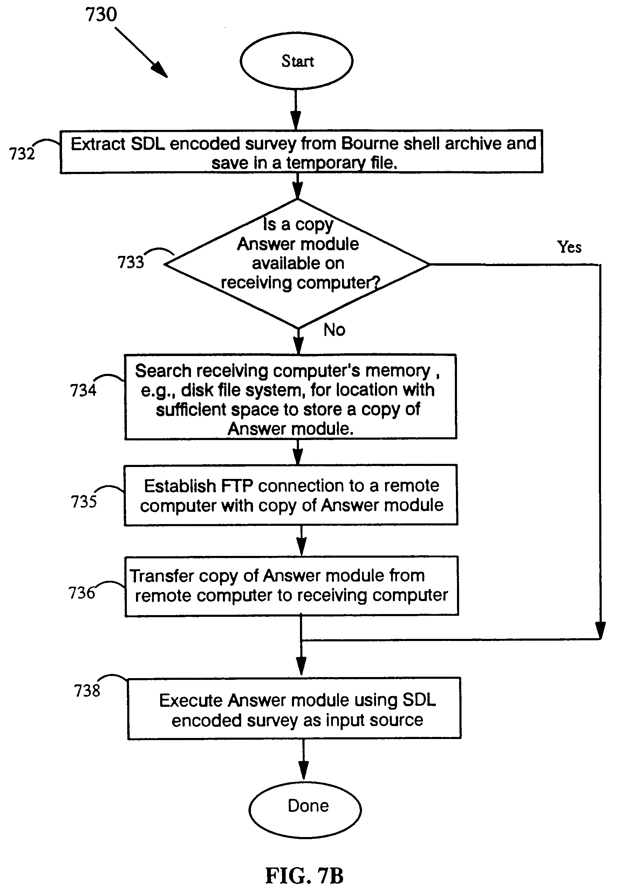

Referring now to Figure 7B, a detailed flow chart illustrating step 730, first the SDL encoded survey is extracted from Bourne shell archive 420 and saved as a temporary file at receiving computer 112 (step 732). Next, a search is conducted at receiving computer 112 for a copy of answer module 240 (step 733).

In accordance with one aspect of the invention, no prior installation of answer module 240 at receiving computer 112 is necessary for a targeted user to be able to receive the survey email and respond by sending the answer email. This freedom from pre-installation of answer module 240 advantageously increases the types of computers coupled to network 100 that can receive and participate in the survey, e.g., diskless and/or driveless computers. If a copy of answer module 240 is found on the receiving computer, answer module 240 is ready for execution using the SDL temporary file as input data (step 738).

Conversely, if there are no executable copy of answer module 240 is found on receiving computer 112, then a scan of the receiving computer's memory 112b is initiated to ensure that there is sufficient free space to store a temporary copy of answer module 240 (step 734). Using network address and file name information included by the enquirer in Bourne shell commands 410, a file transfer protocol (FTP) connection over computer network 100 is established between receiving computer 112 and a remote computer, e.g., computer 115, identified as having an copy of answer module 240 (step 735). The copy of answer module 240 is then transferred via the FTP connection into receiving computer 112 (step 736). Receiving computer 112 can now execute answer module 240 to complete processing of the SDL encoded survey stored in the temporary file (step 738).

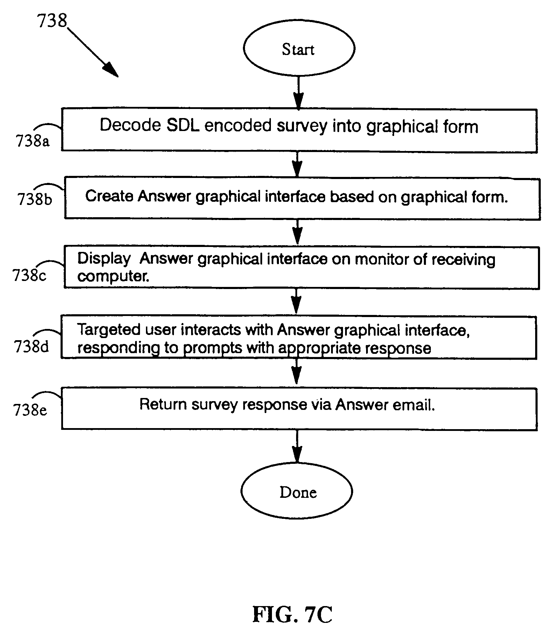

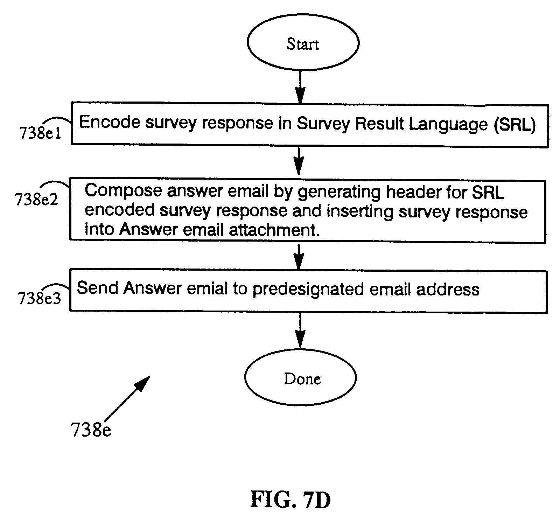

Figures 7C and 7D show in greater detail the instantiation of the SDL encoded survey on receiving computer 112 by answer module 240. An SDL decoder 240a of answer module 240 decodes the SDL encoded survey into a graphical form (step 738a). Answer module 240 then creates an answer graphical interface based on the graphical form of the SDL encoded survey (step 738b). The answer graphical interface is displayed on monitor 112e of receiving computer 112 (step 738c).

The targeted user interacts with the answer graphical interface, responding to prompt(s) with appropriate response (step 738d). Graphical and/or textual prompts are generated for each query to prompt the targeted user, e.g., radio buttons for multiple choices, yes/no, a scaled rating, a numerical value and/or textual boxes with fill-in-the-blank or essay answer prompts (See box 430). The user then "clicks" and/or types in the appropriate response using keyboard/mouse 112e. Answer module 240 also provides editing functions such as the ability to respond to the queries in a non-sequential order. Appendix C is an example of graphical screens generated by answer module 240 in response to the GDL encoded survey email.

When the targeted user's survey response is completed, the targeted user initiates a return of the survey response via the answer email, e.g., by selecting a return icon, i.e., by clicking the mouse (step 738e). Referring to Figure 7D, answer module 240 encodes the survey response in a survey result language (SRL) (step 738e1). In one implementation, the SRL includes ASCII characters. The responding answer email is created by generating an email header and an attachment header, and by inserting the SRL encoded survey response into answer email attachment 500 (step 738e2). Finally, the answer email with the attached survey response is transmitted to a survey cache at a predetermined node of computer network 100 that is designated by the enquirer (step 738e3).

Figure 8A is a flowchart illustrating the process steps used by collector module 250 of the present invention. First, a survey reviewer, e.g., the enquirer, executes collector module 250 at a reviewing computer (step 805). Note that the reviewing and the enquiring computers can be the same or separate computers. In this example, the reviewing computer is also computer 111. The reviewer specifies a pathname to the survey cache which has the answer emails from the responding targeted users (step 810). Next, the survey and the answer emails are retrieved by collector module 250 (step 820). Upon selecting a "load survey" command, a pop up menu with several loading options is generated by a collector graphical interface of collector module 260 on monitor 111e. The reviewer selects survey response processing options/parameters provided by collector module 250, such as selection frequency and percentages across choice items, by rank and, text (essay) inputs (step 830). Collector module 250 also checks for mandatory inputs, e.g., parameter selections, needed to generate a survey report and/or checks the processing options/parameters selected by the reviewer (step 840). Collector module 250 then scans the retrieved answer emails, extracts and interprets the SRL encoded survey responses from the answer emails (step 850). Finally, a survey report can be generated and displayed on monitor 111e of the reviewing computer if a display or view option had been selected (step 860). Alternatively or additionally, collector module 250 can be directed to print the survey report by selecting a print option.

Figure 8B illustrates in greater detail step 850 used by an SRL interpreter 250a of collector module 250 for interpreting the extracted SRL encoded survey responses. Interpreter 250a checks to see if there are any unprocessed survey queries (step 851). Next, for each survey query, a pattern generator of interpreter 250a generates scan pattern tokens for conducting a search of the extracted survey responses (step 852). Using a comparator of interpreter 250a, each survey response is searched for matching scan pattern tokens (step 853). The matched pattern tokens are tabulated and the textual data extracted by a sorter of interpreter 250a to provide the survey report (step 854). Finally, the survey report are stored in a form suitable for graphical display and/or printout (step 855).

Other modifications are possible without departing from the scope of the invention. For example, computer network 100 can either be hardwired, optical, wireless, or combinations thereof. Other applications for which the remote transfer of an executable program with an interpretive command script can be adapted for use include various email reader programs which support email attachments. Hence the scope of the invention should be determined by the following claims.

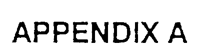

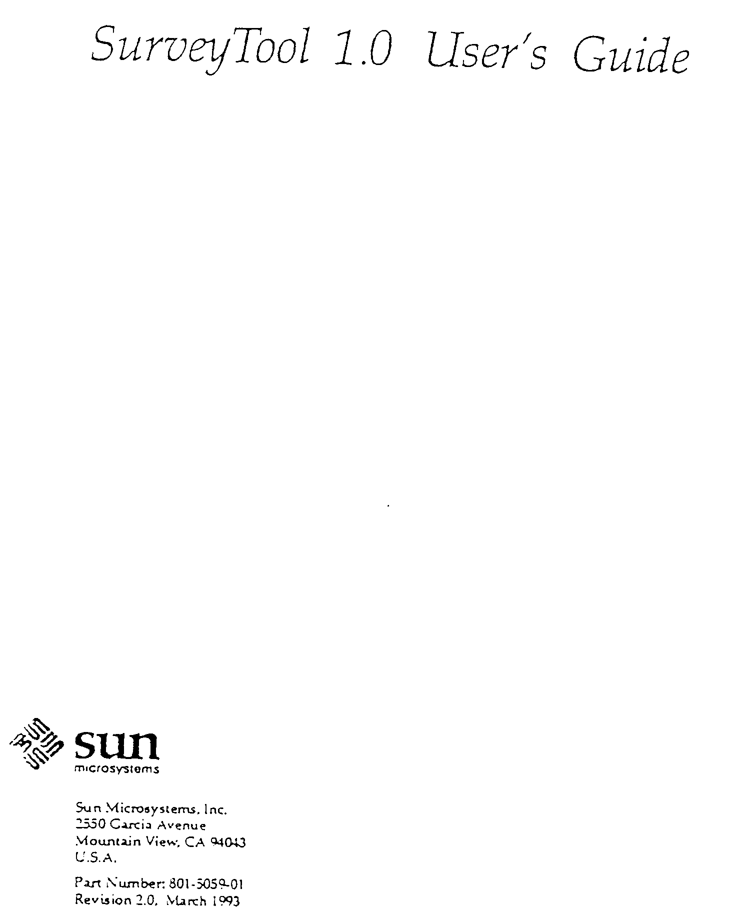

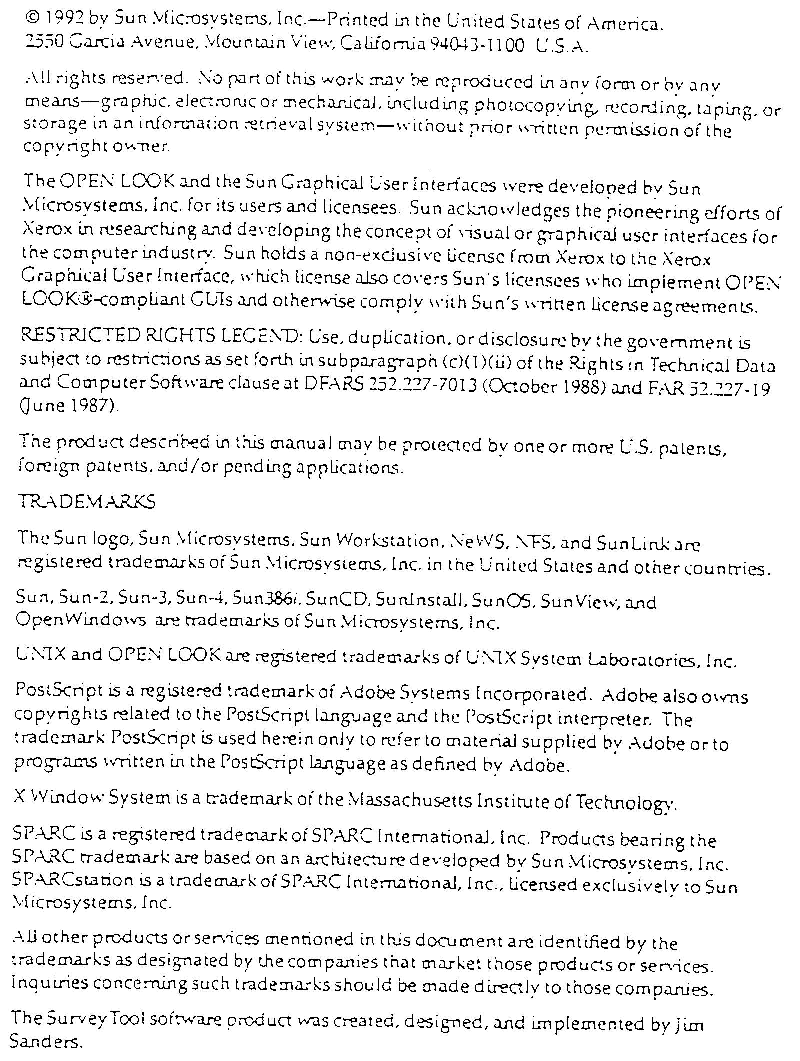

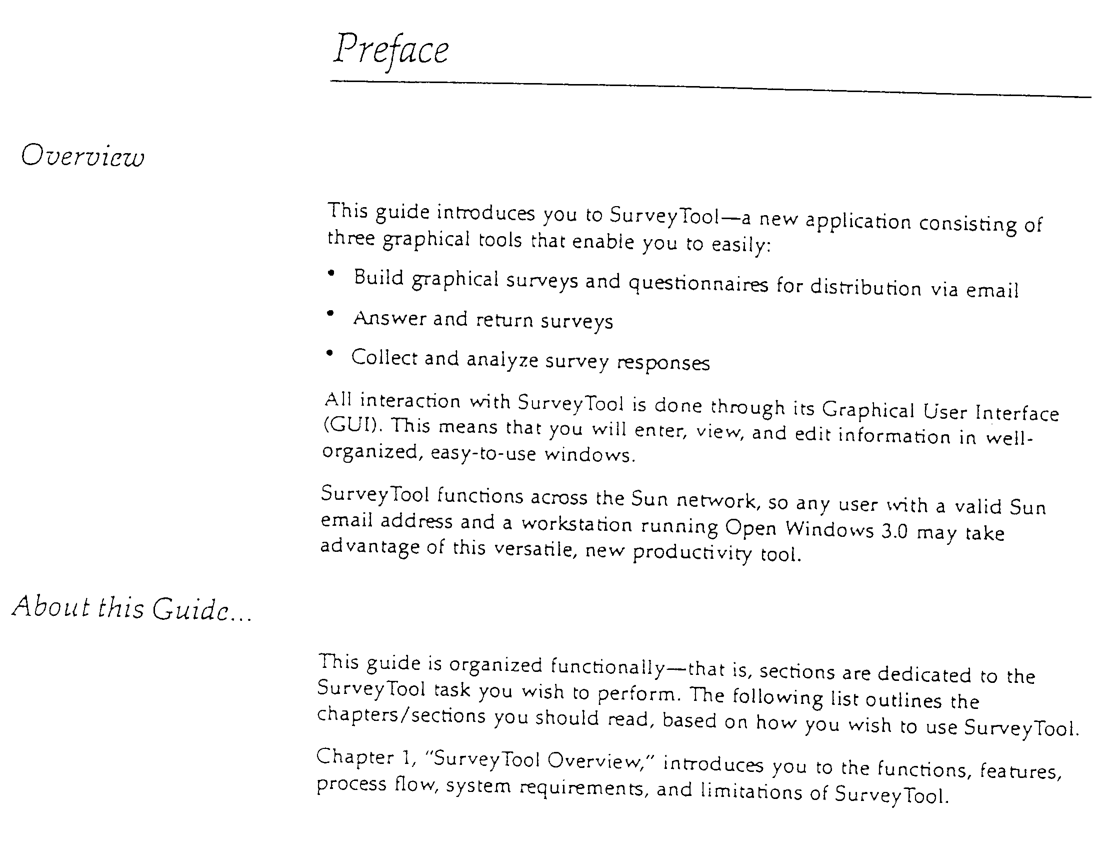

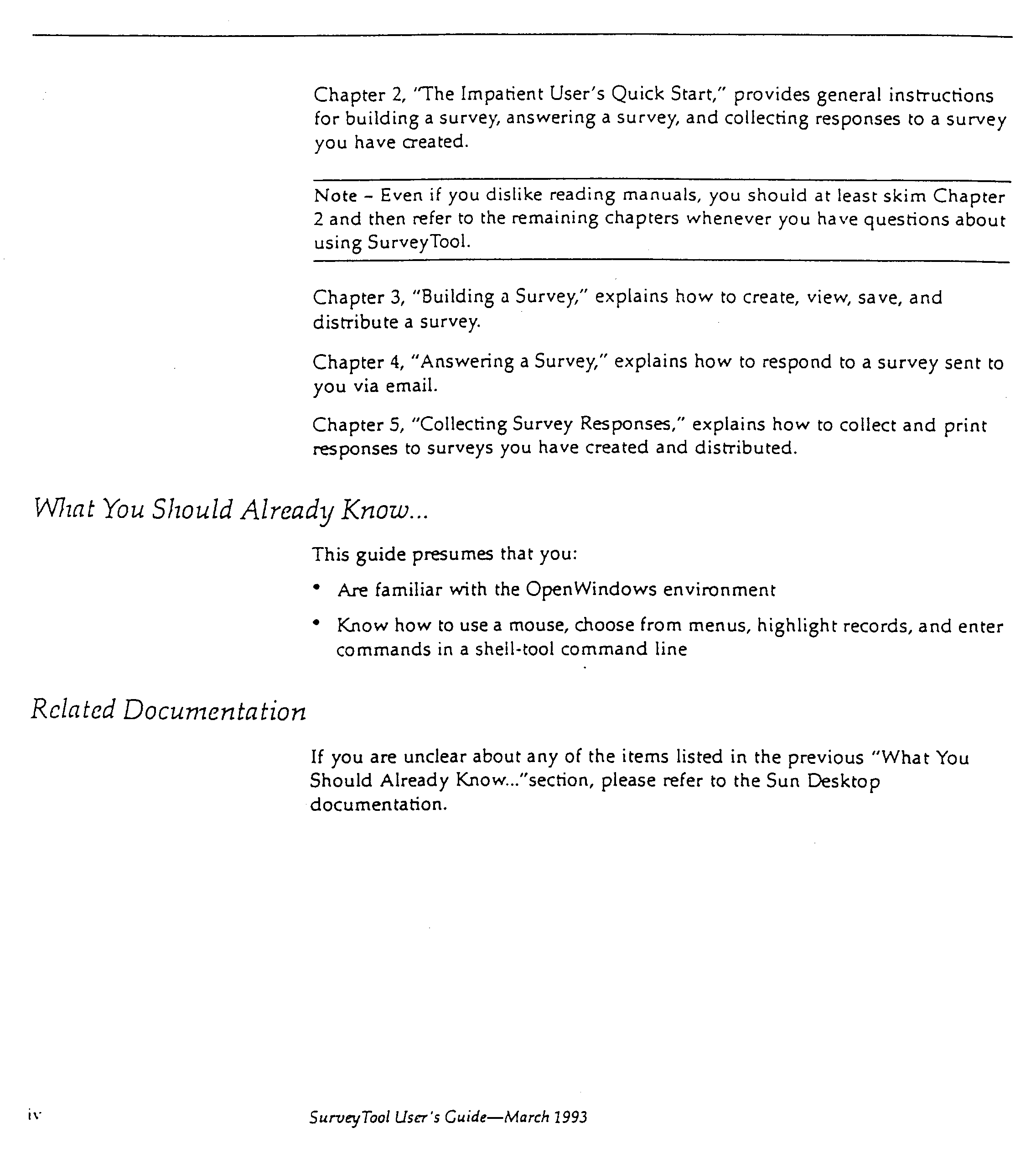

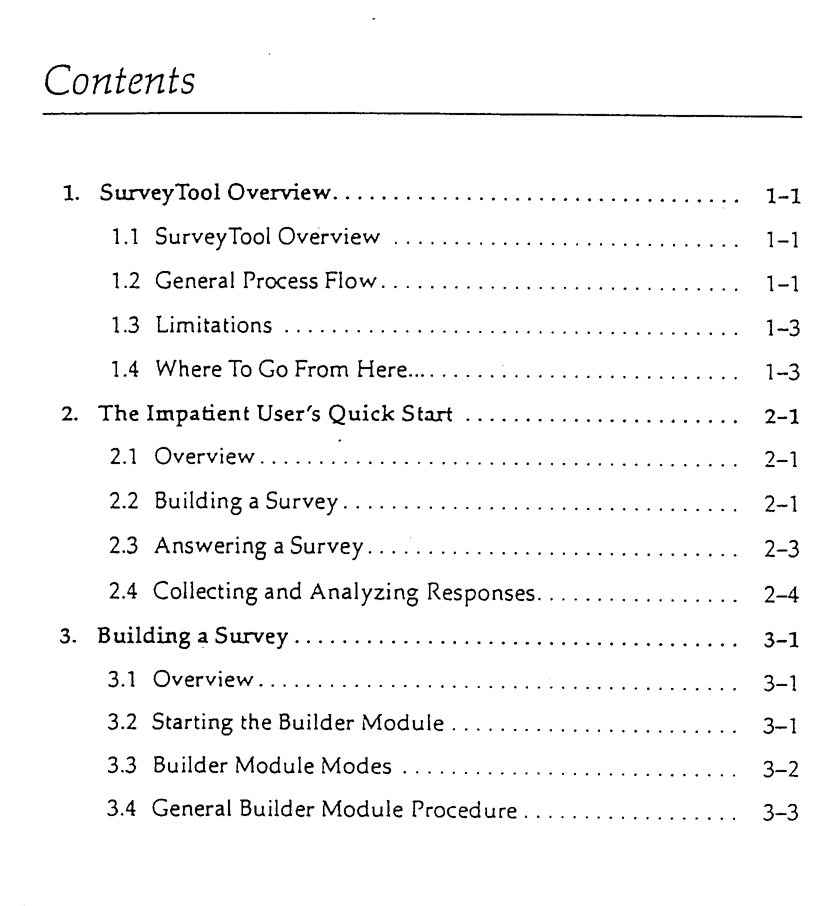

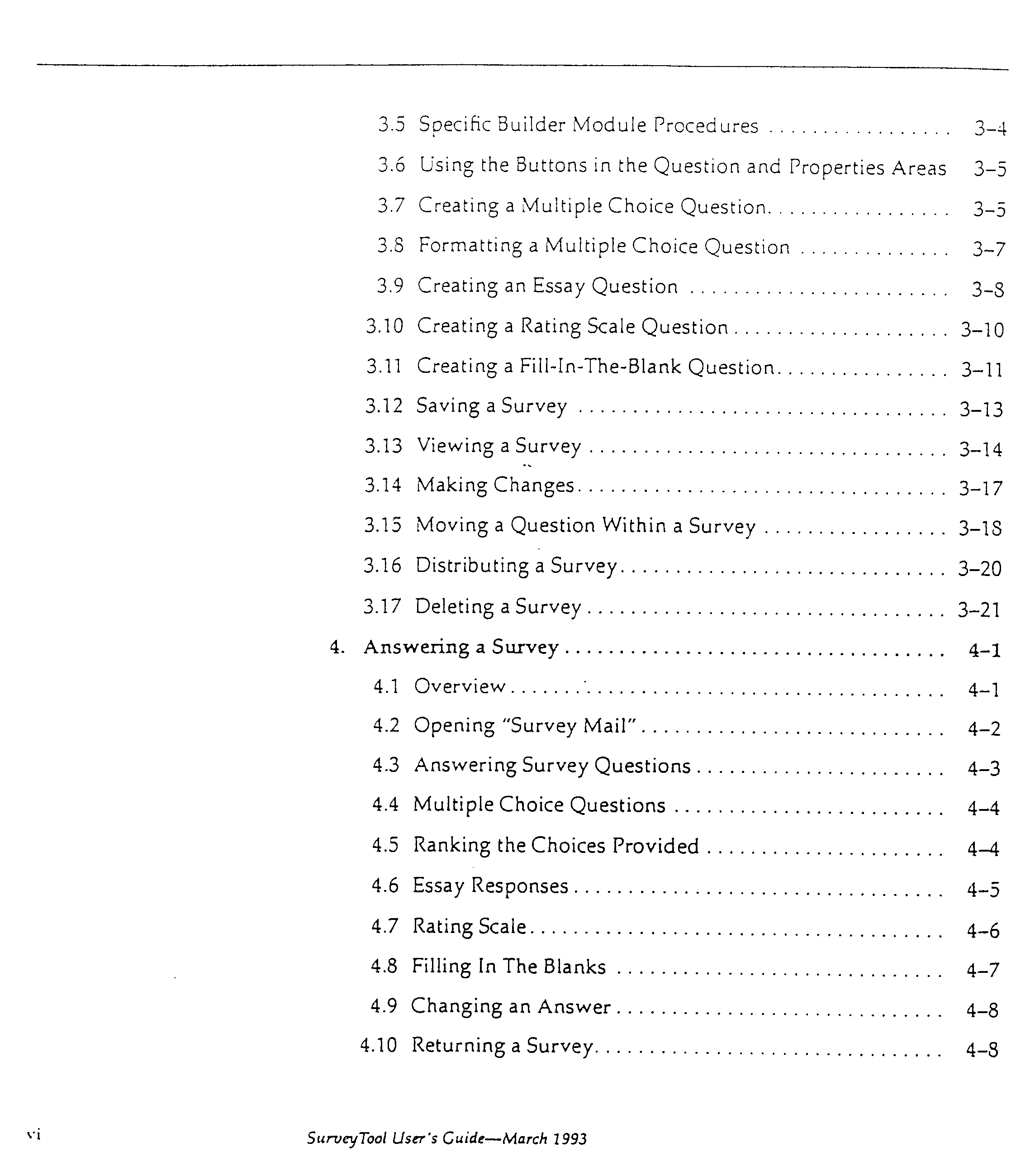

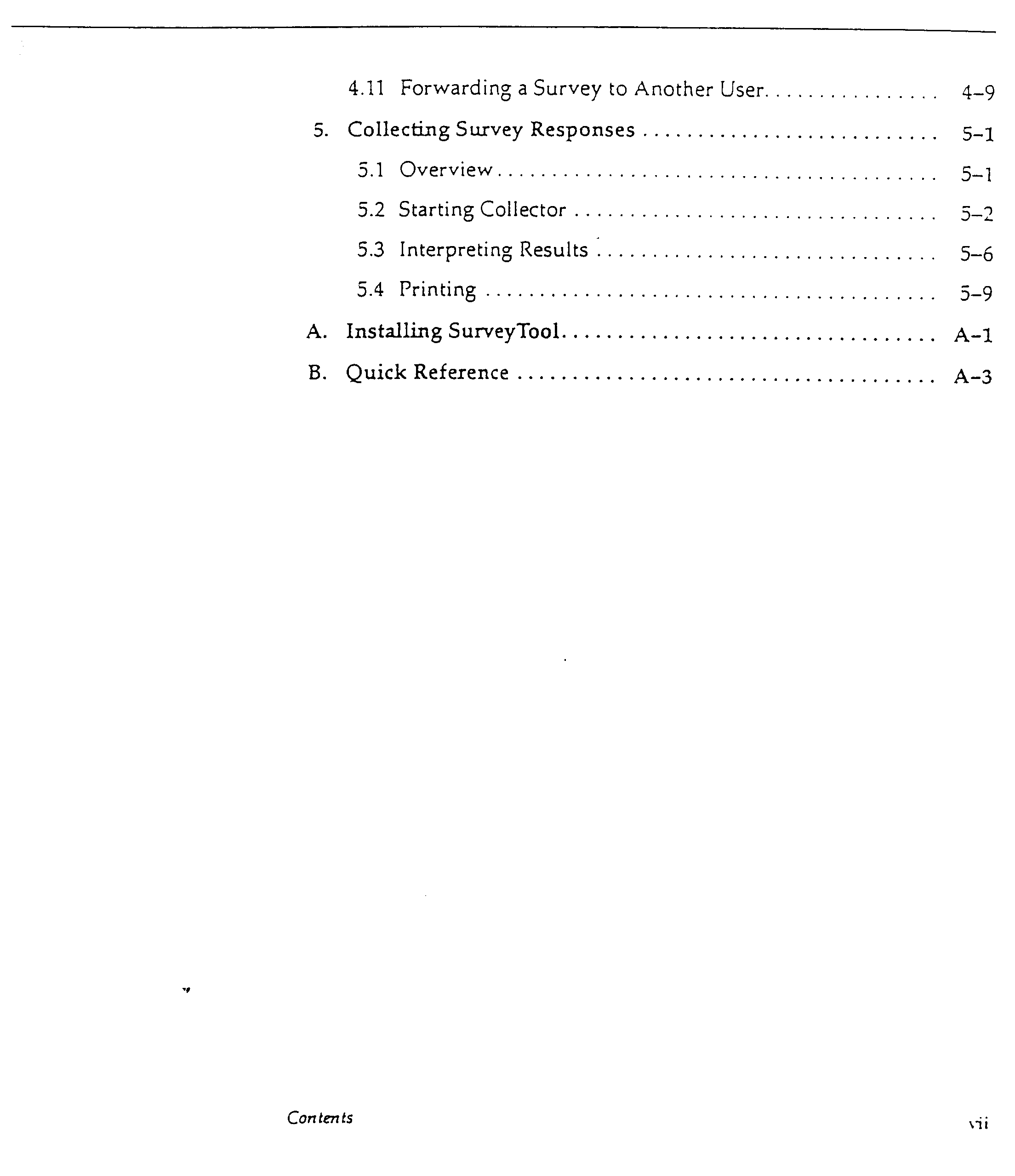

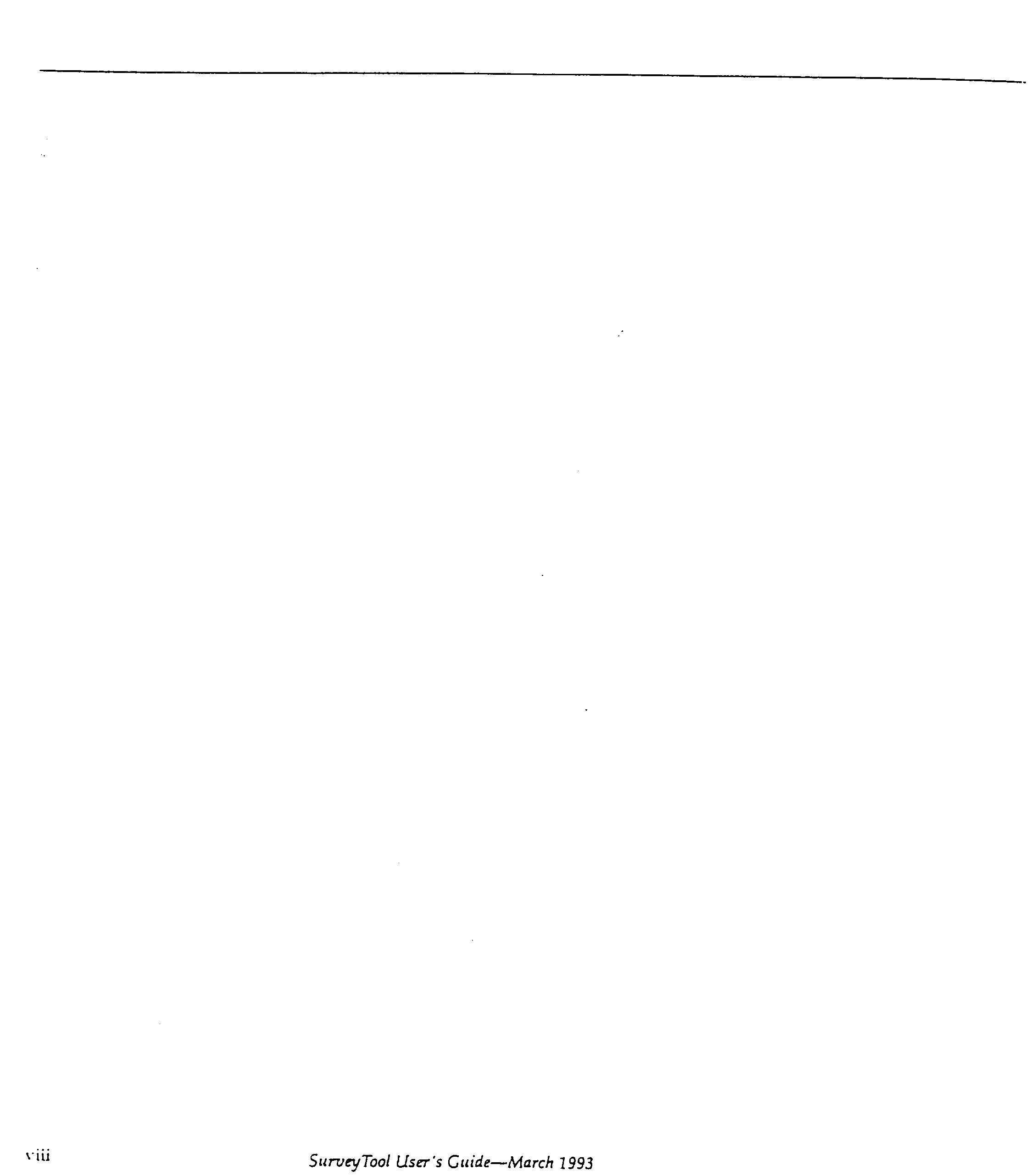

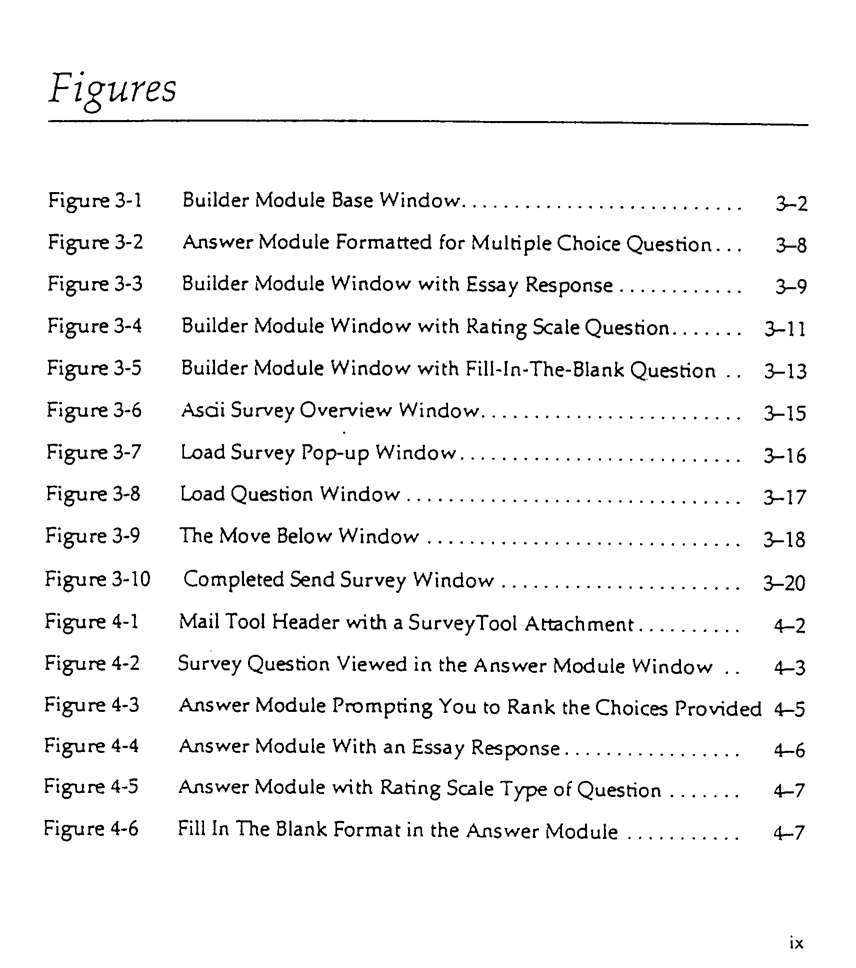

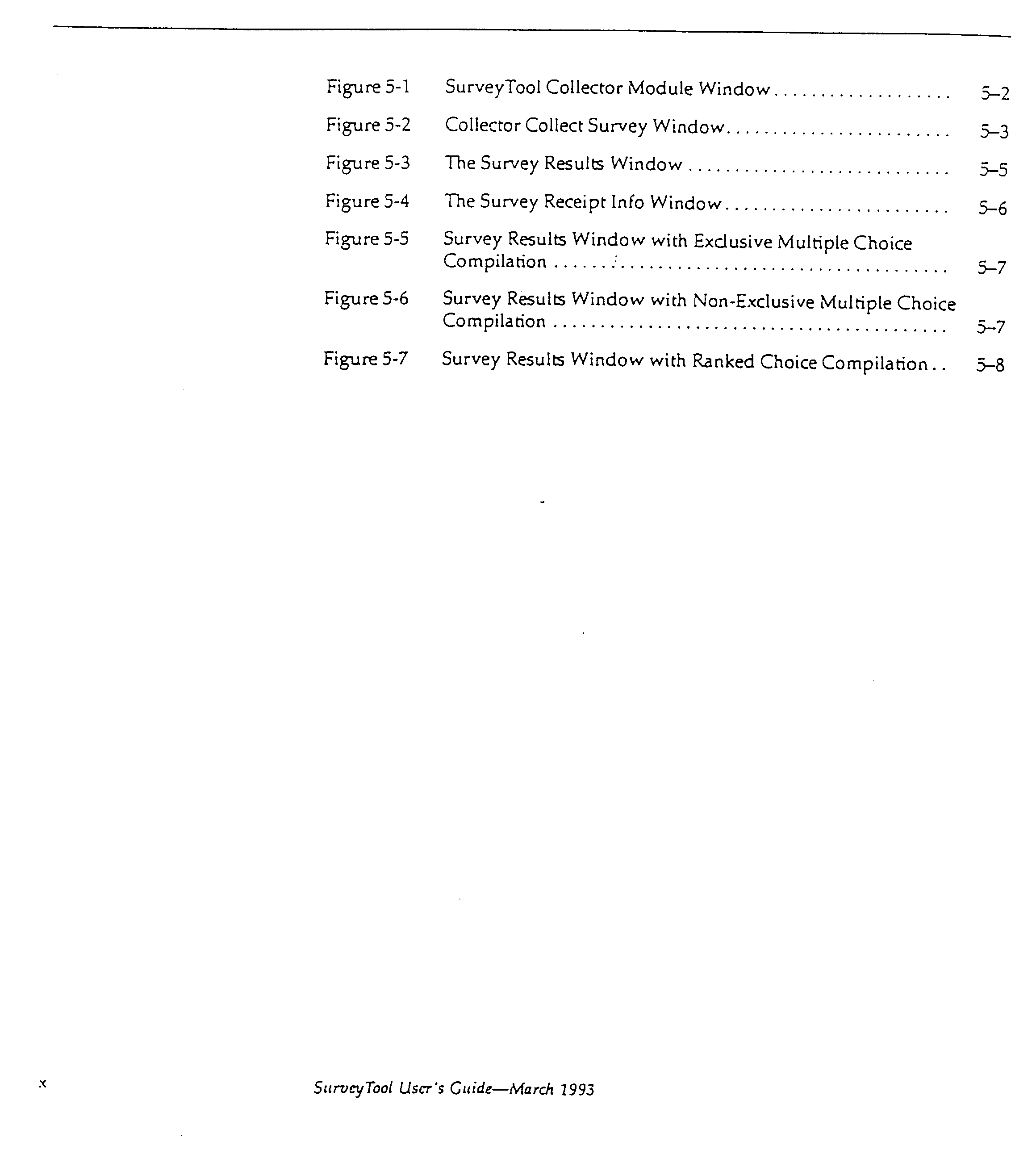

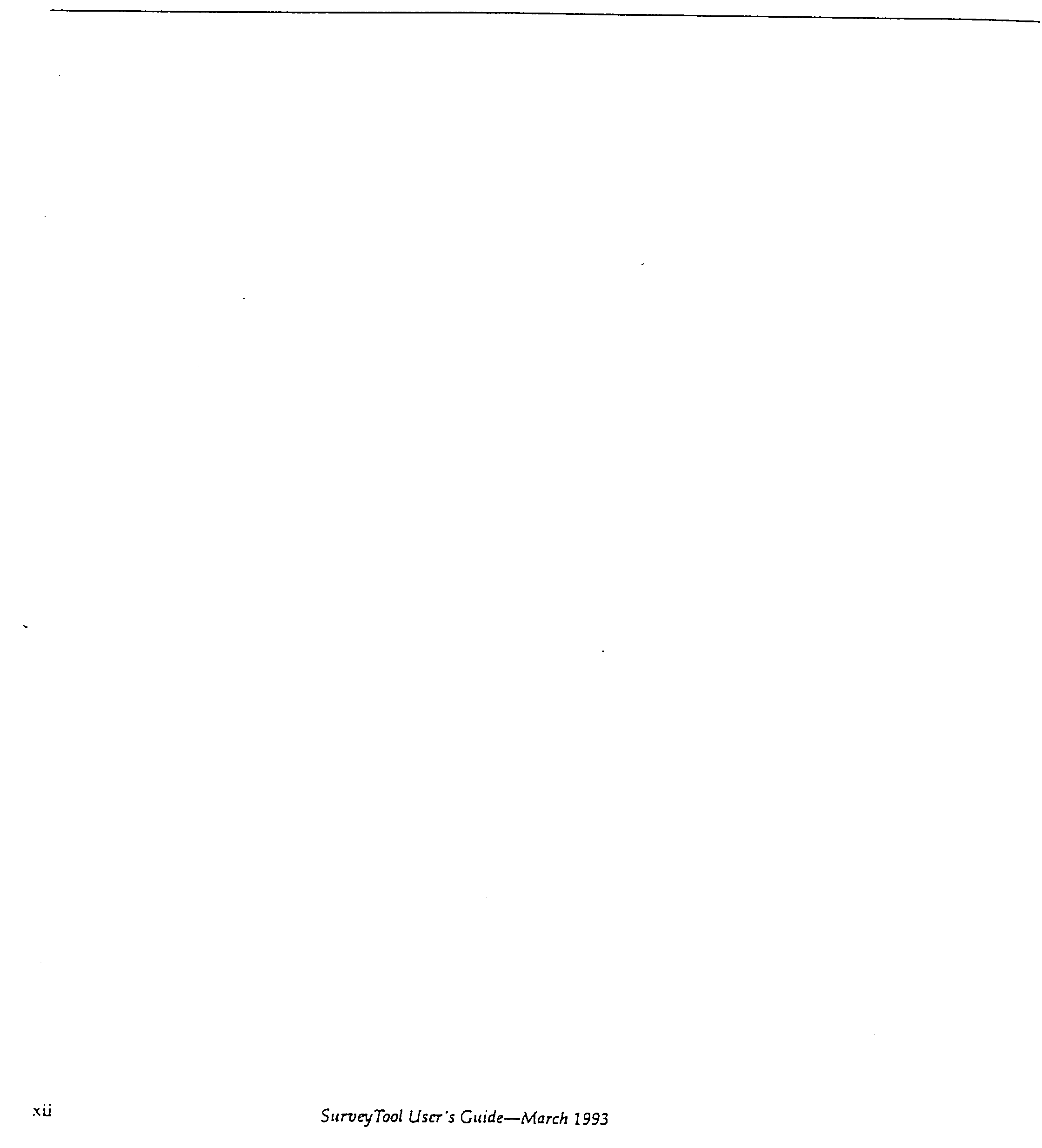

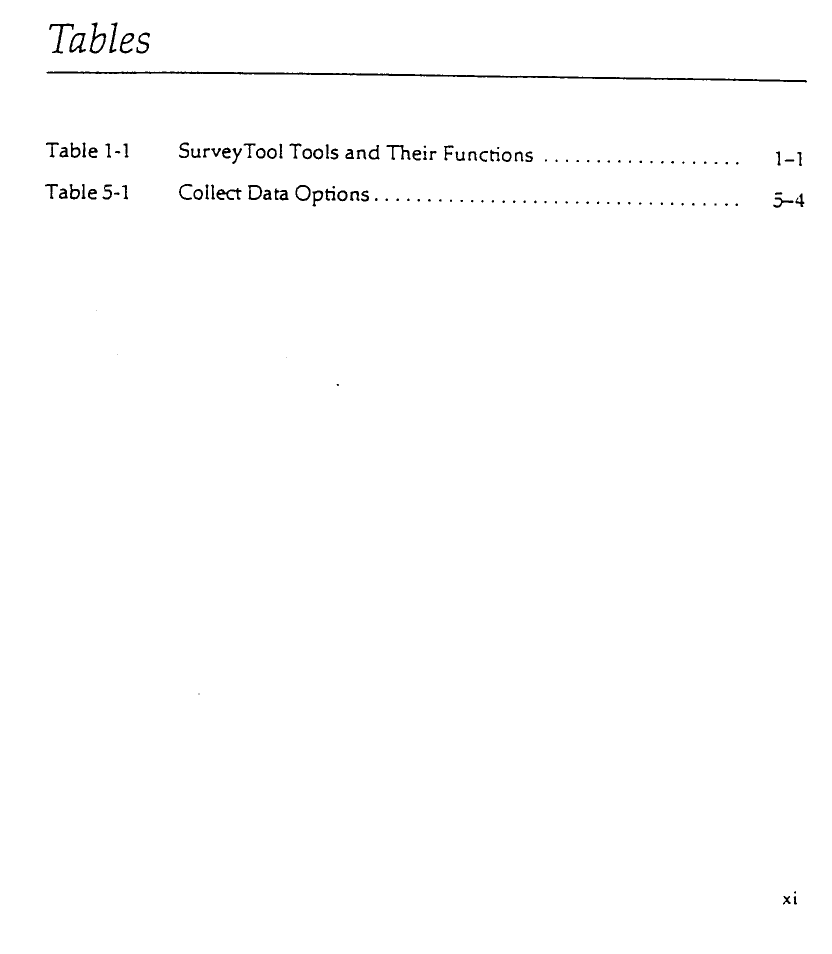

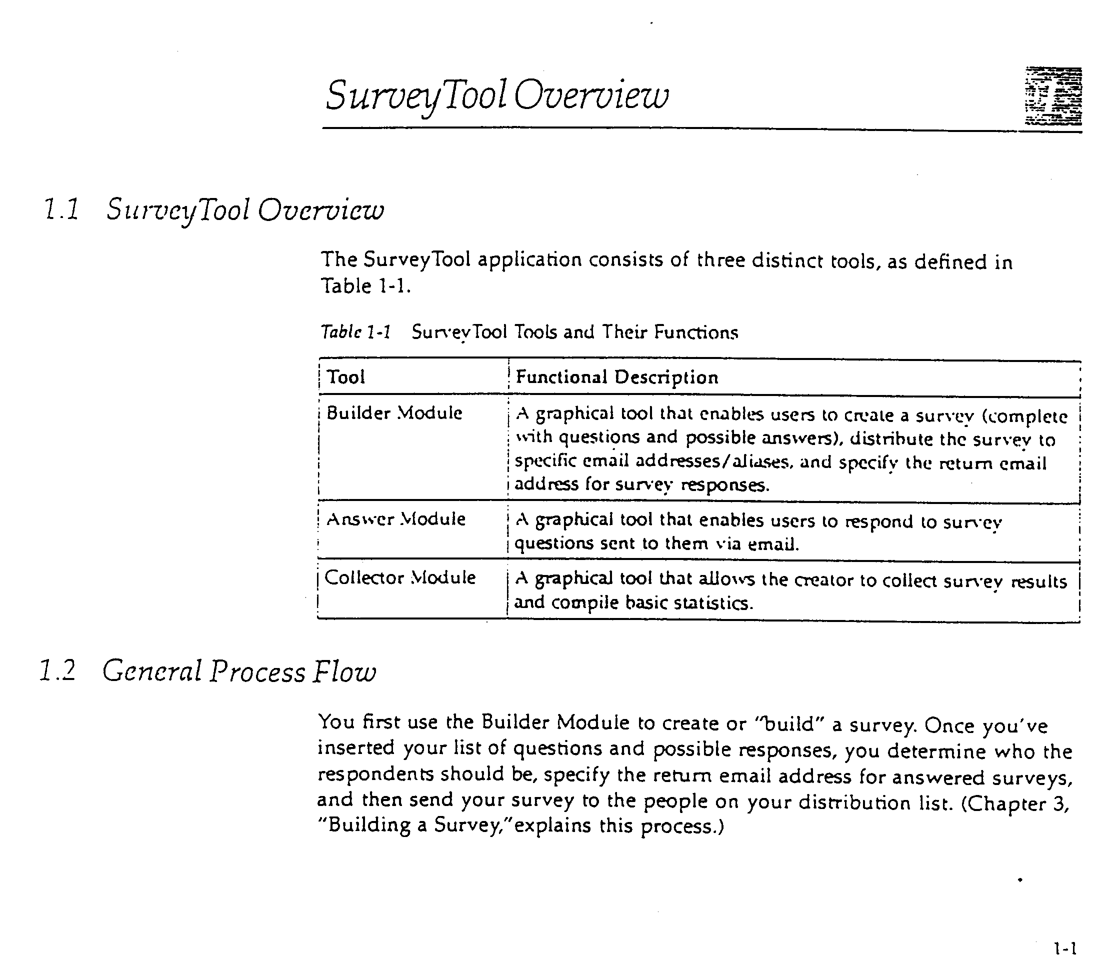

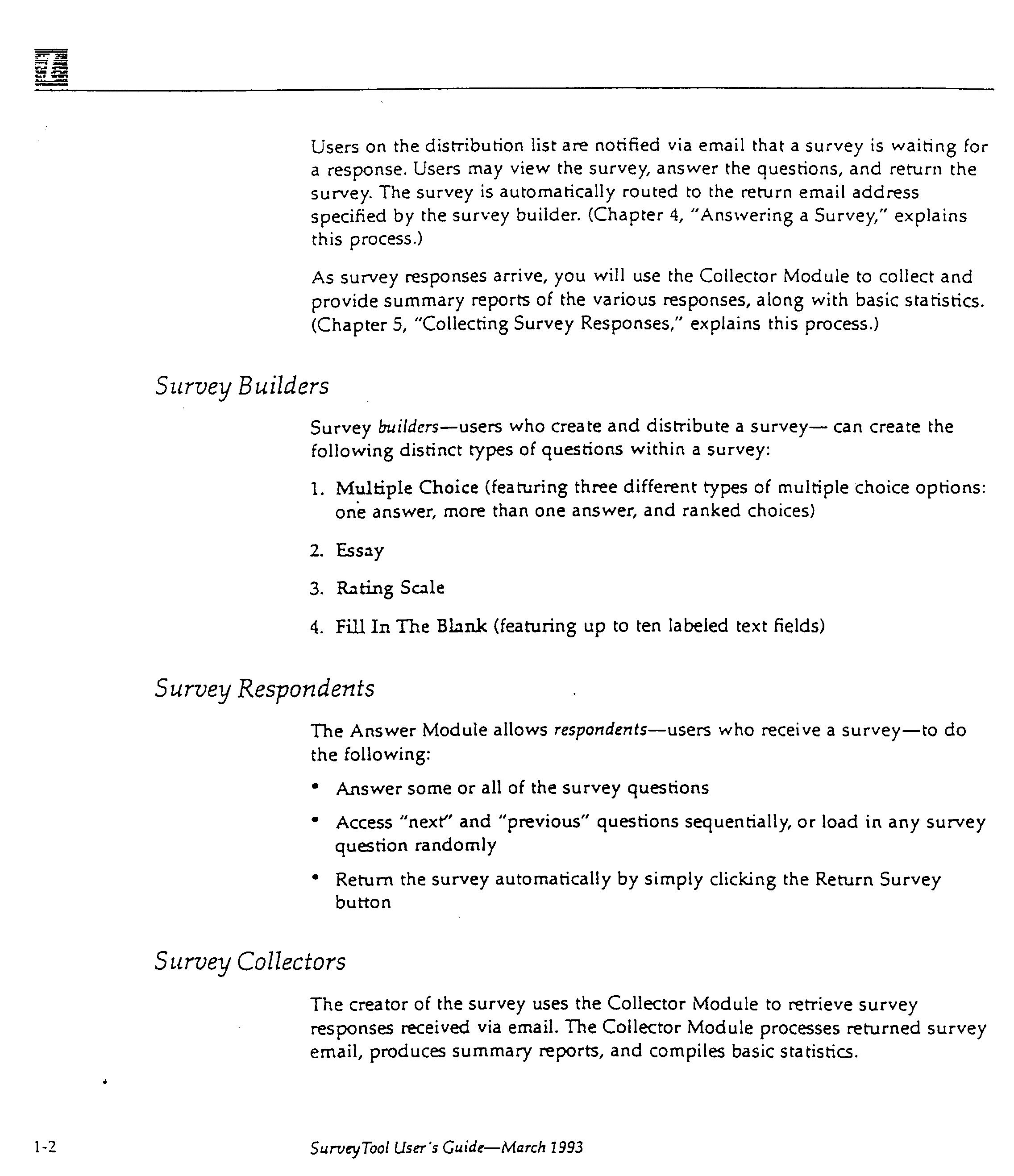

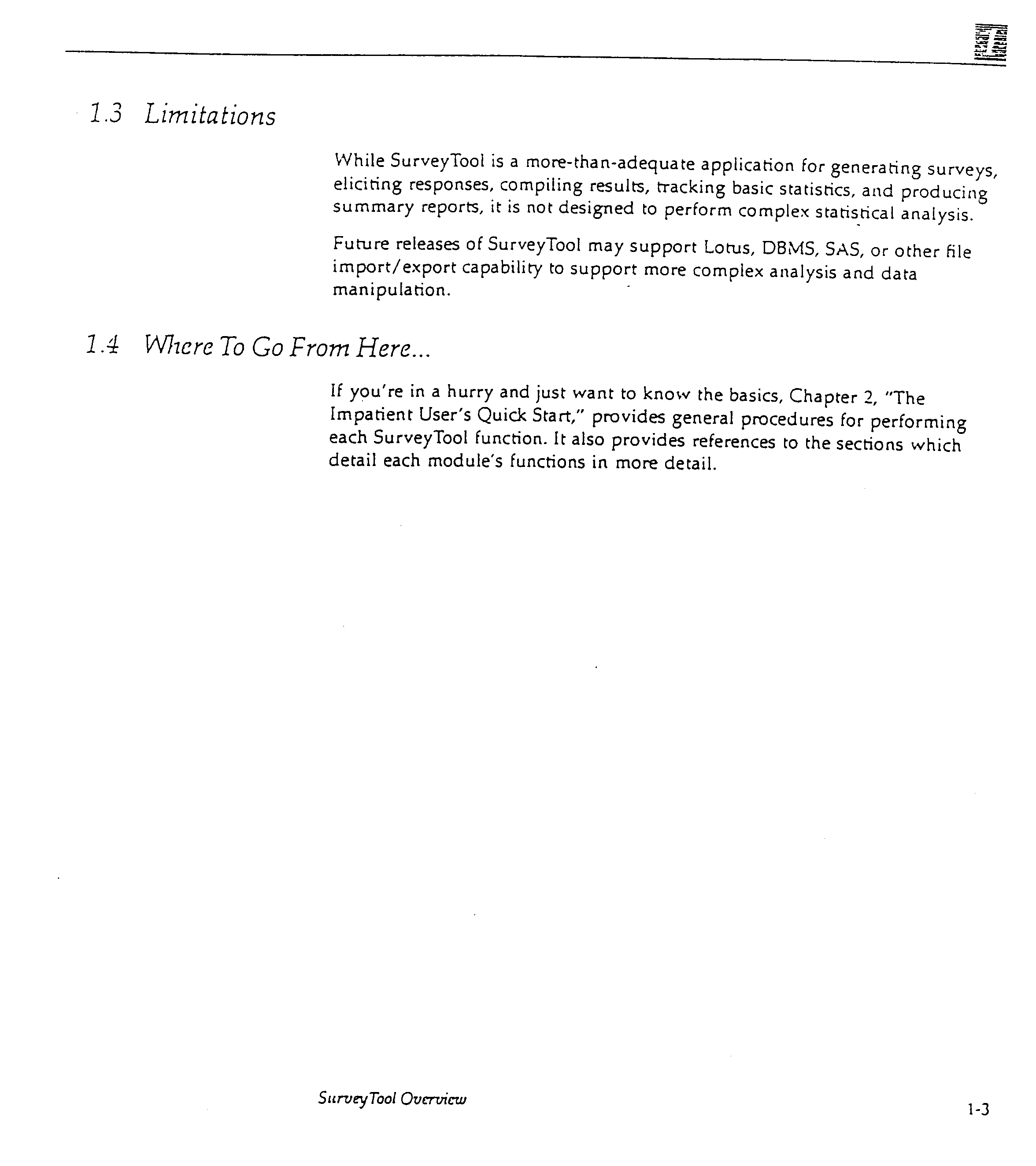

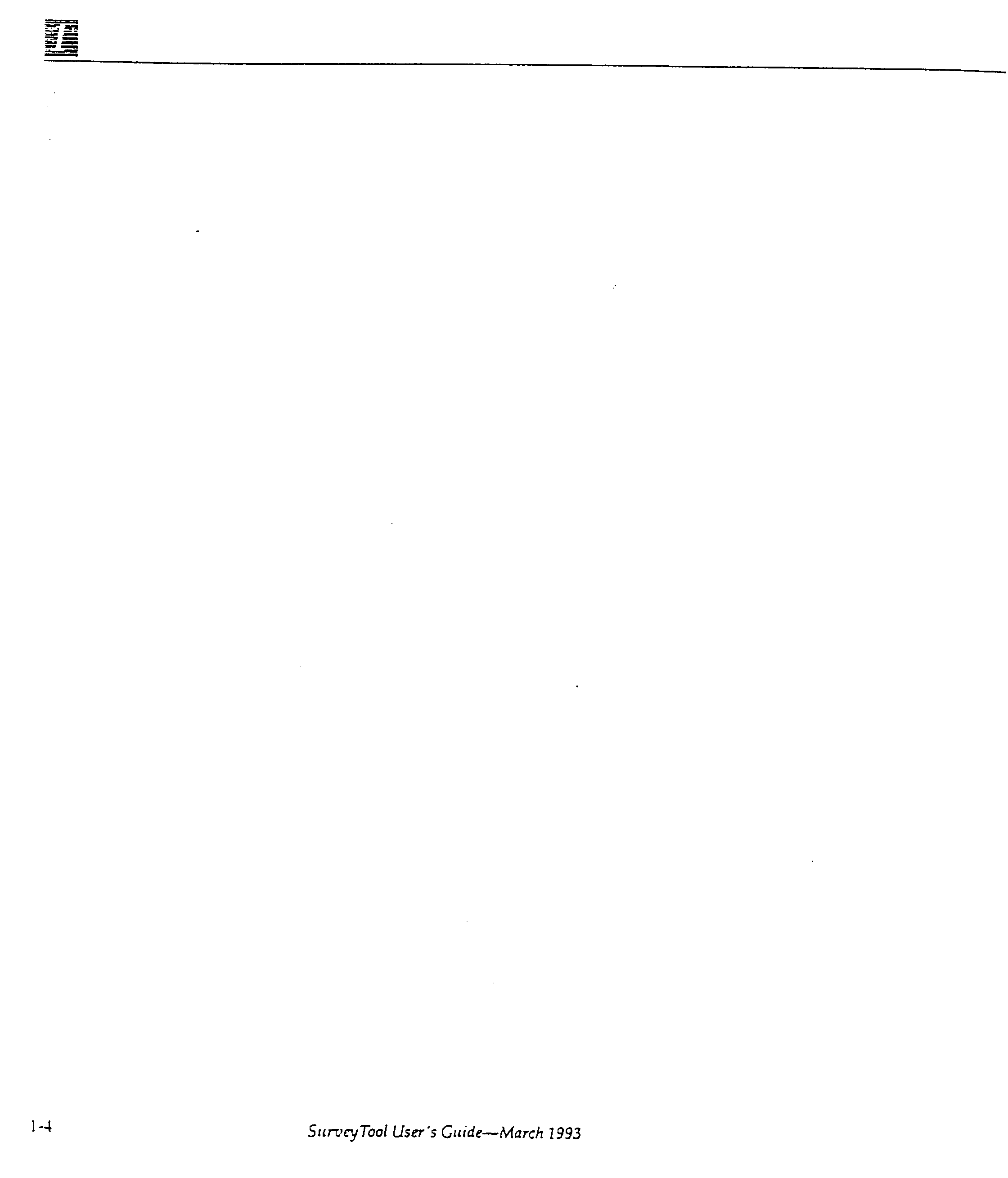

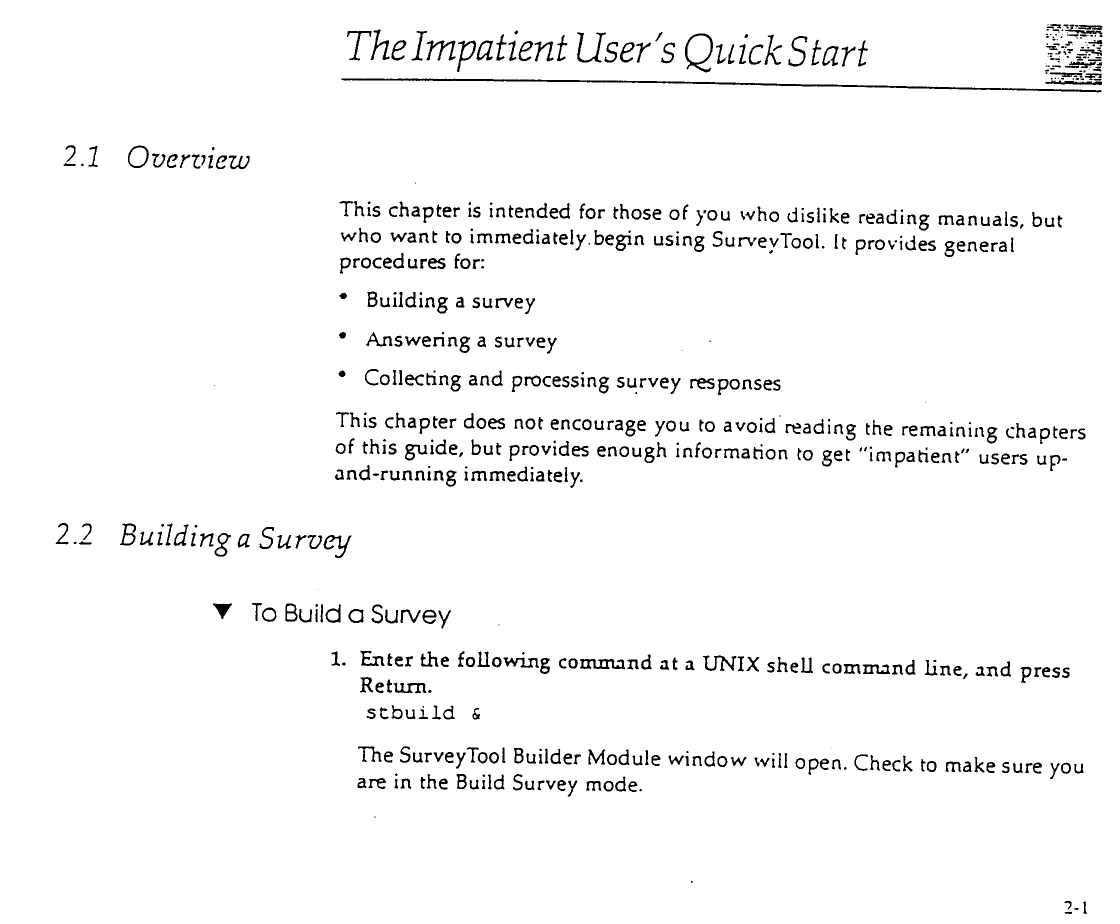

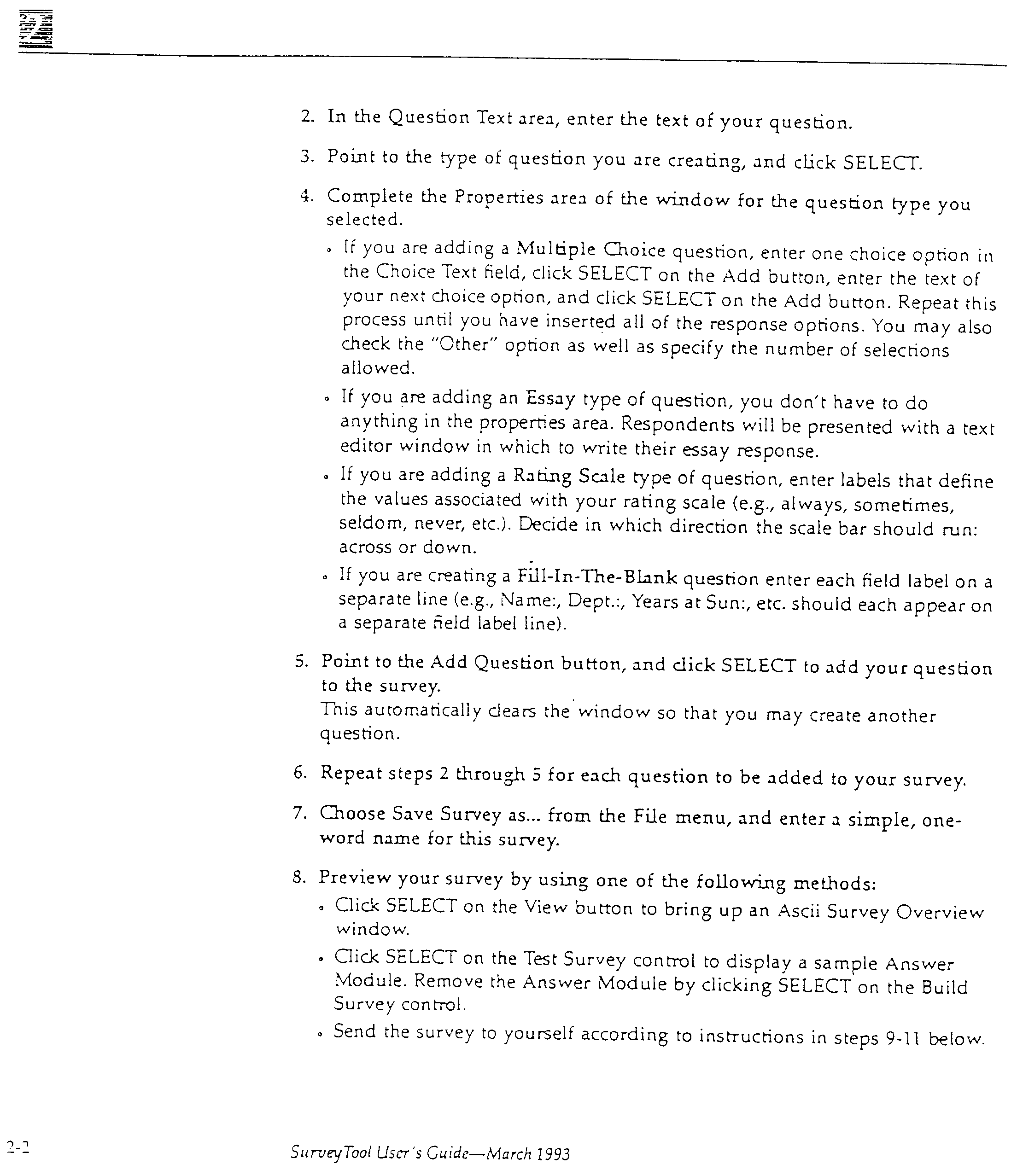

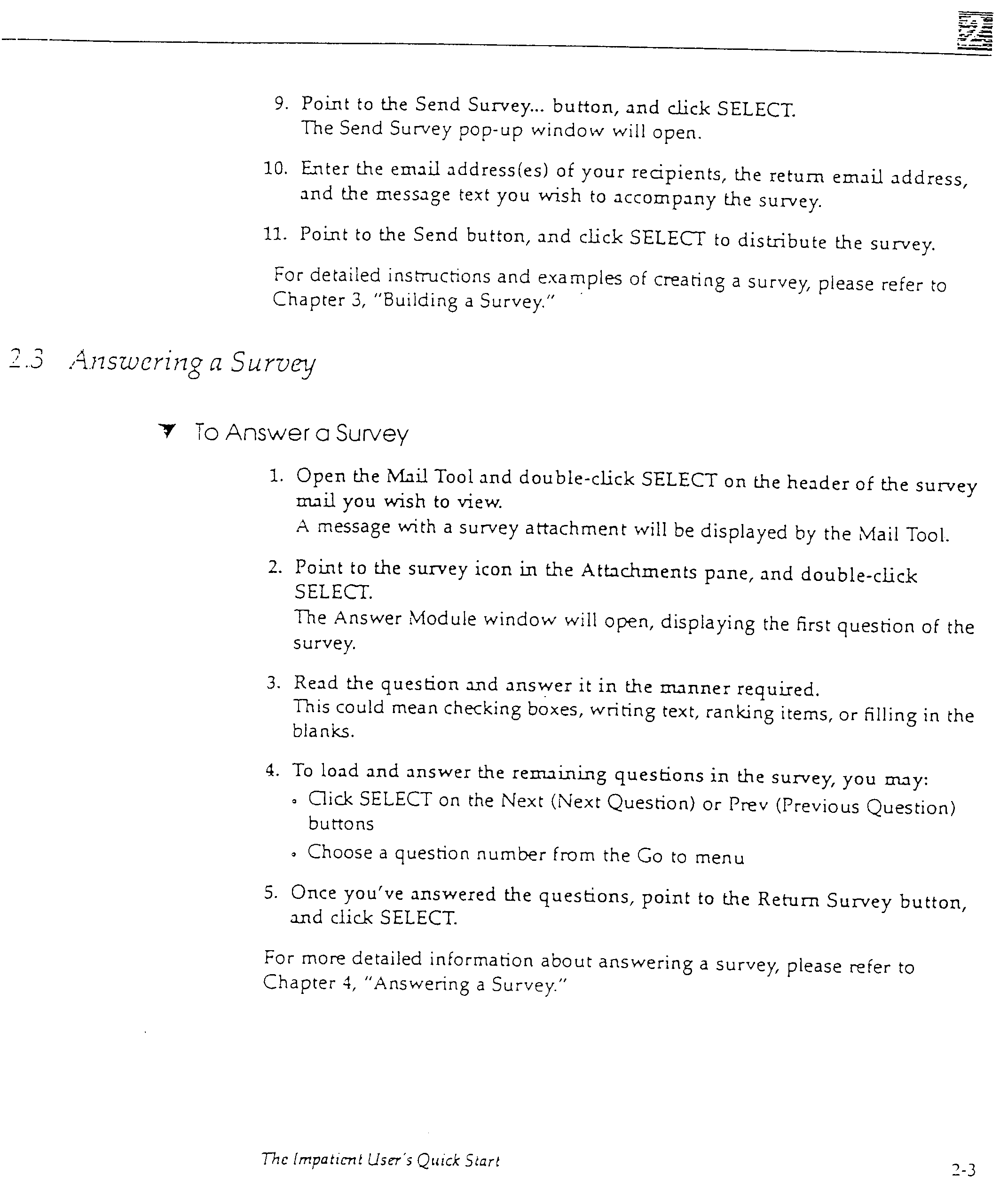

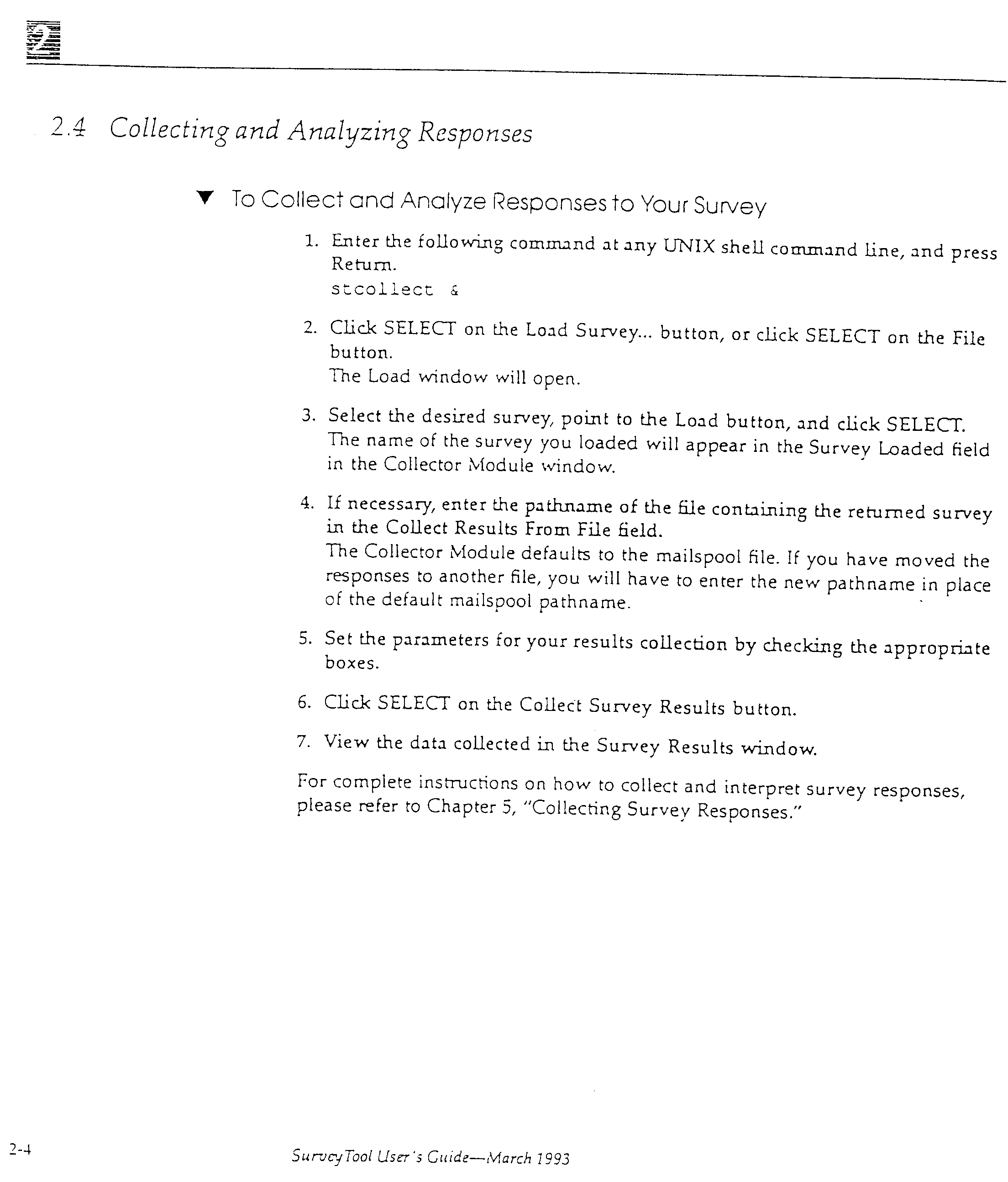

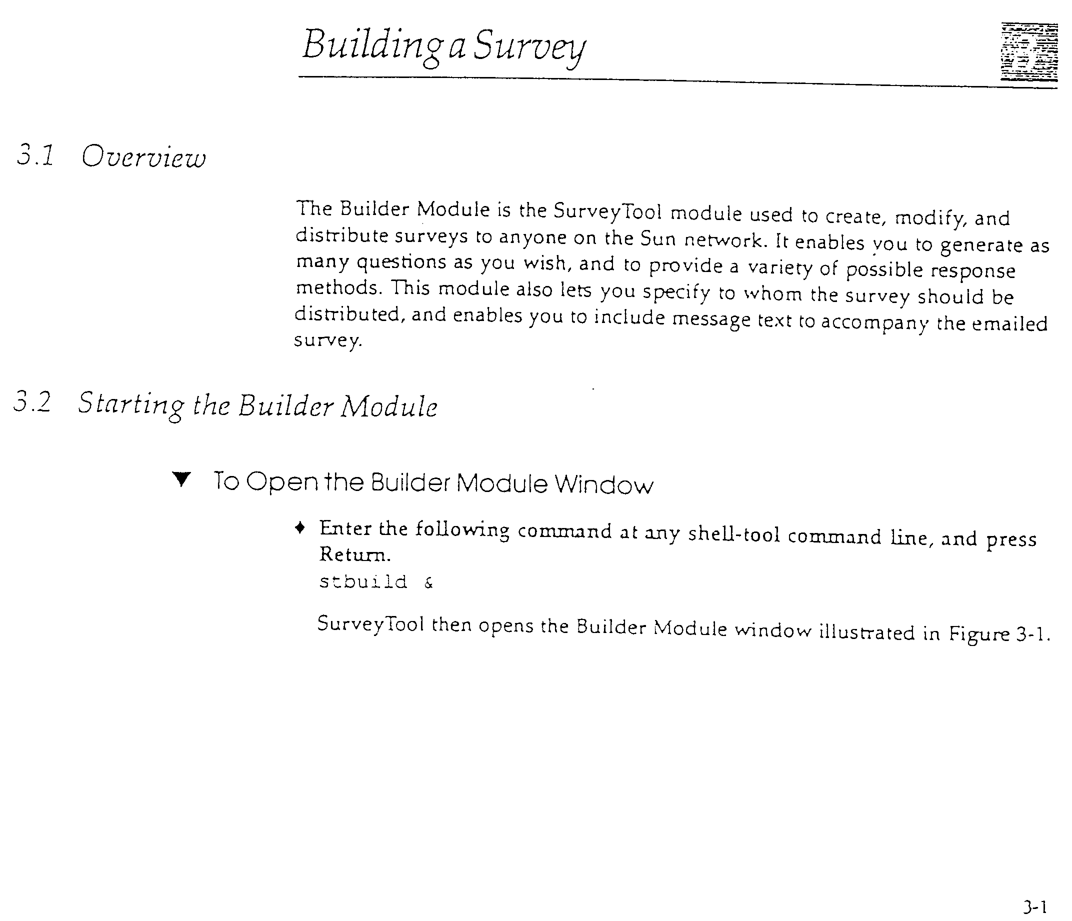

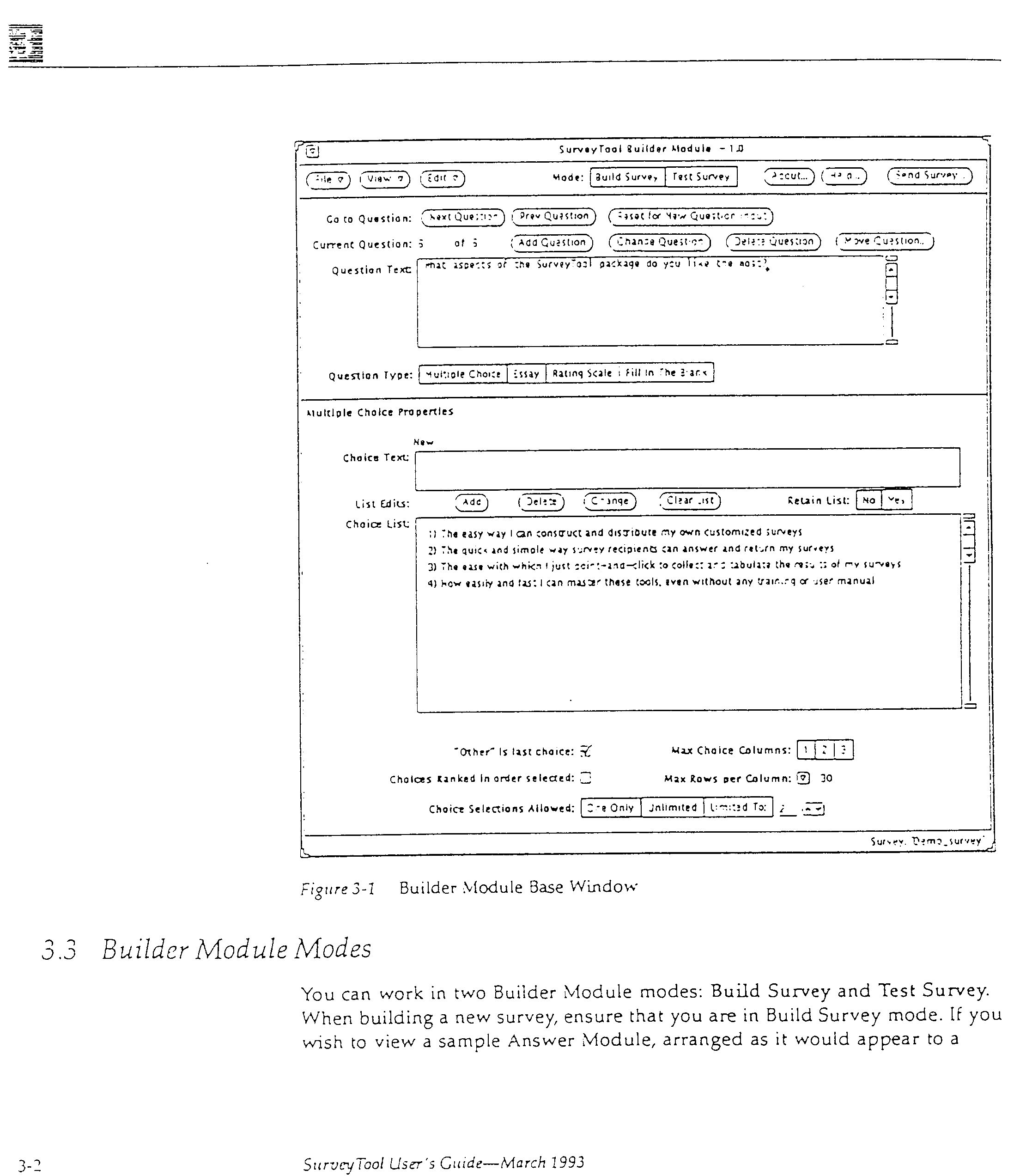

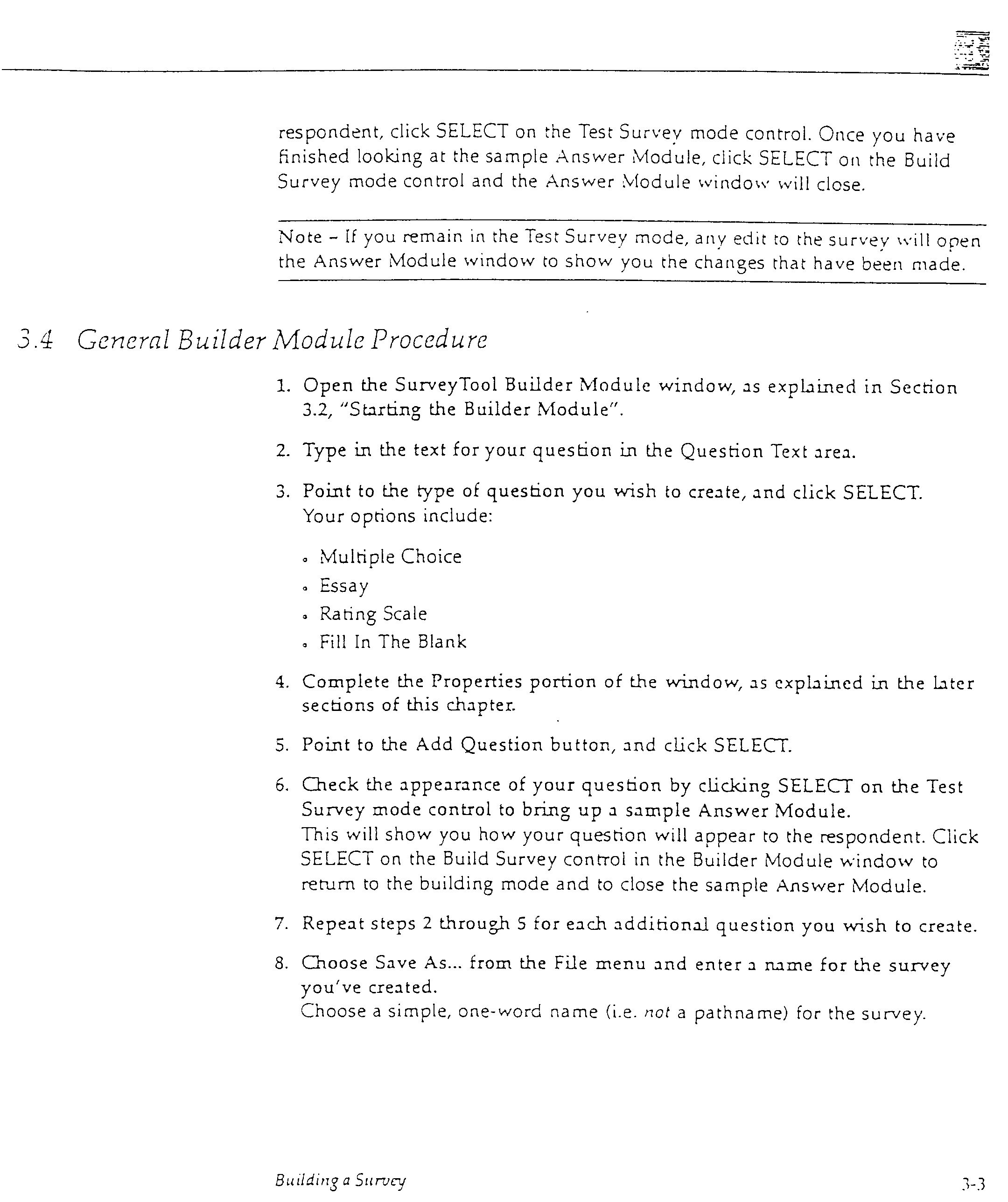

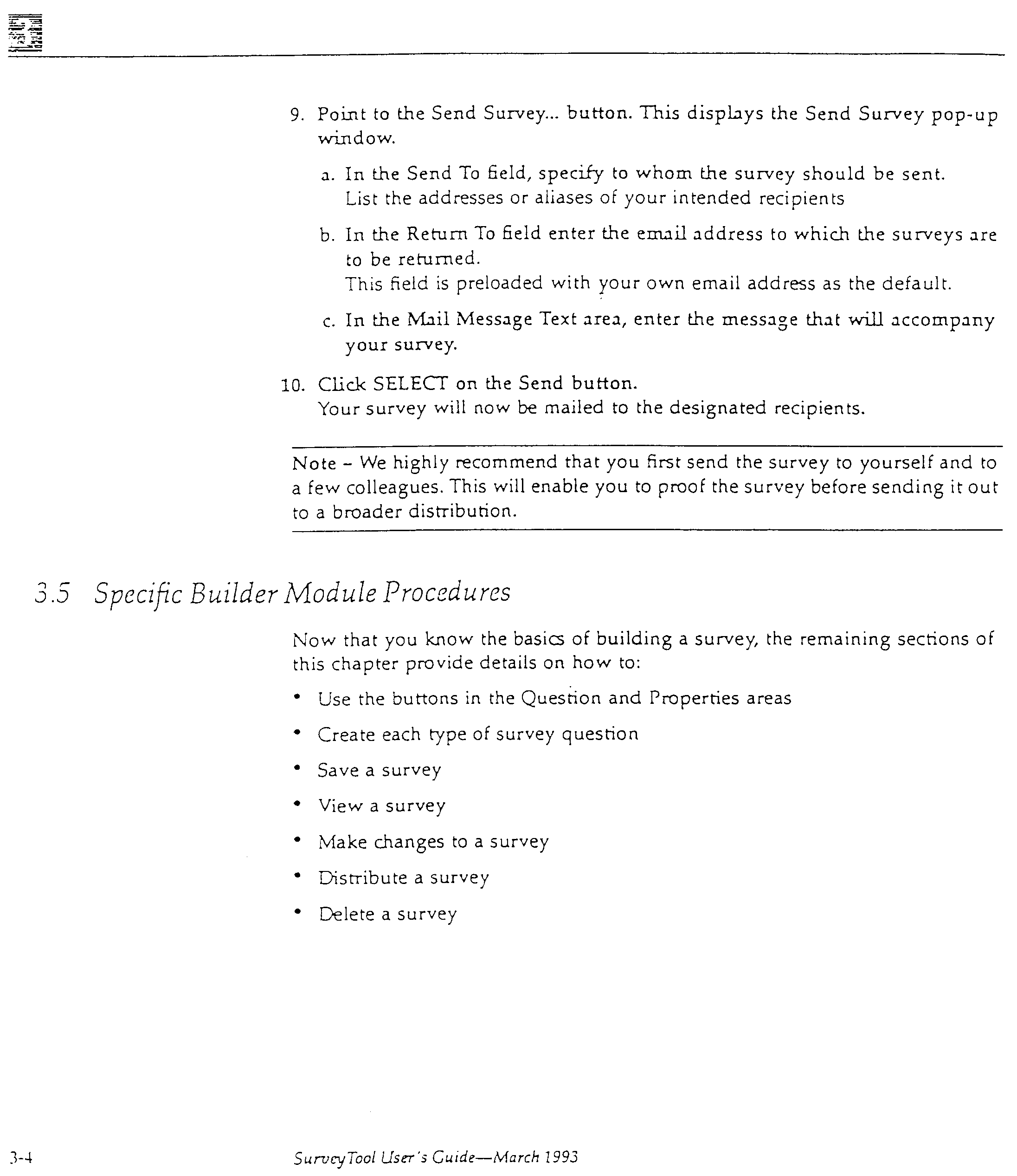

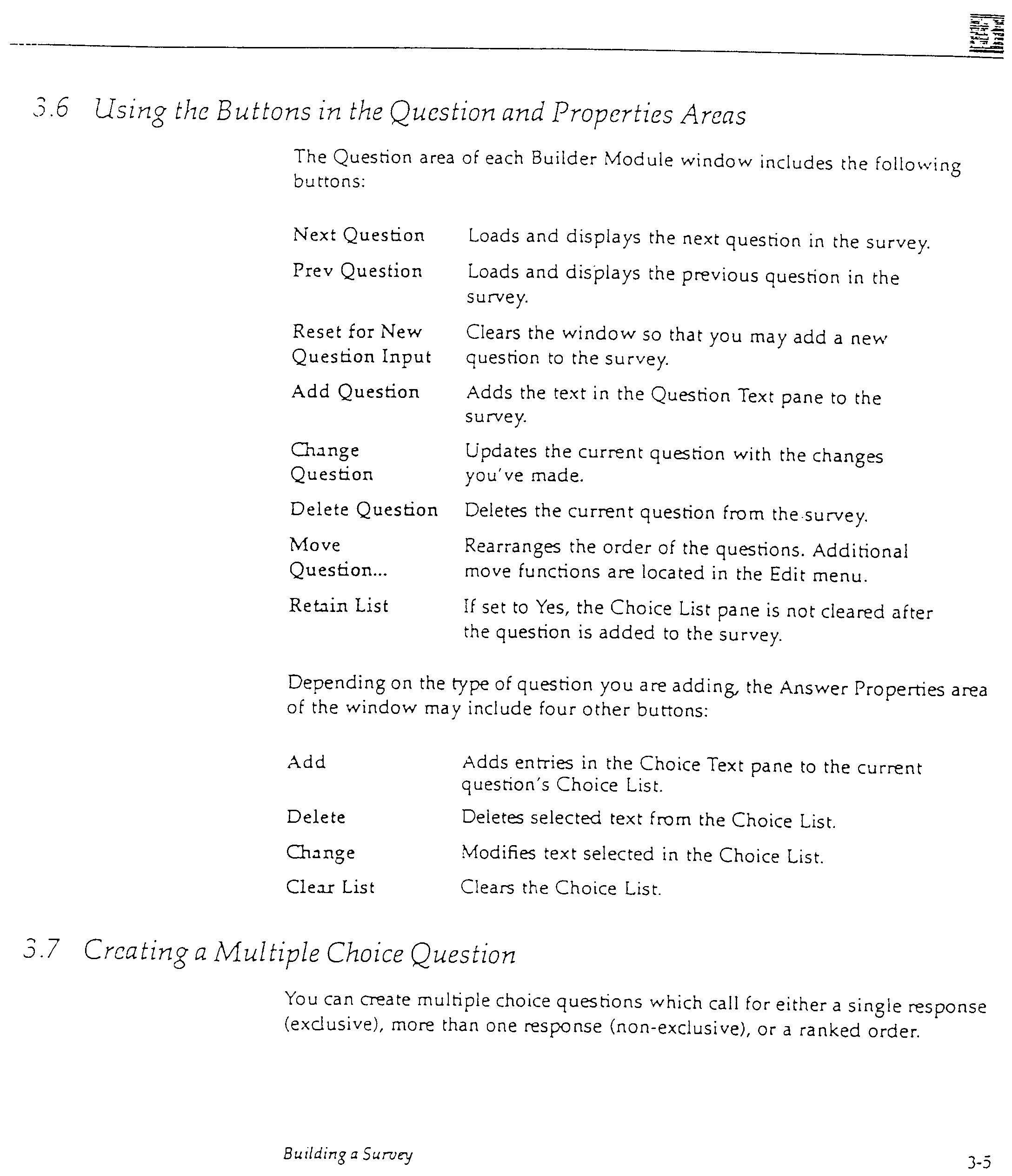

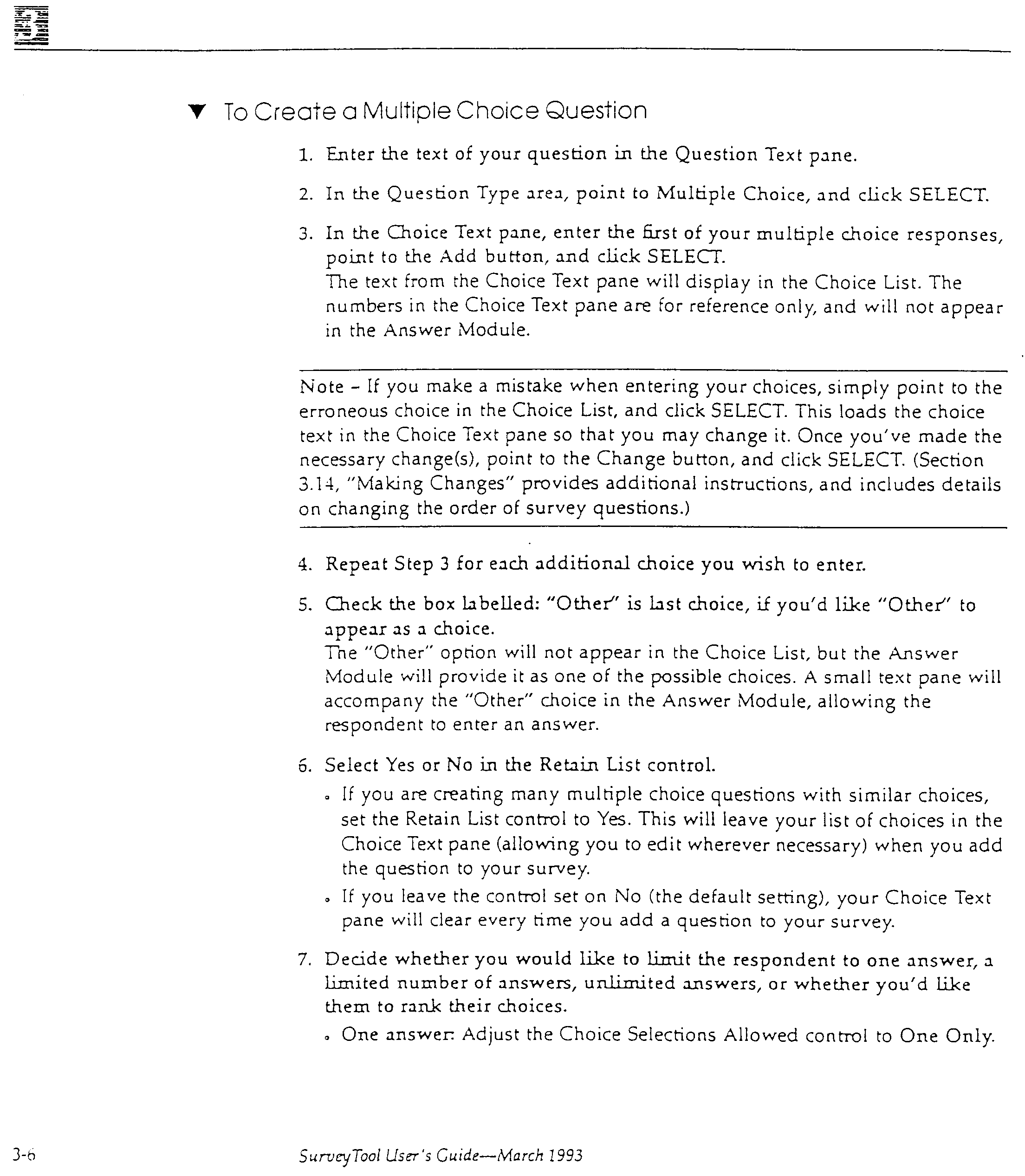

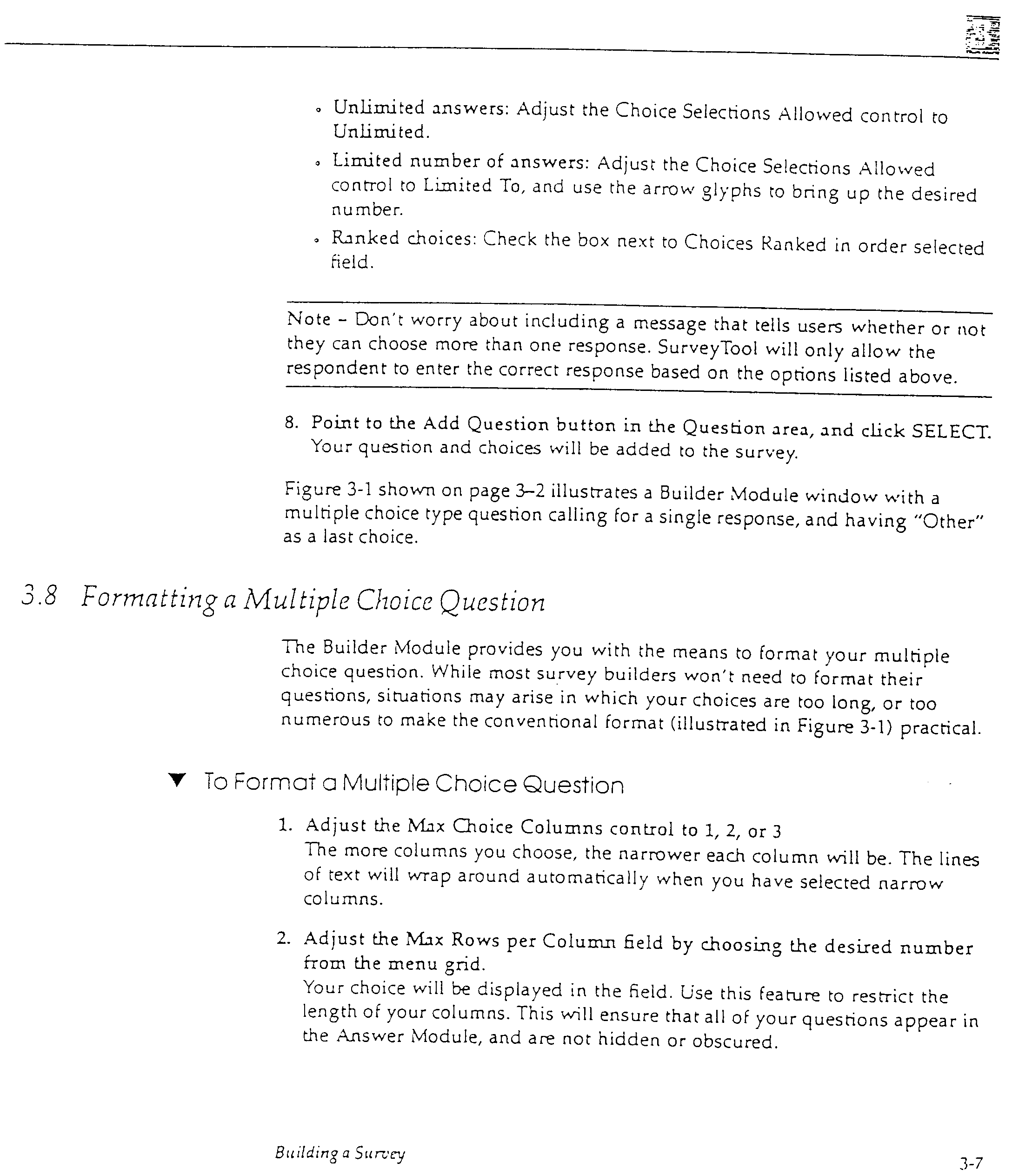

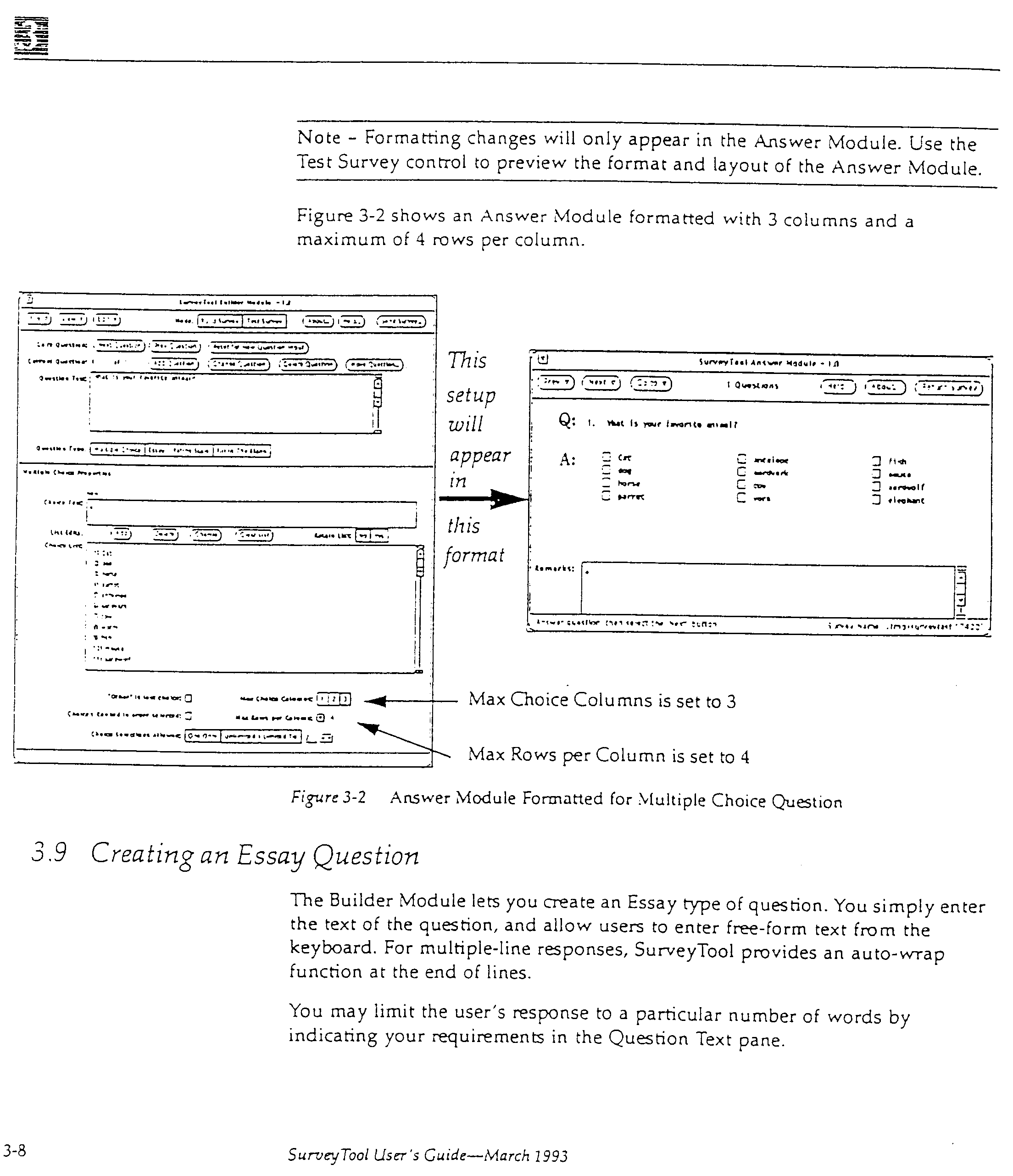

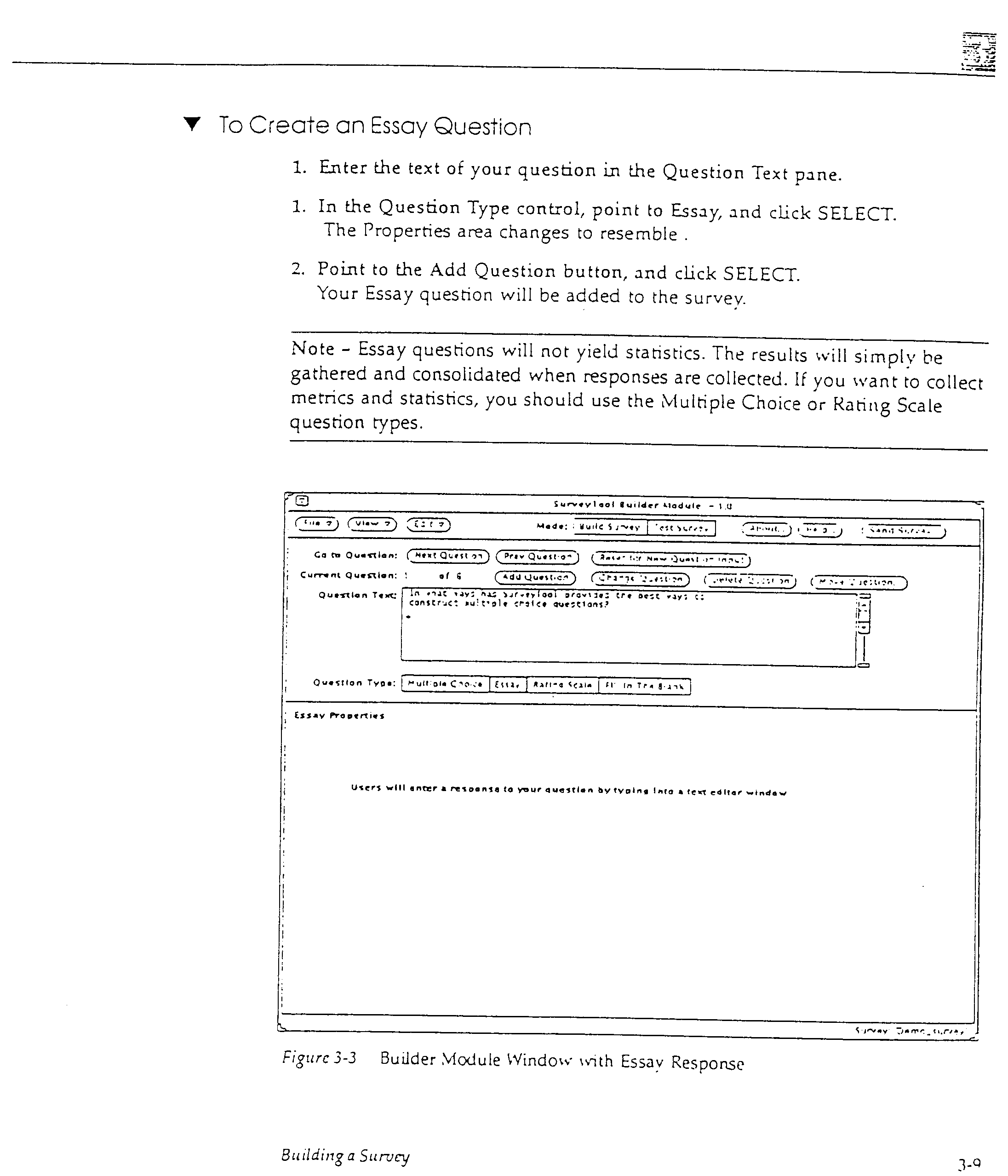

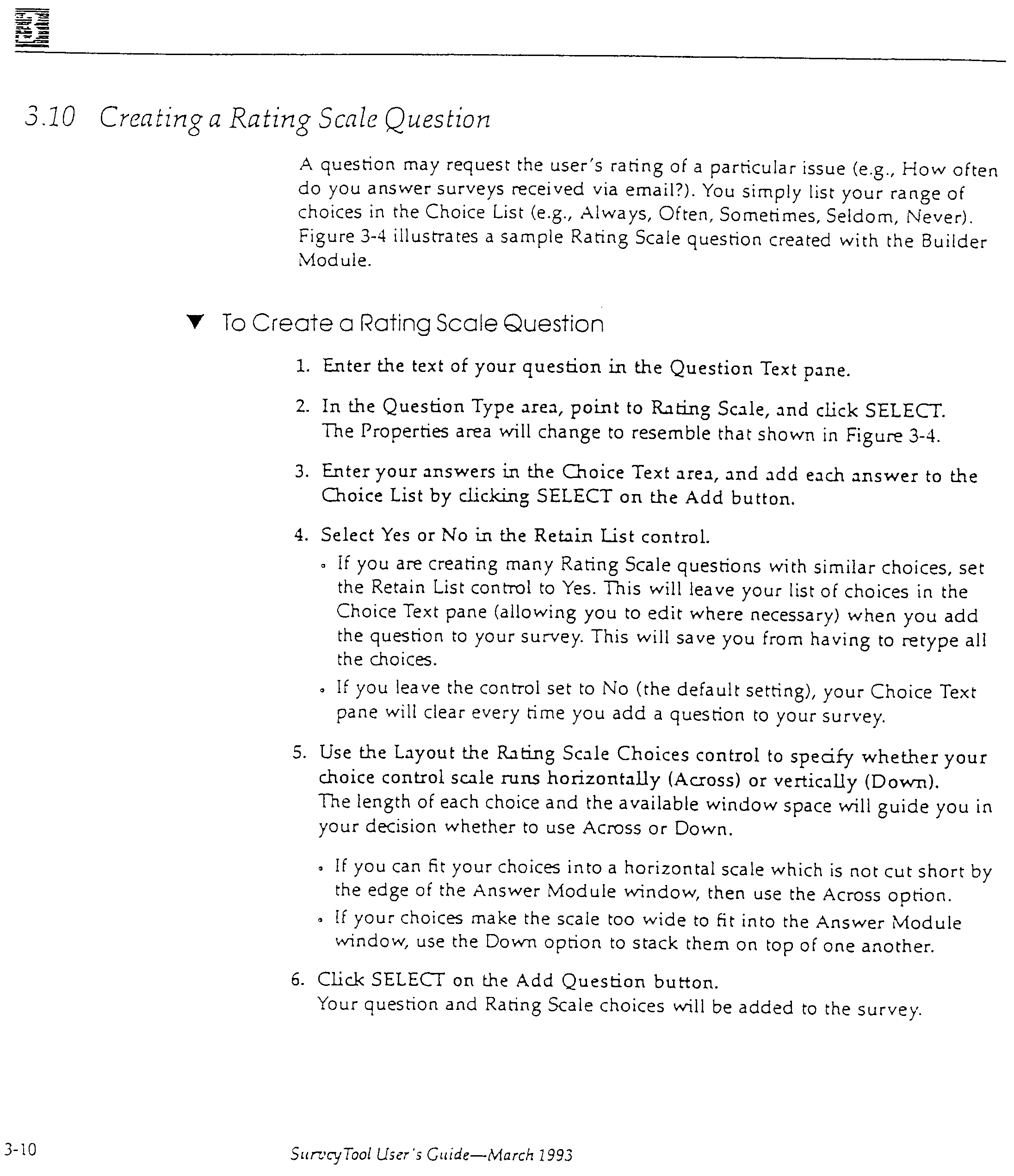

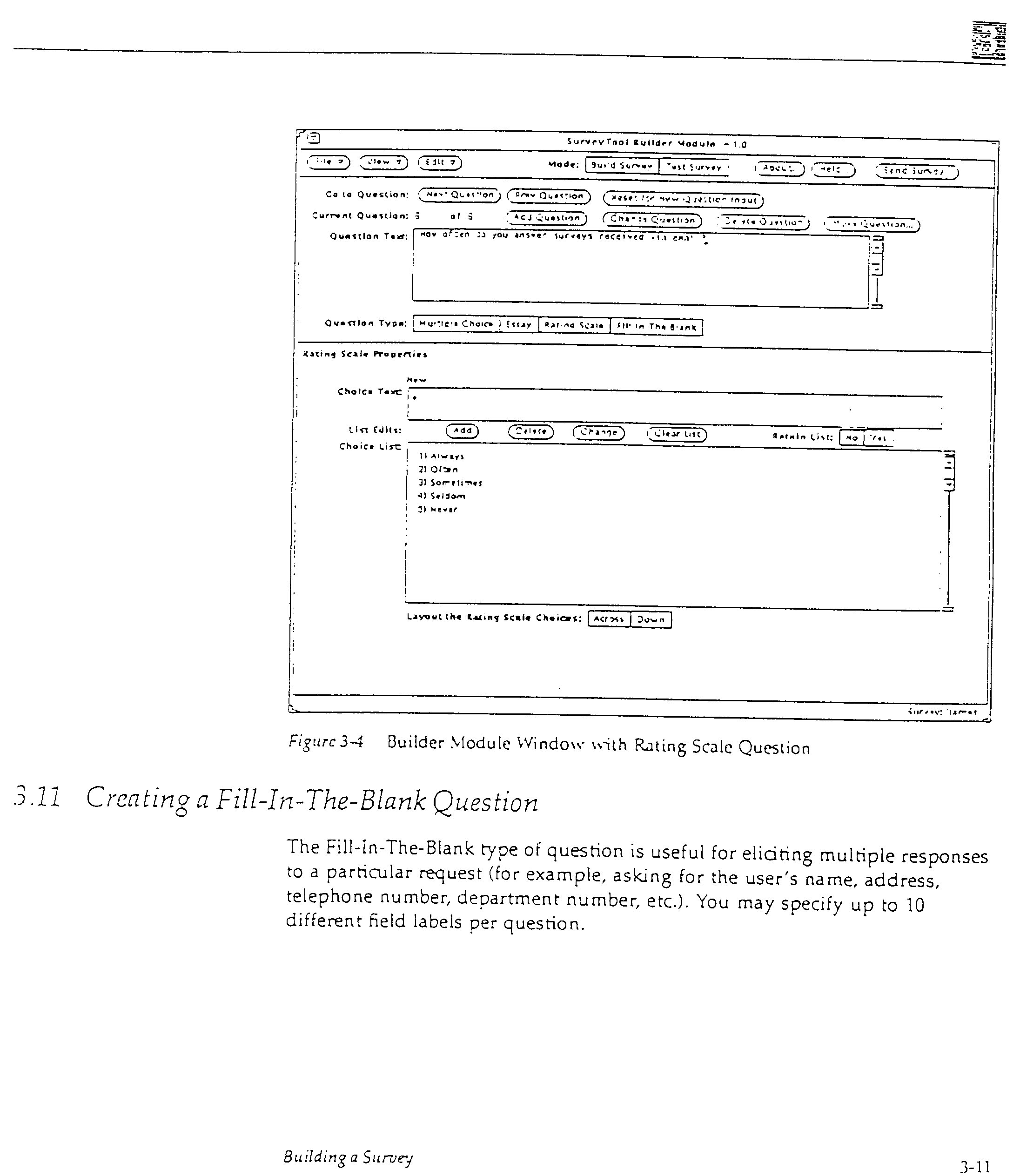

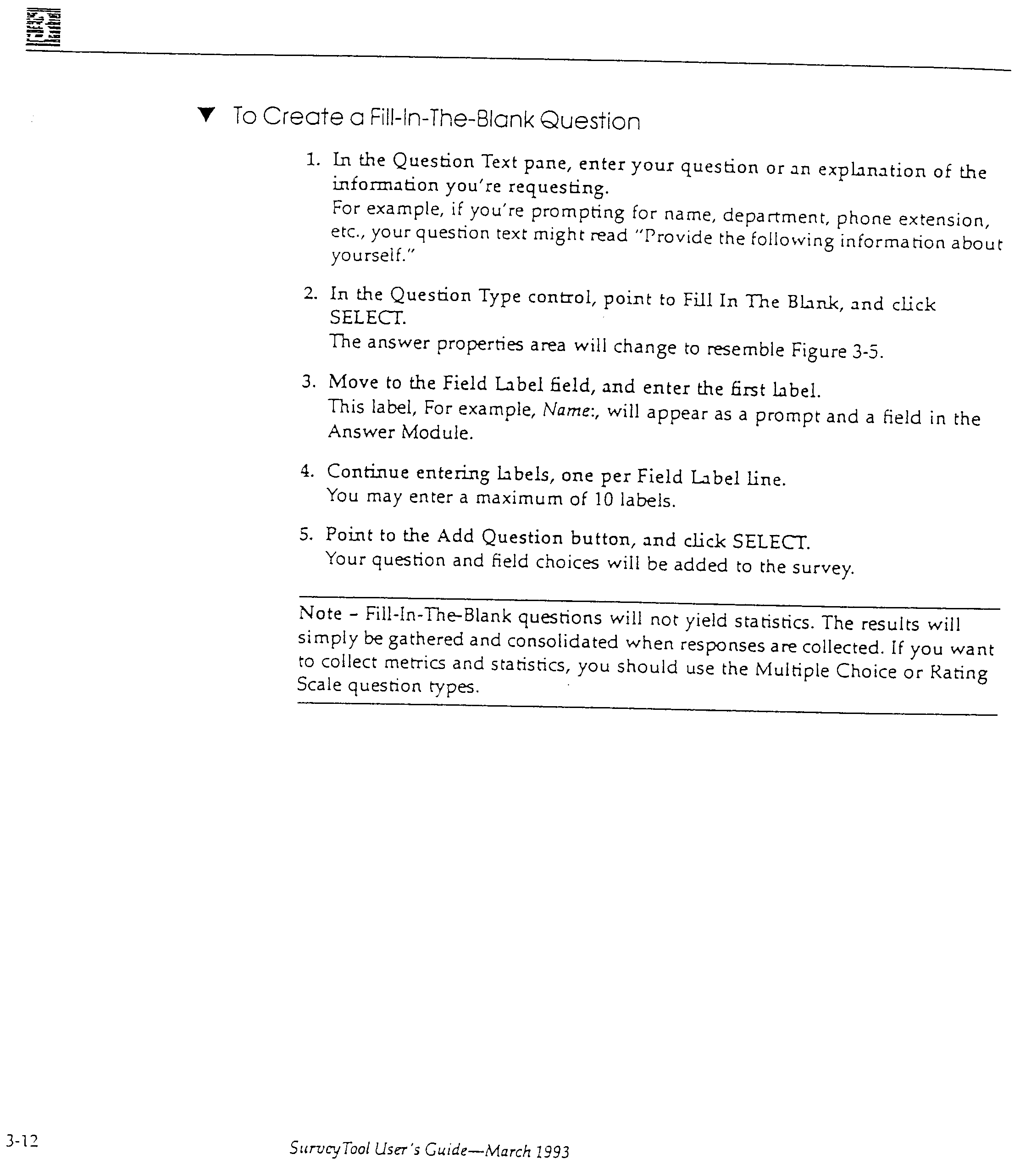

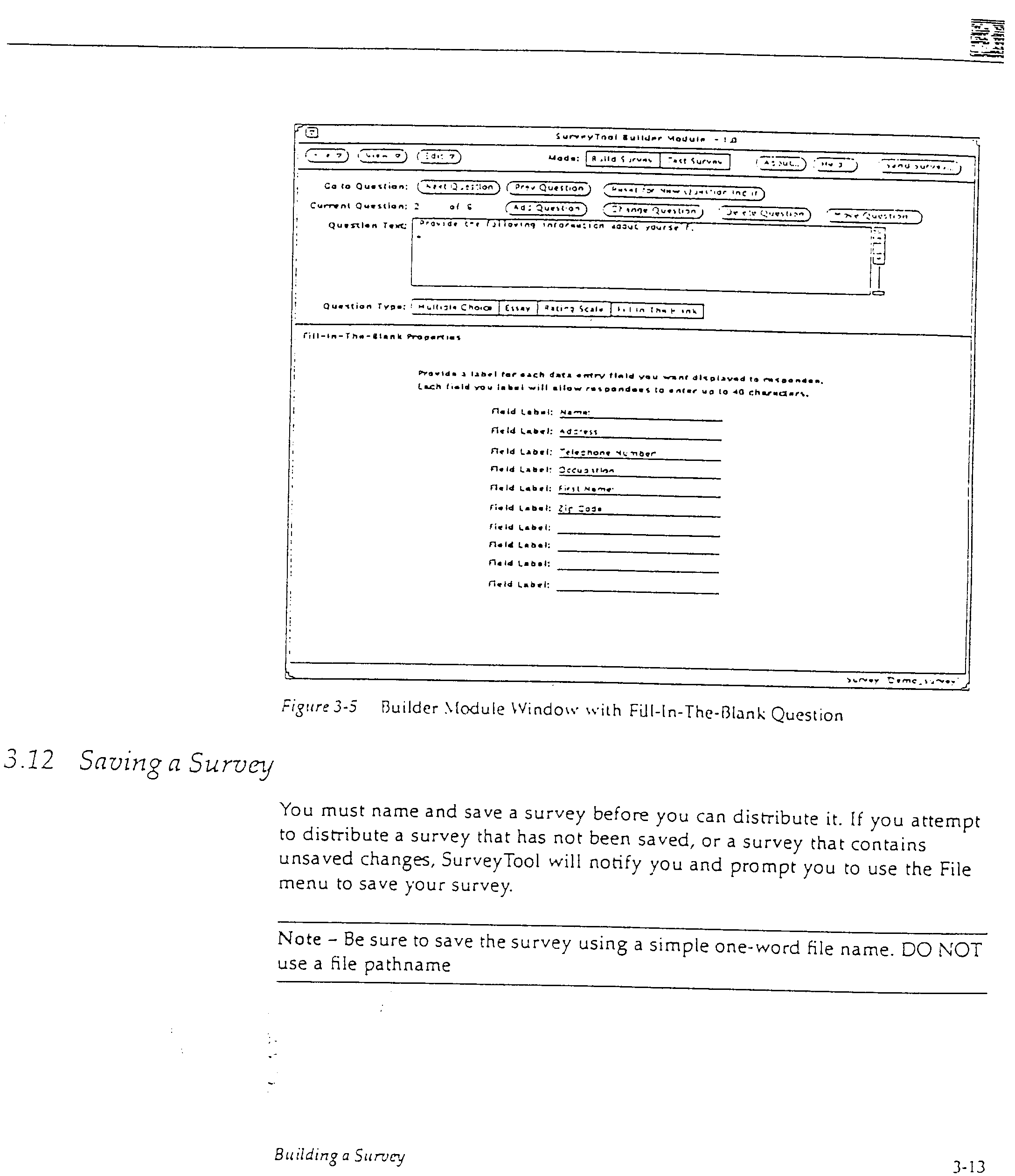

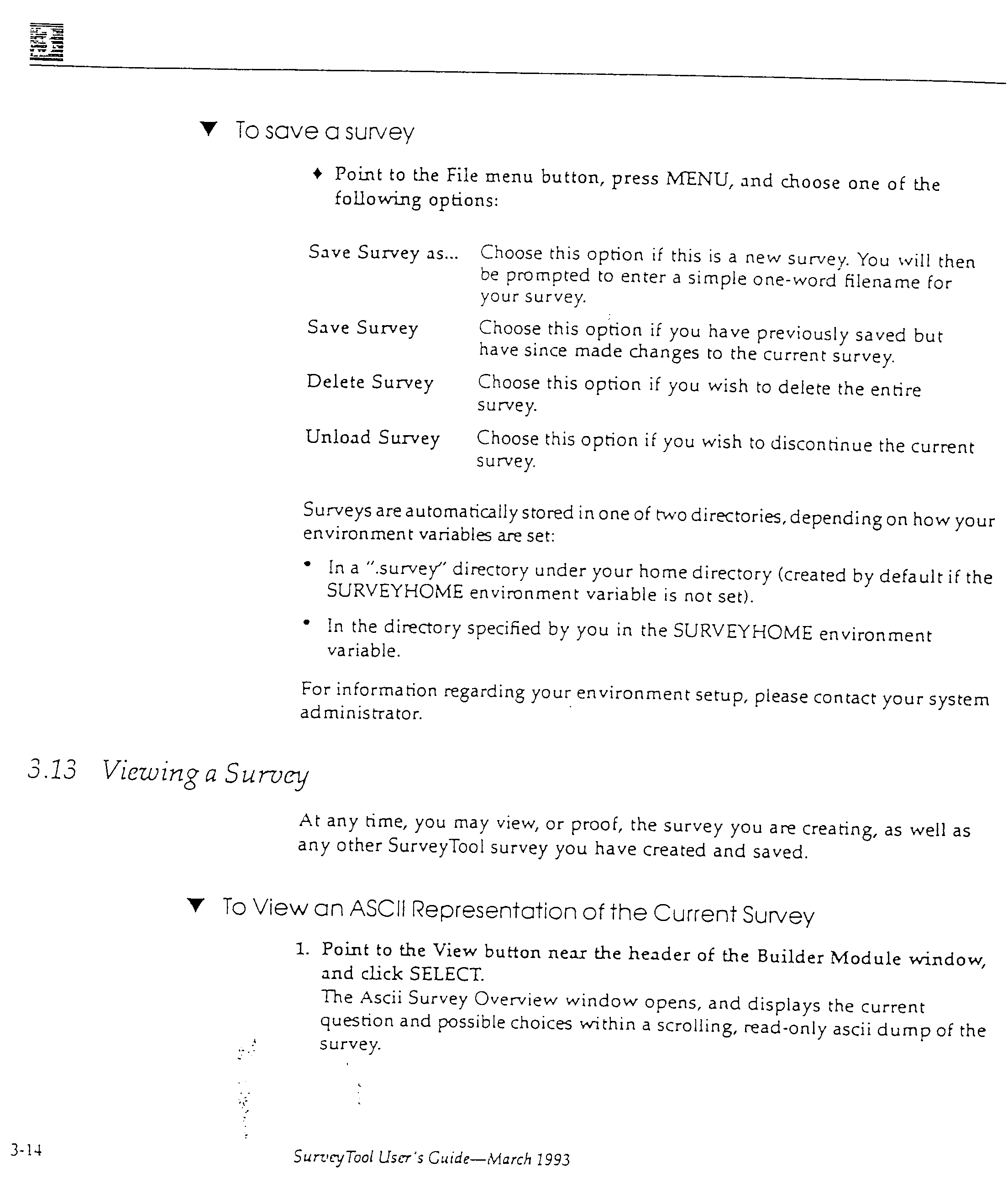

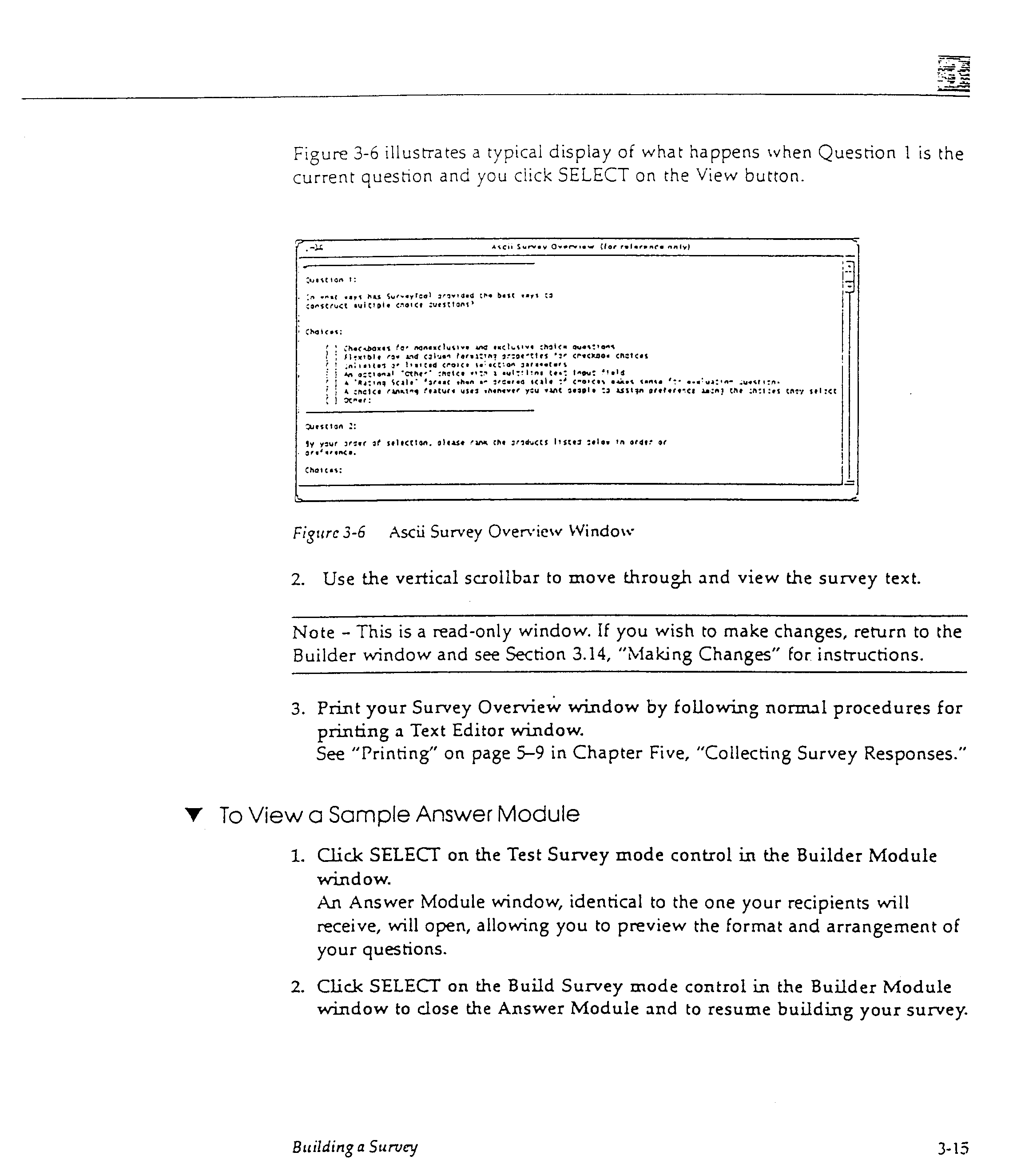

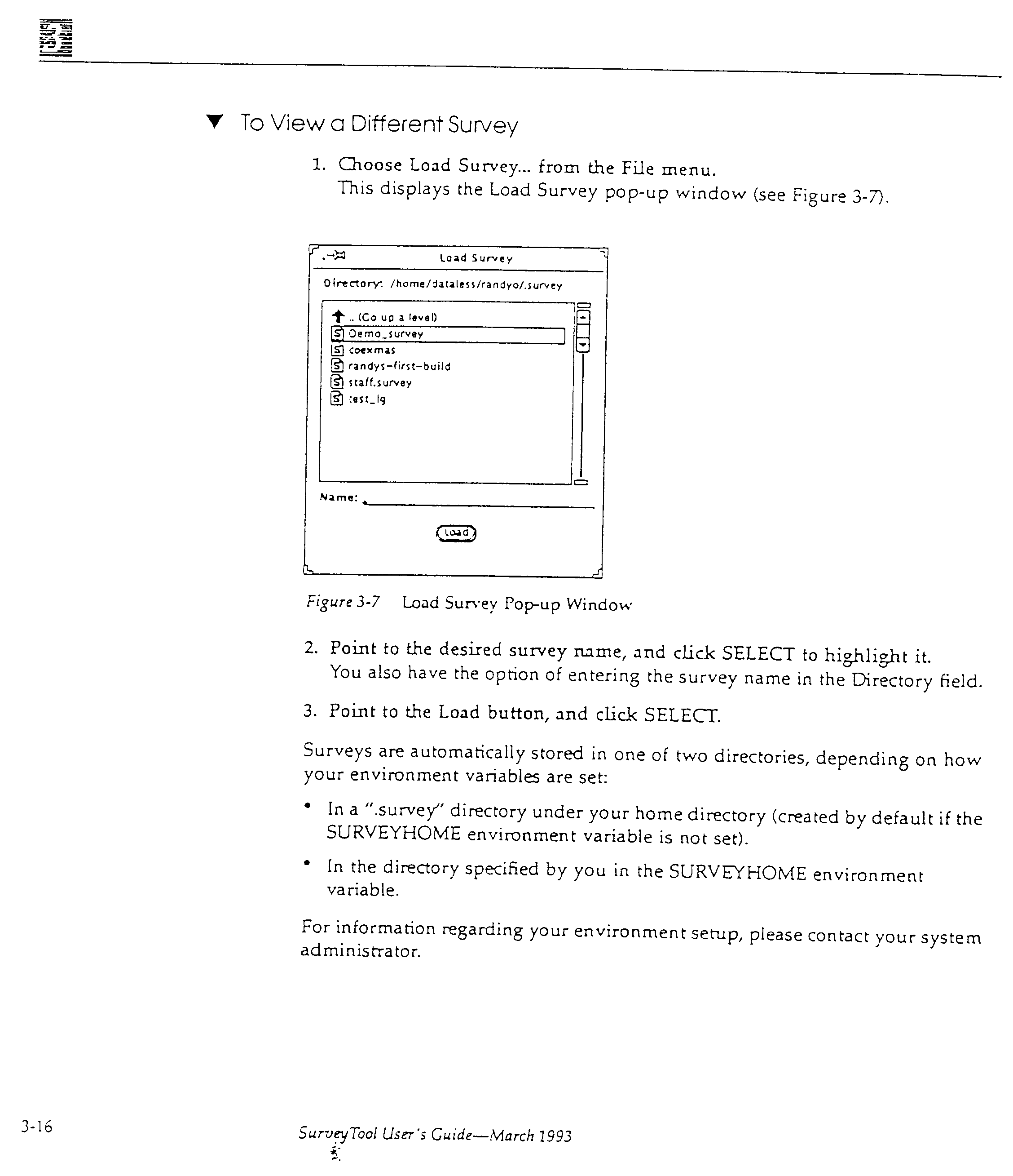

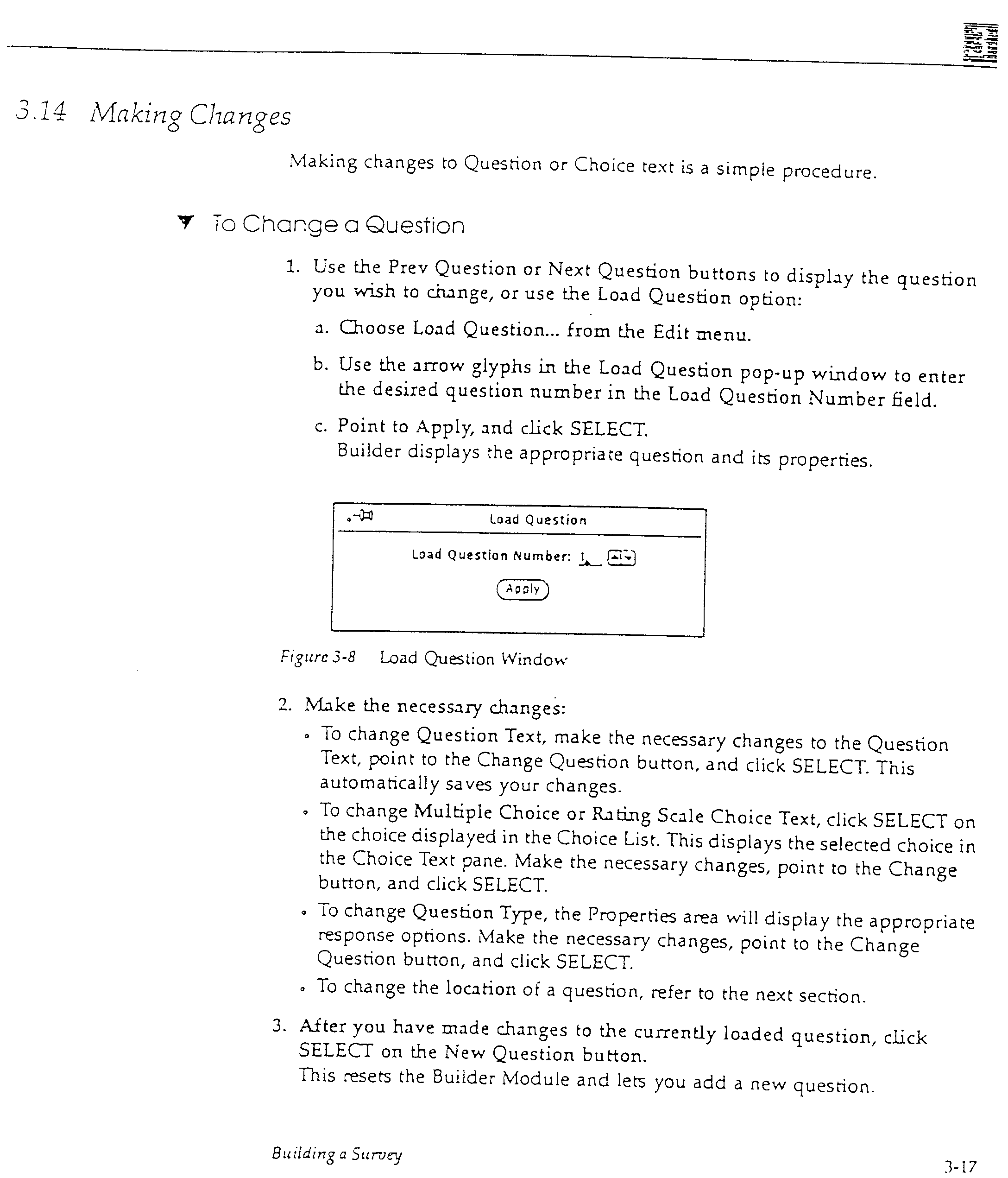

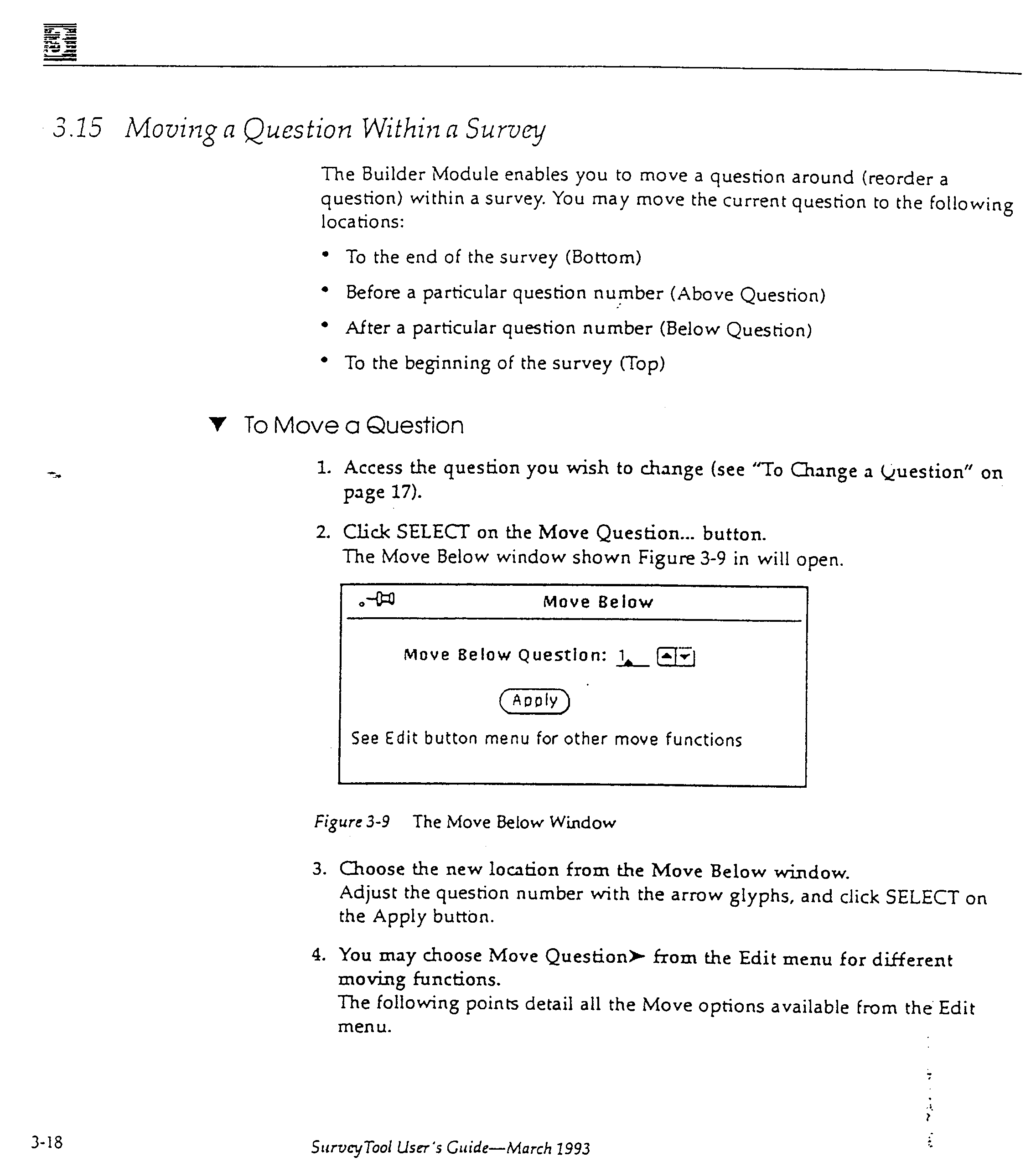

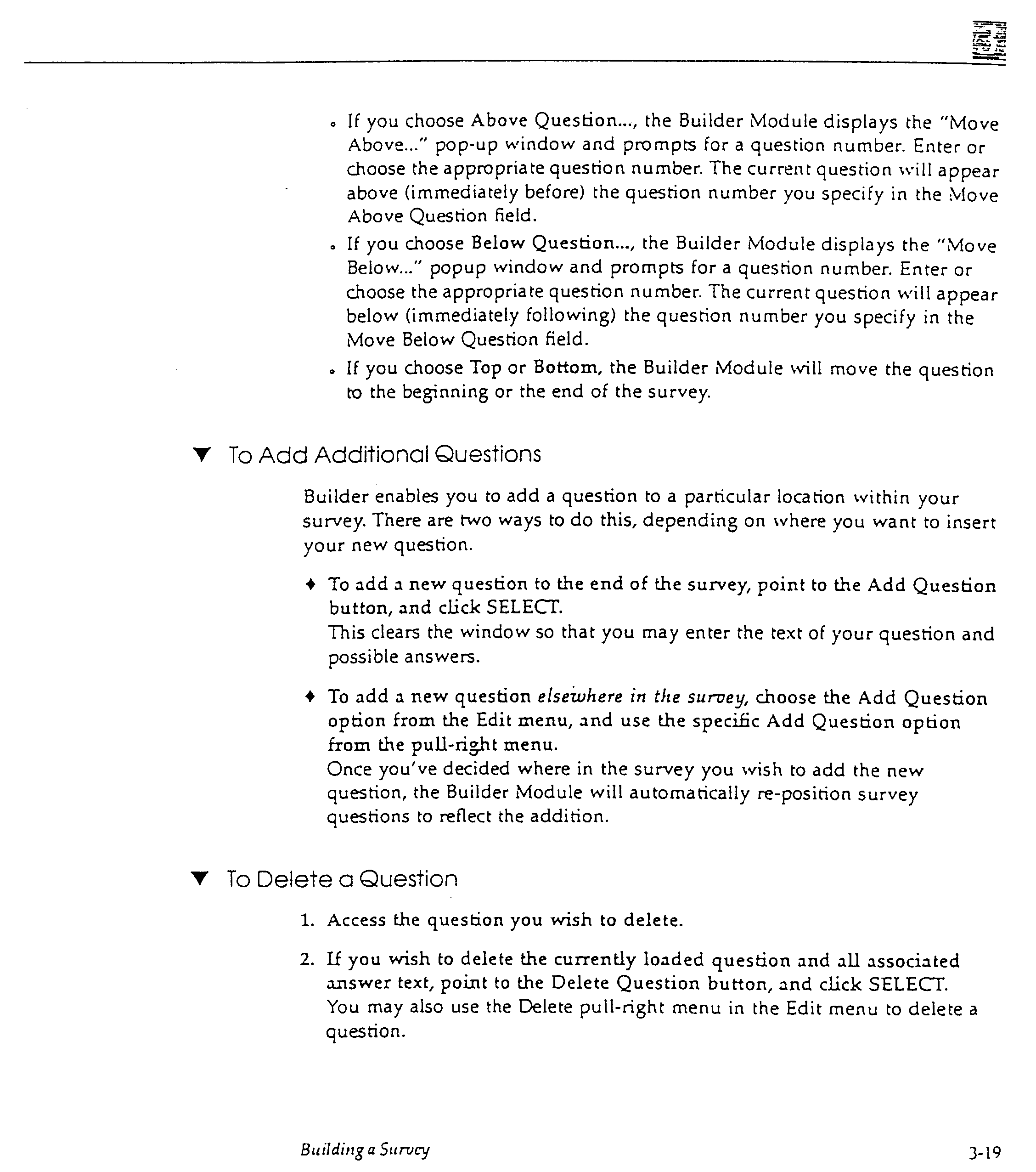

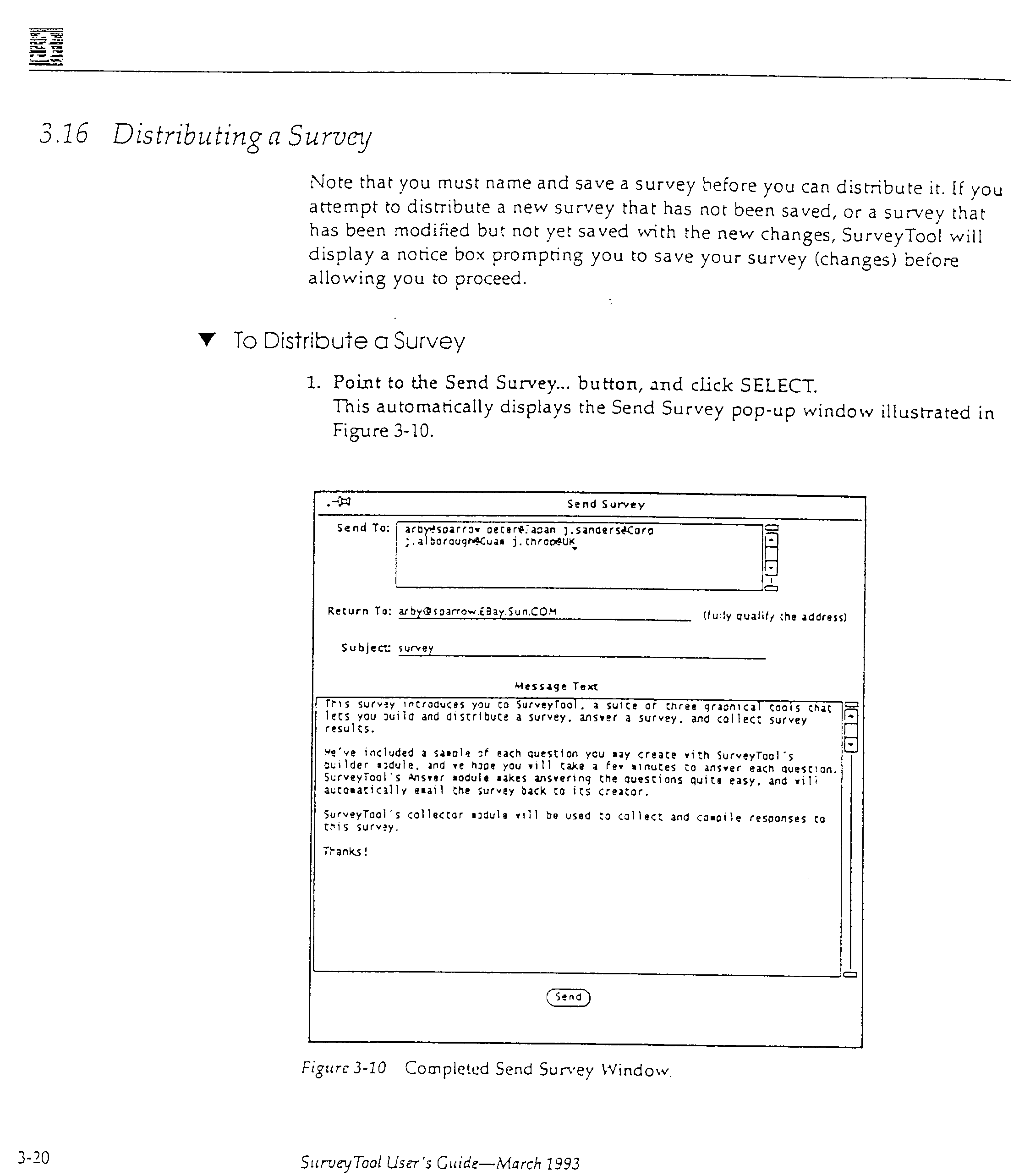

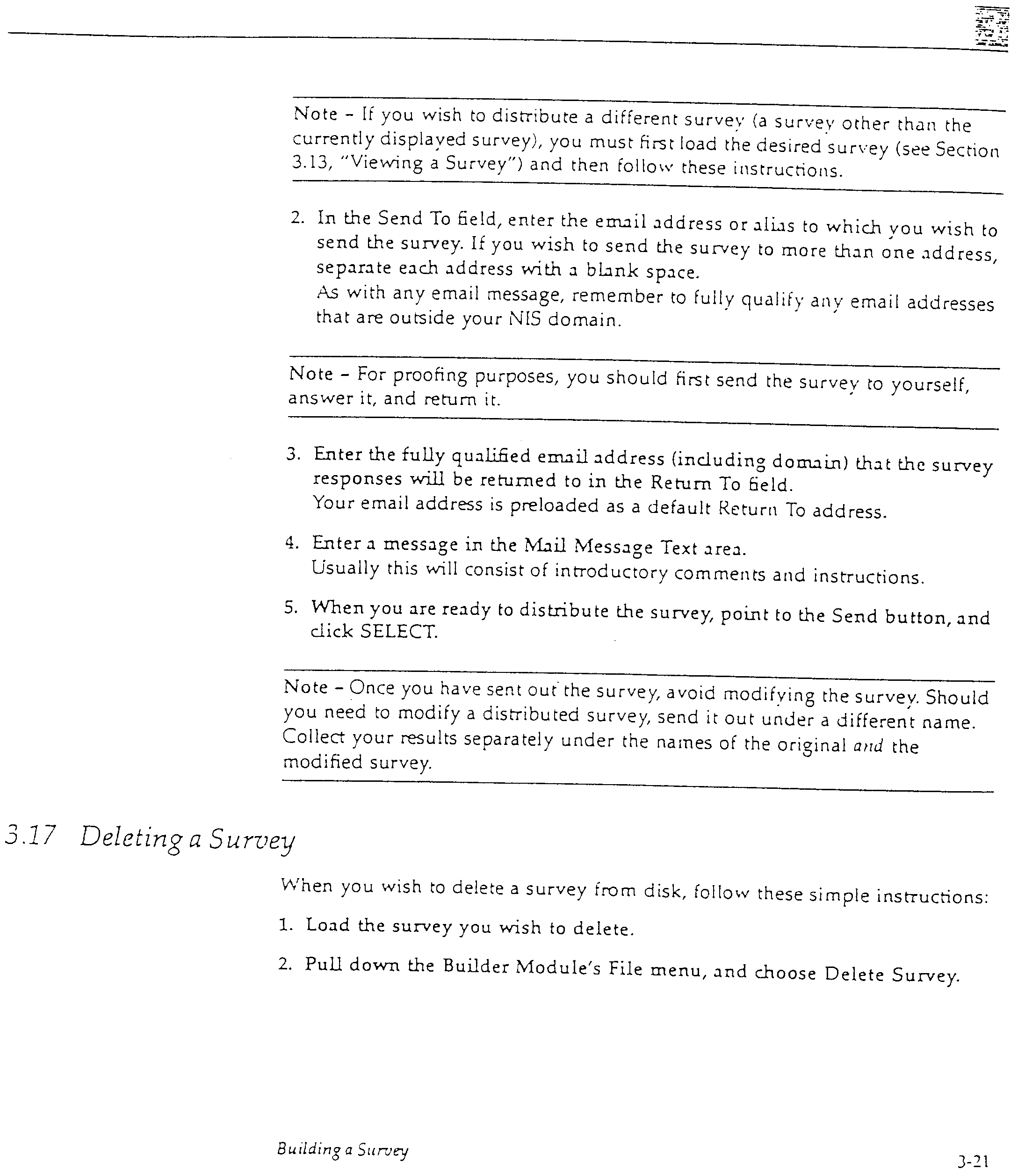

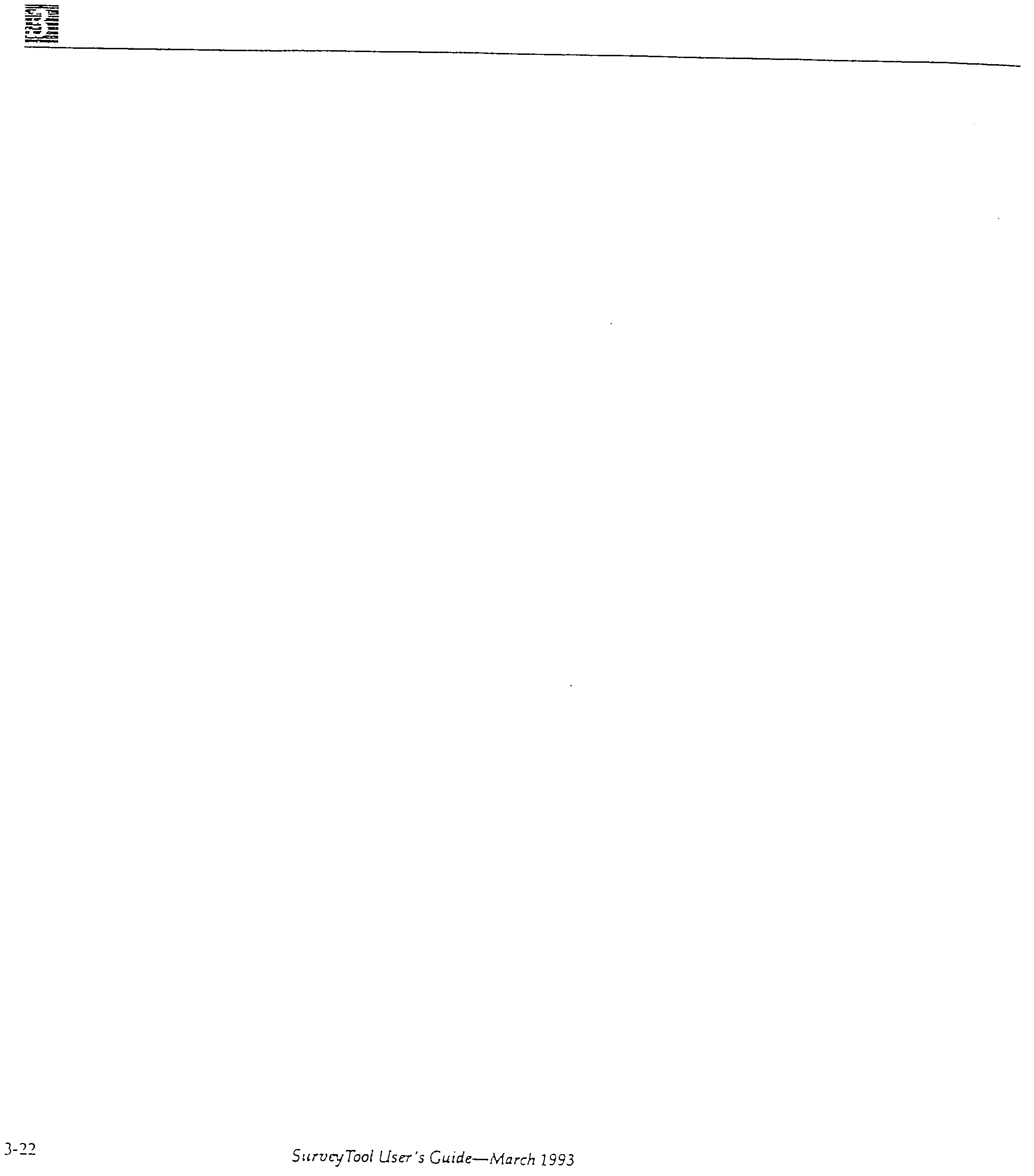

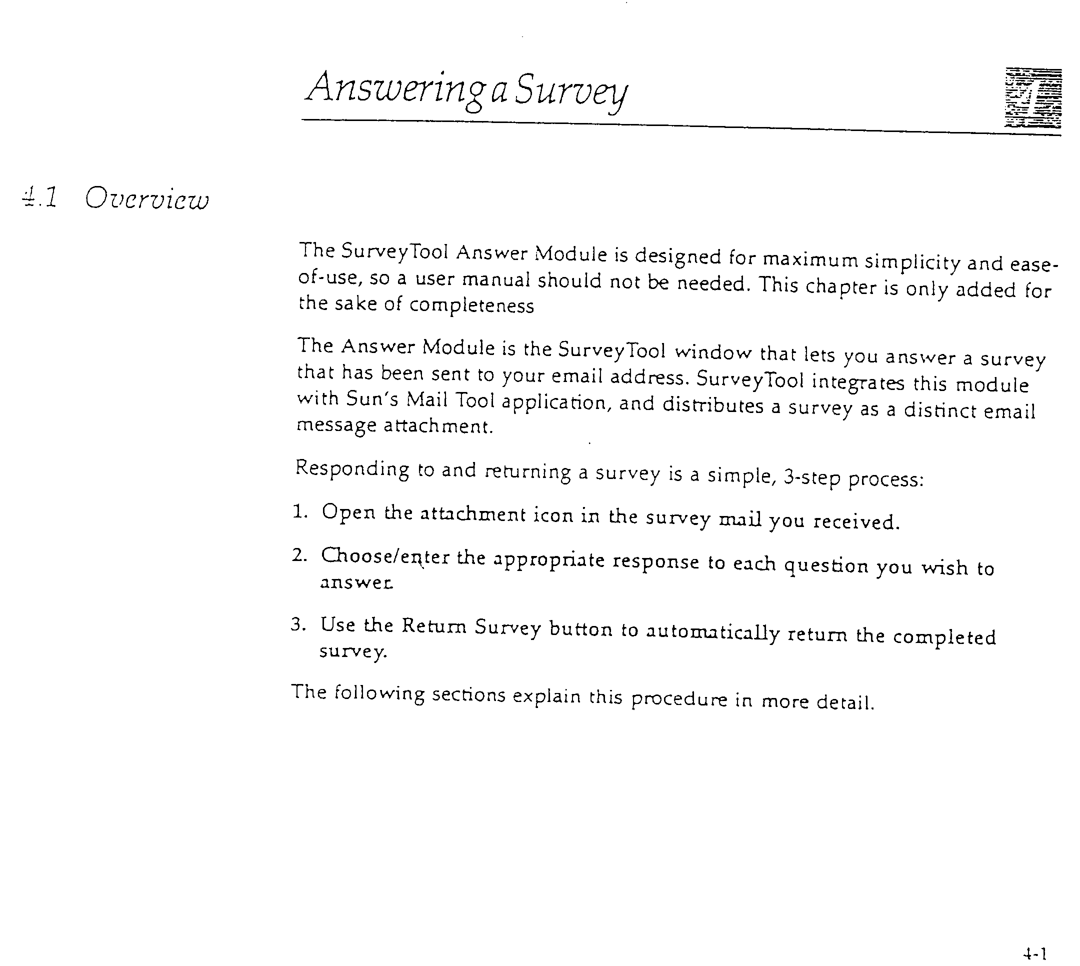

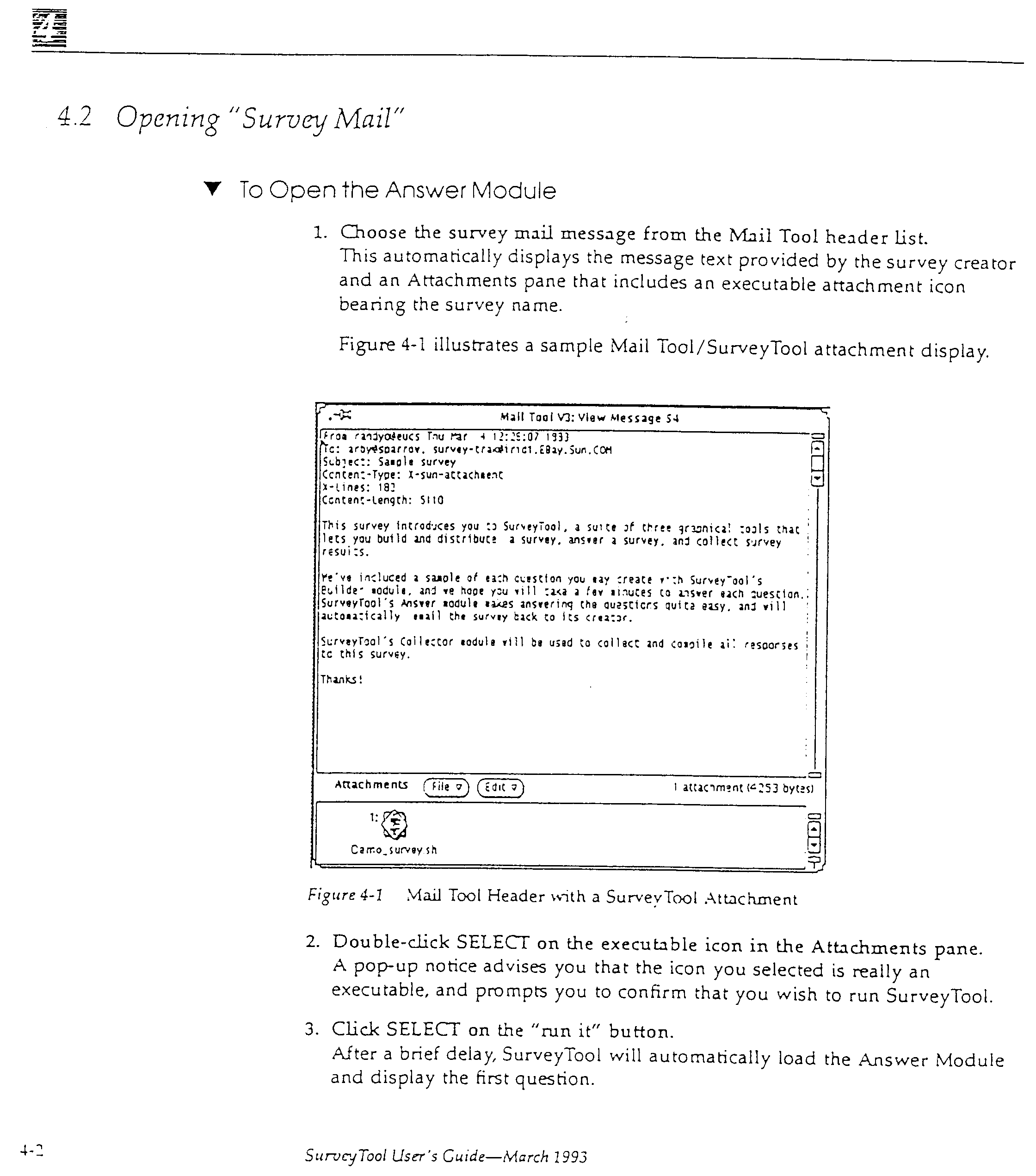

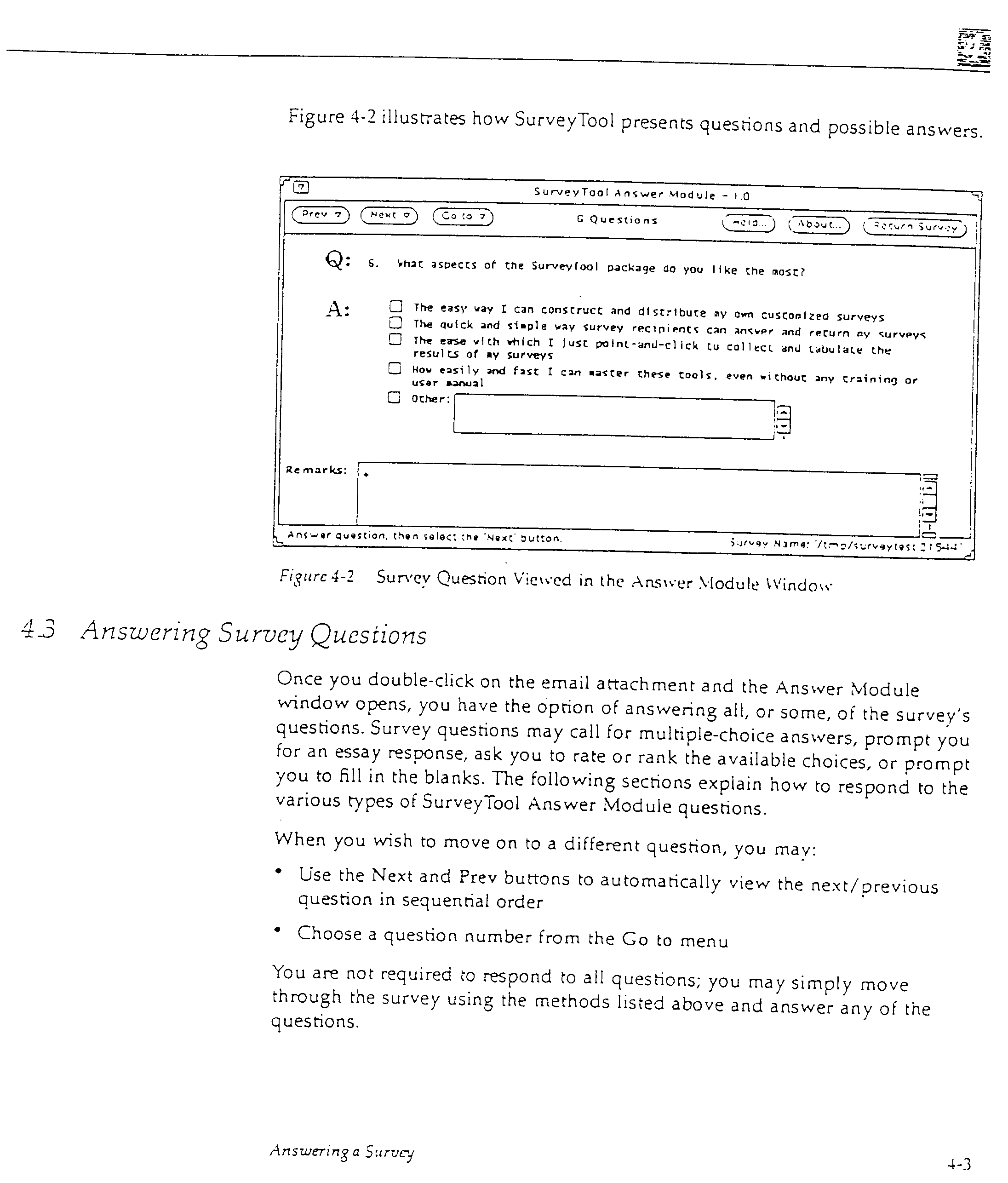

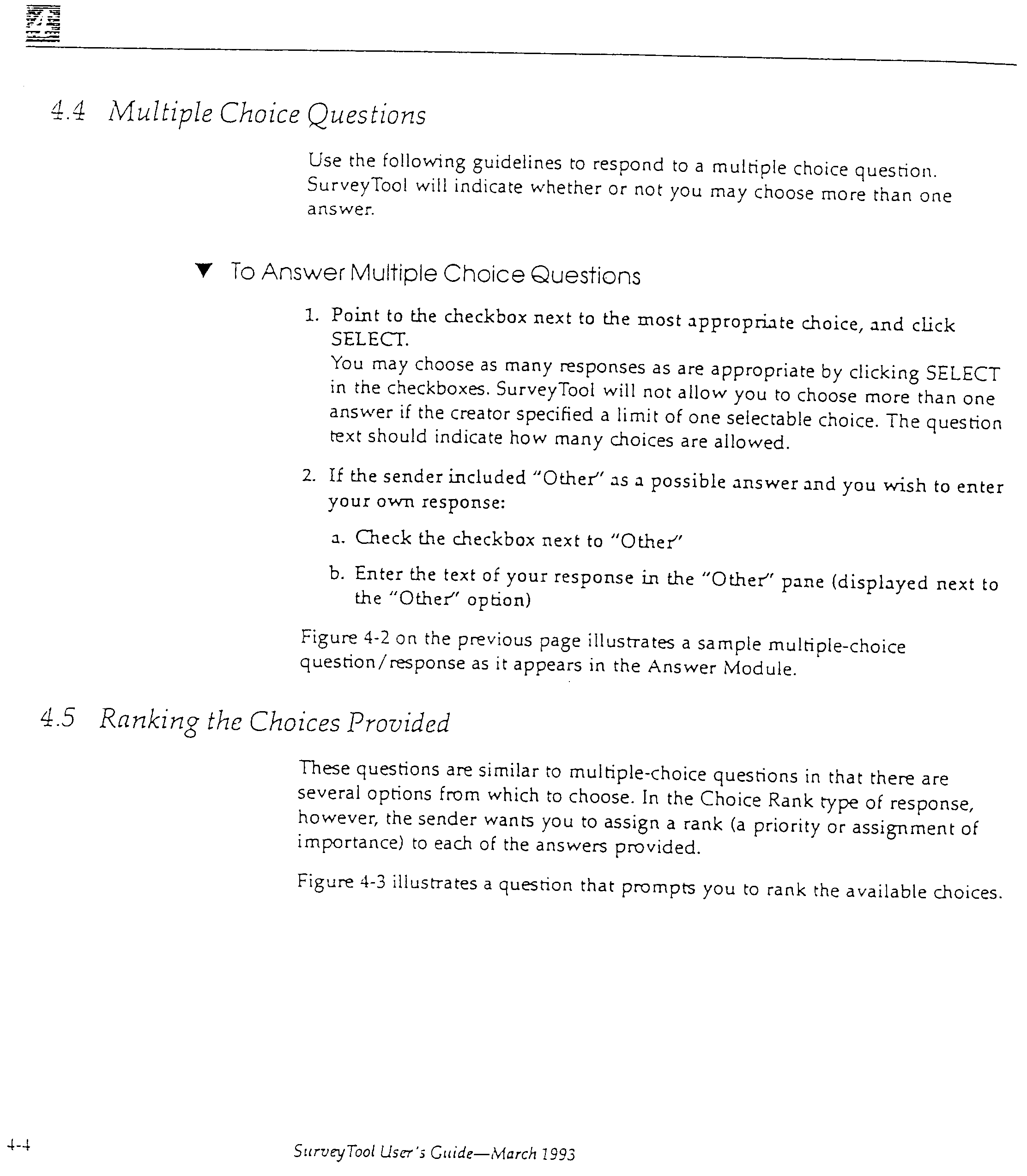

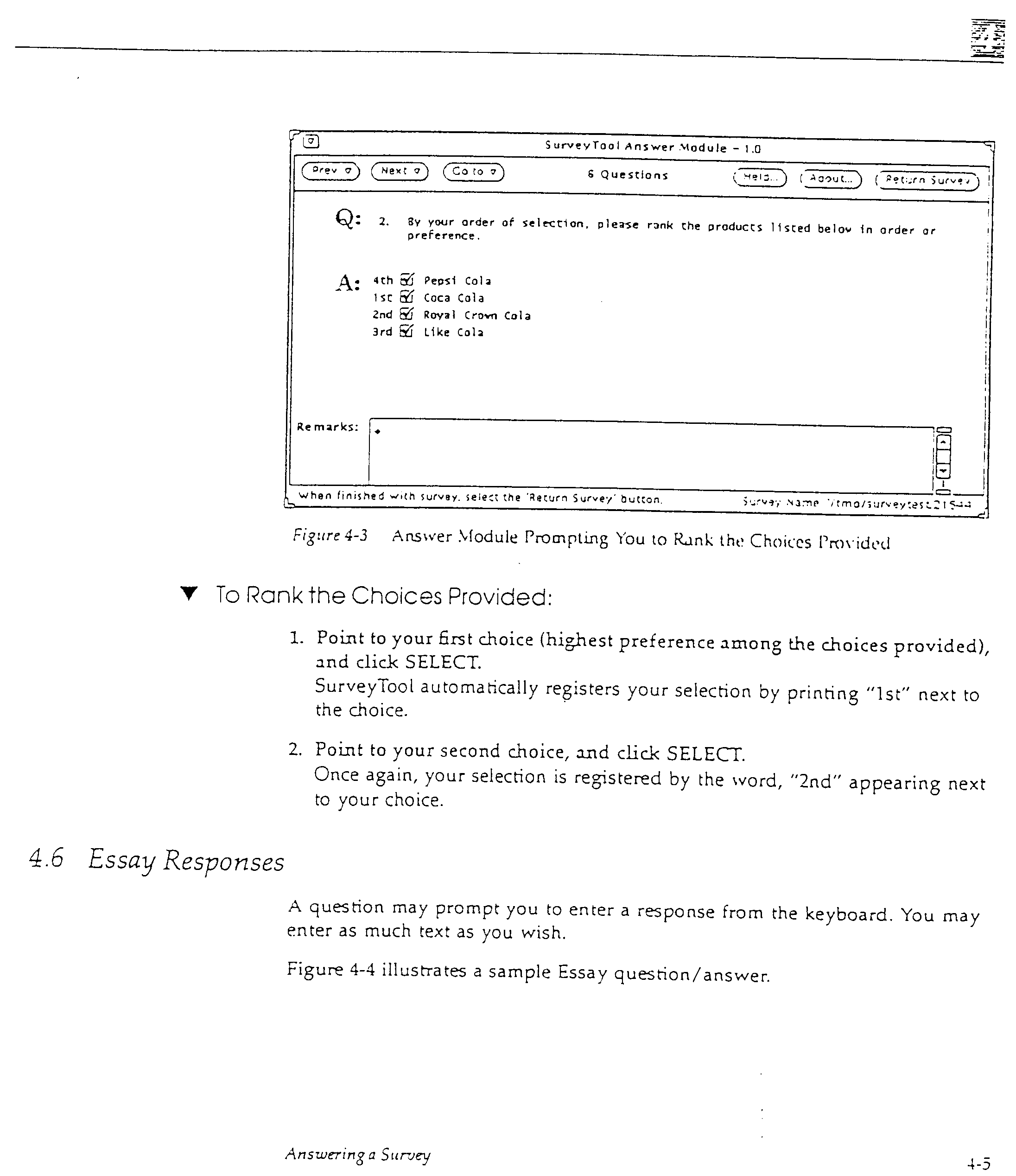

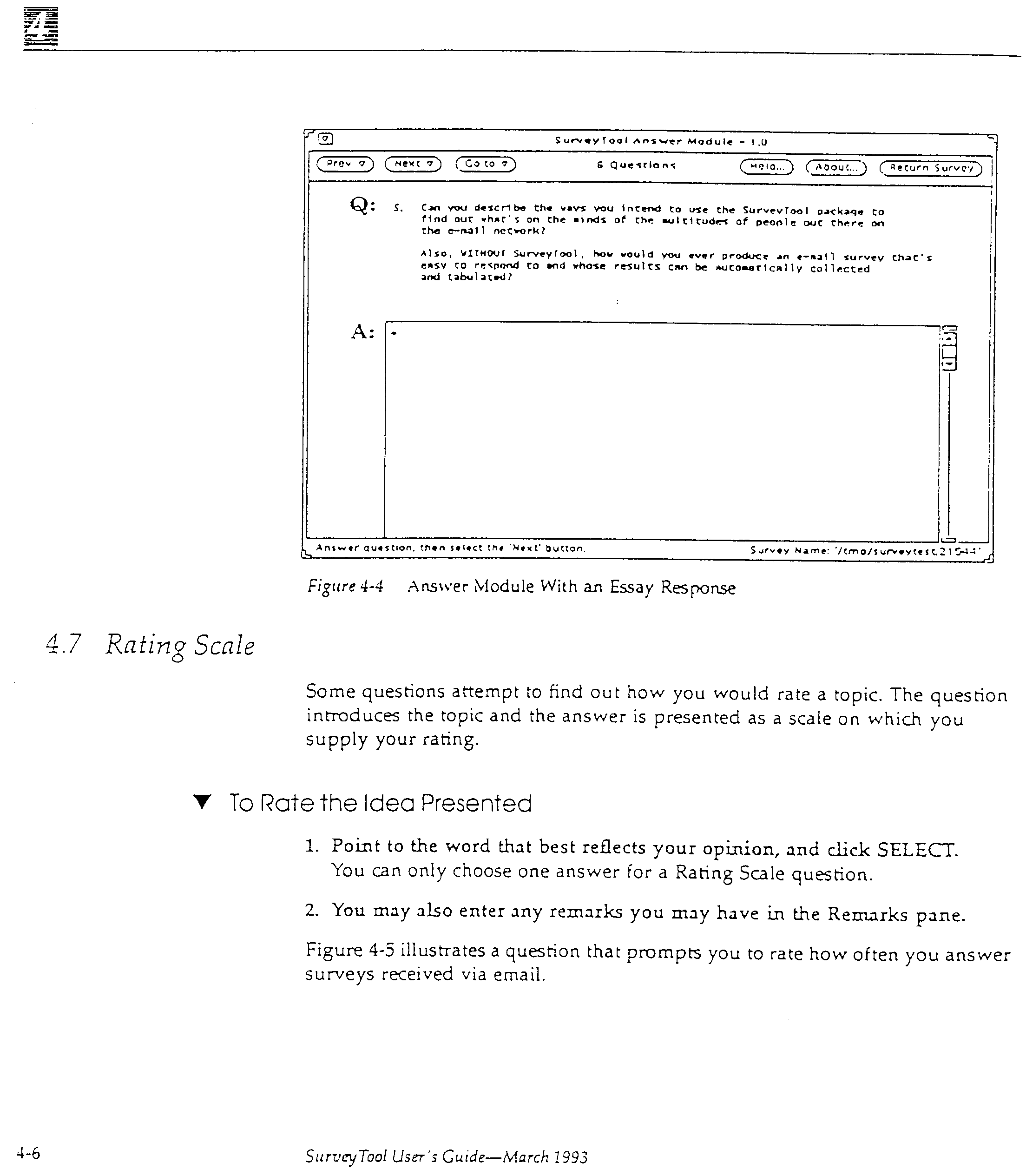

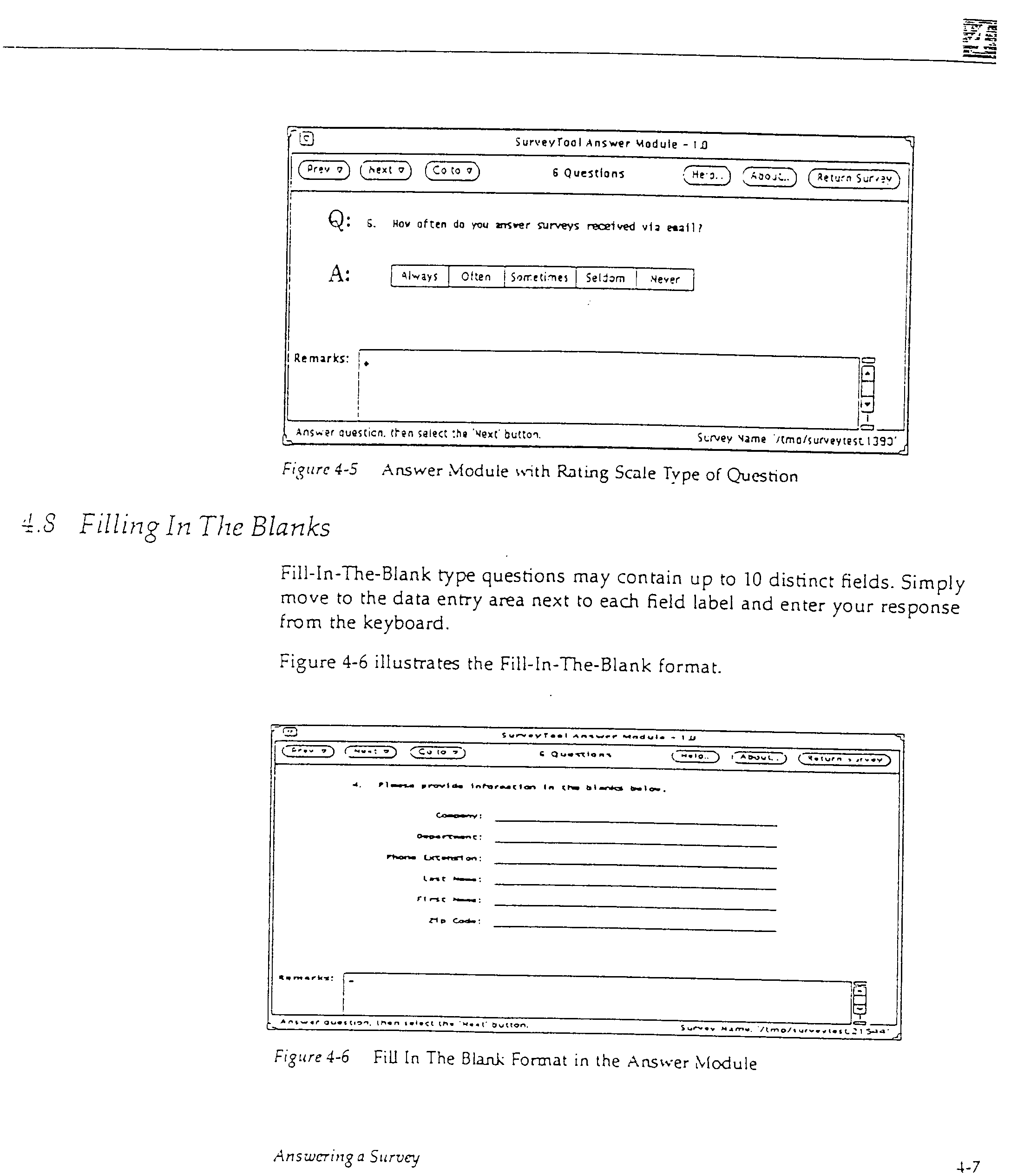

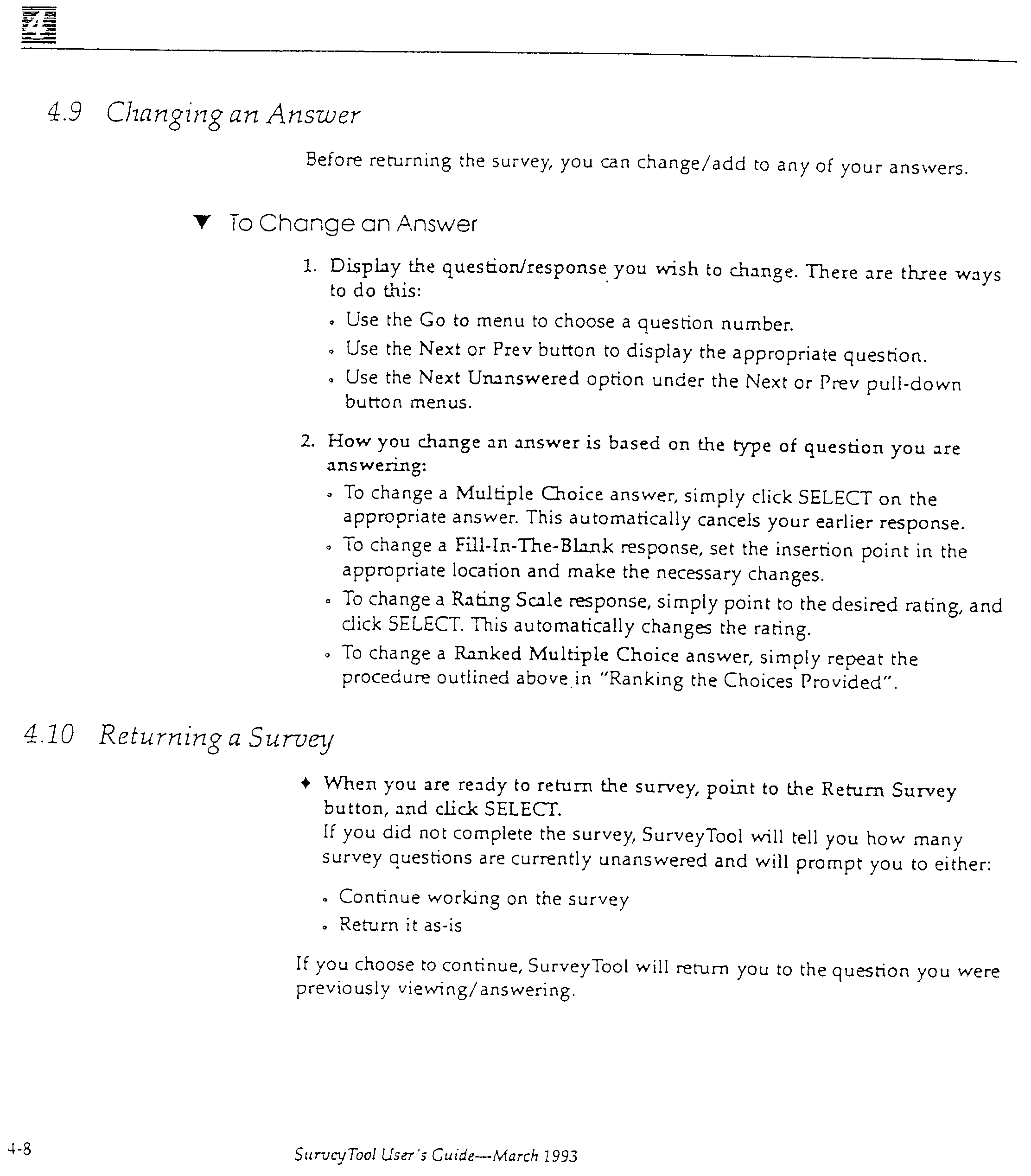

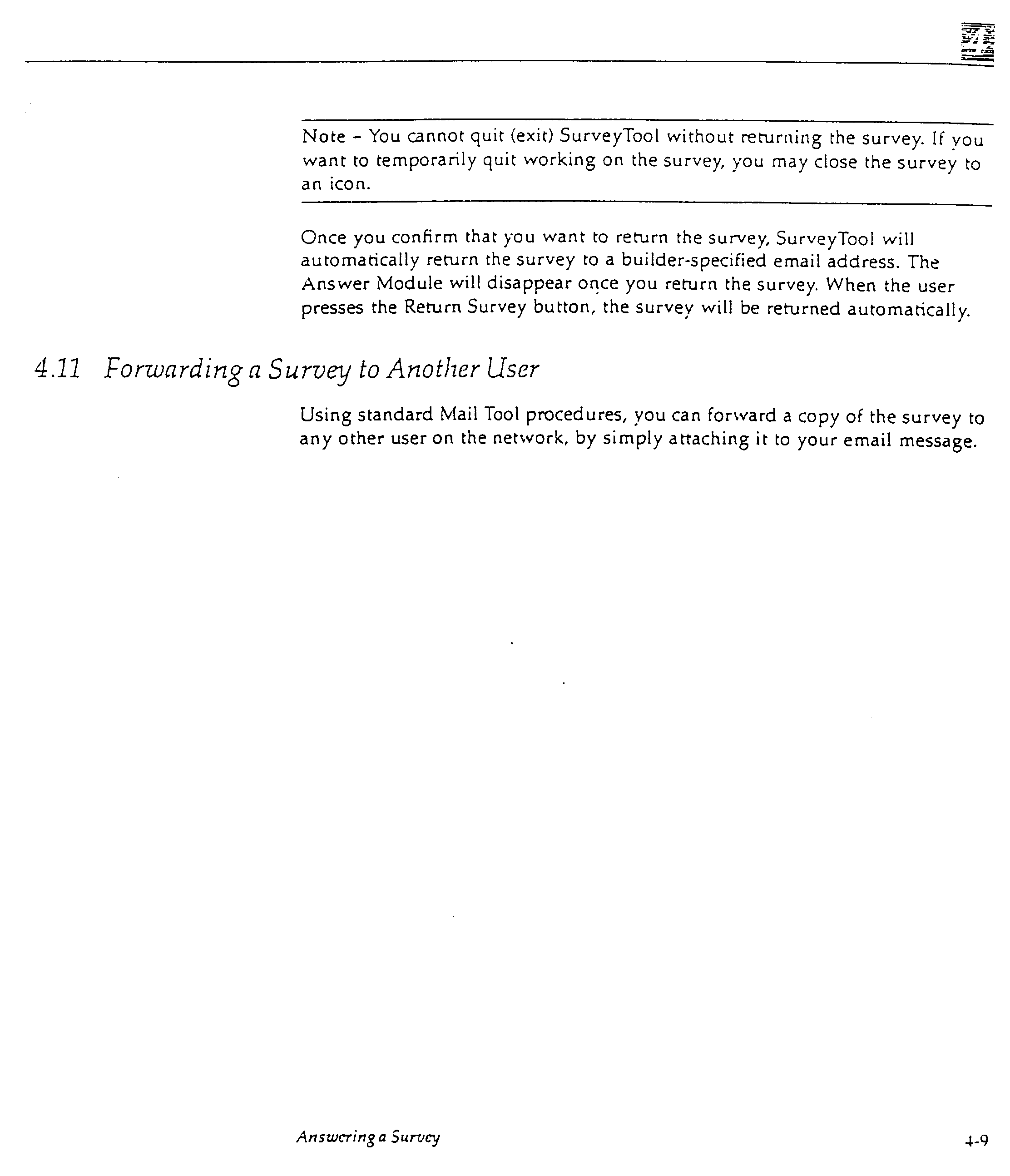

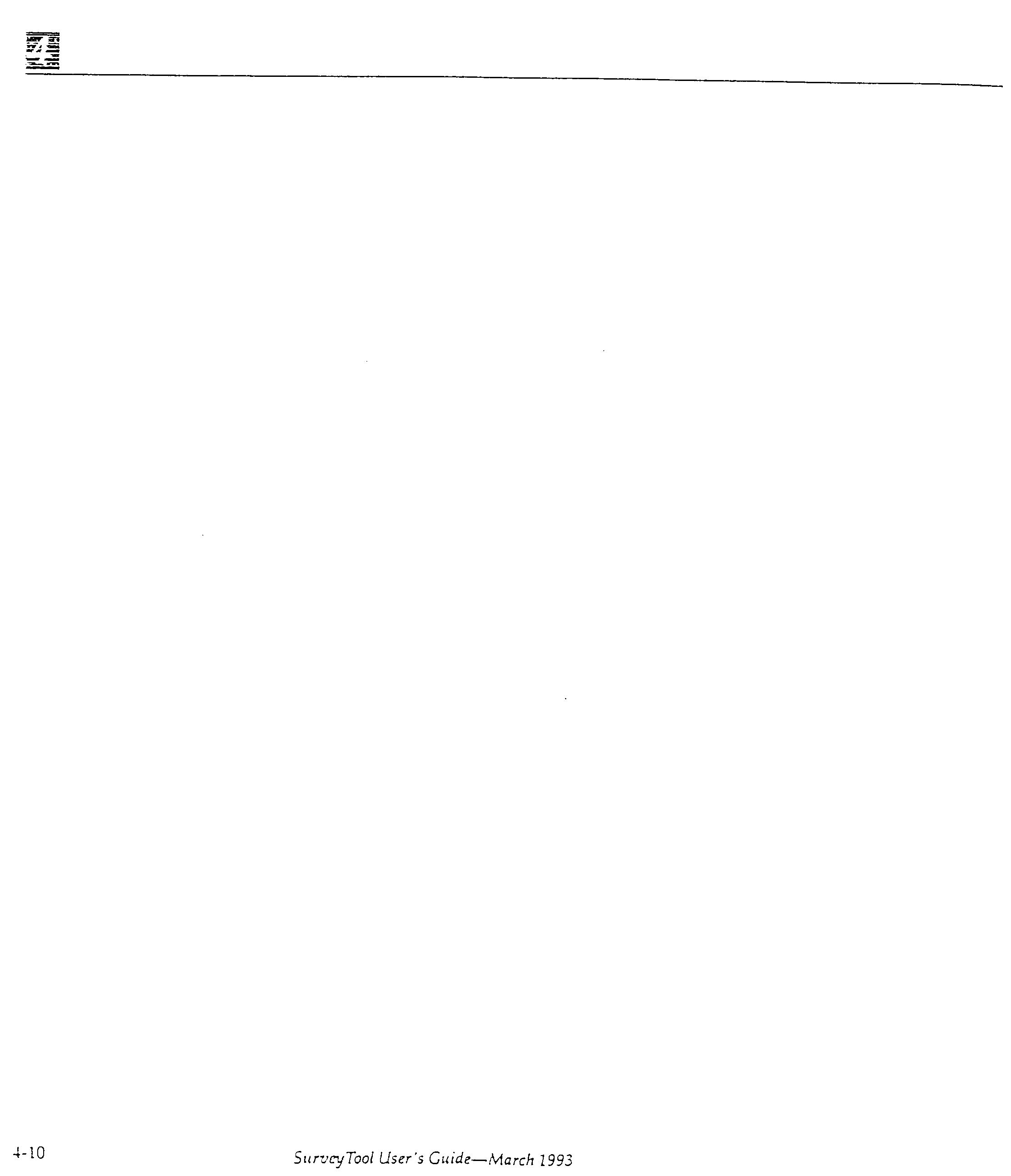

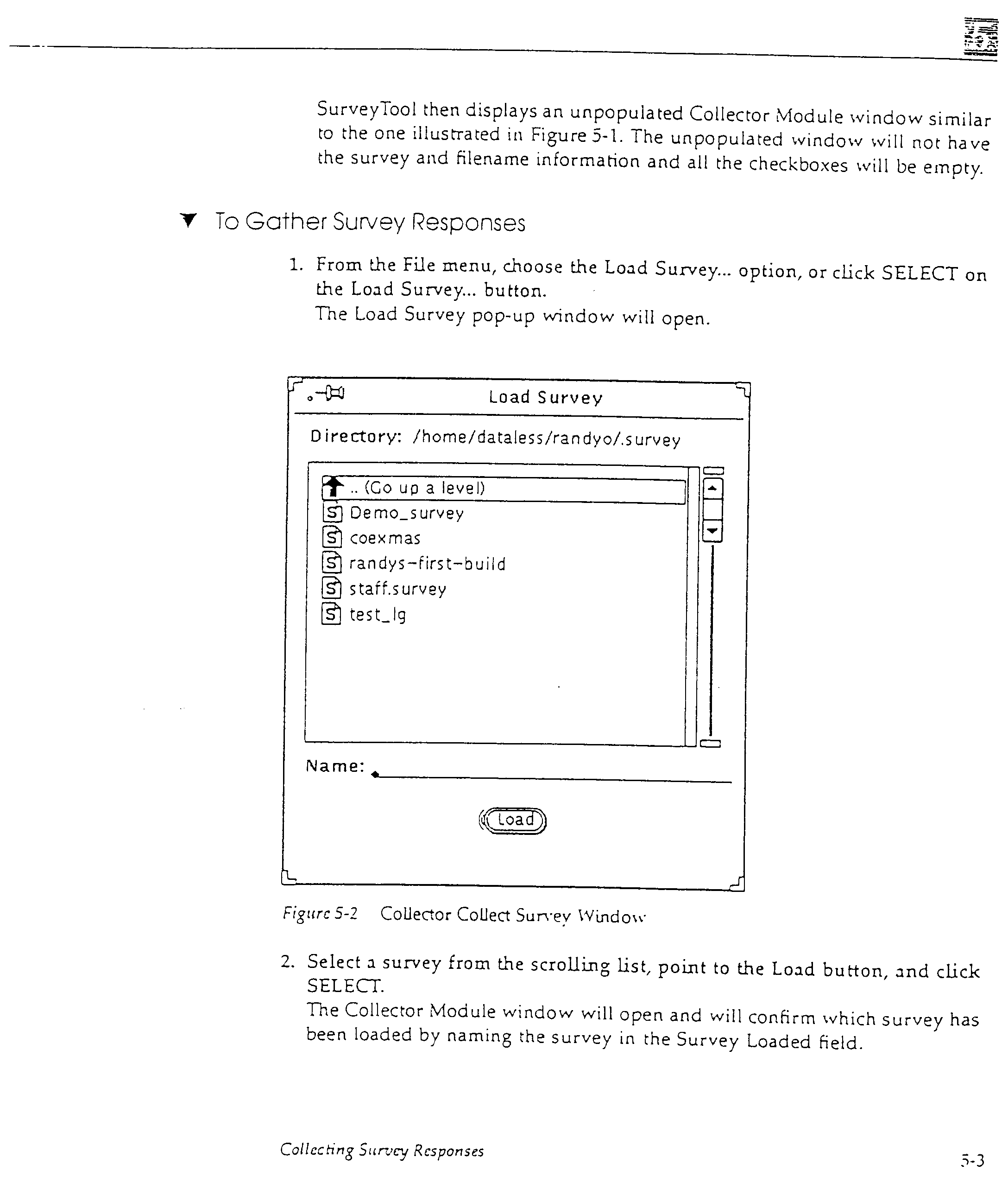

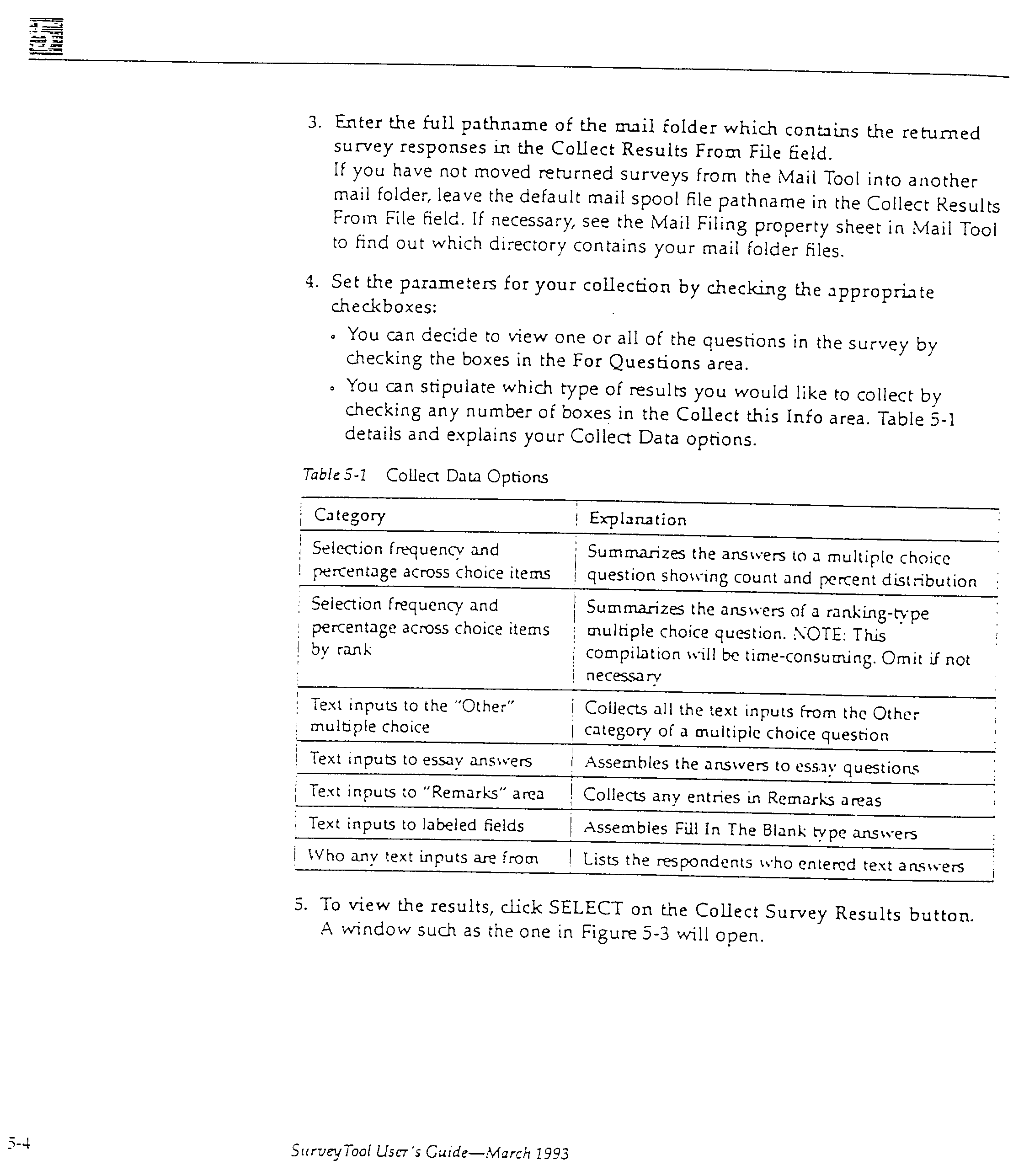

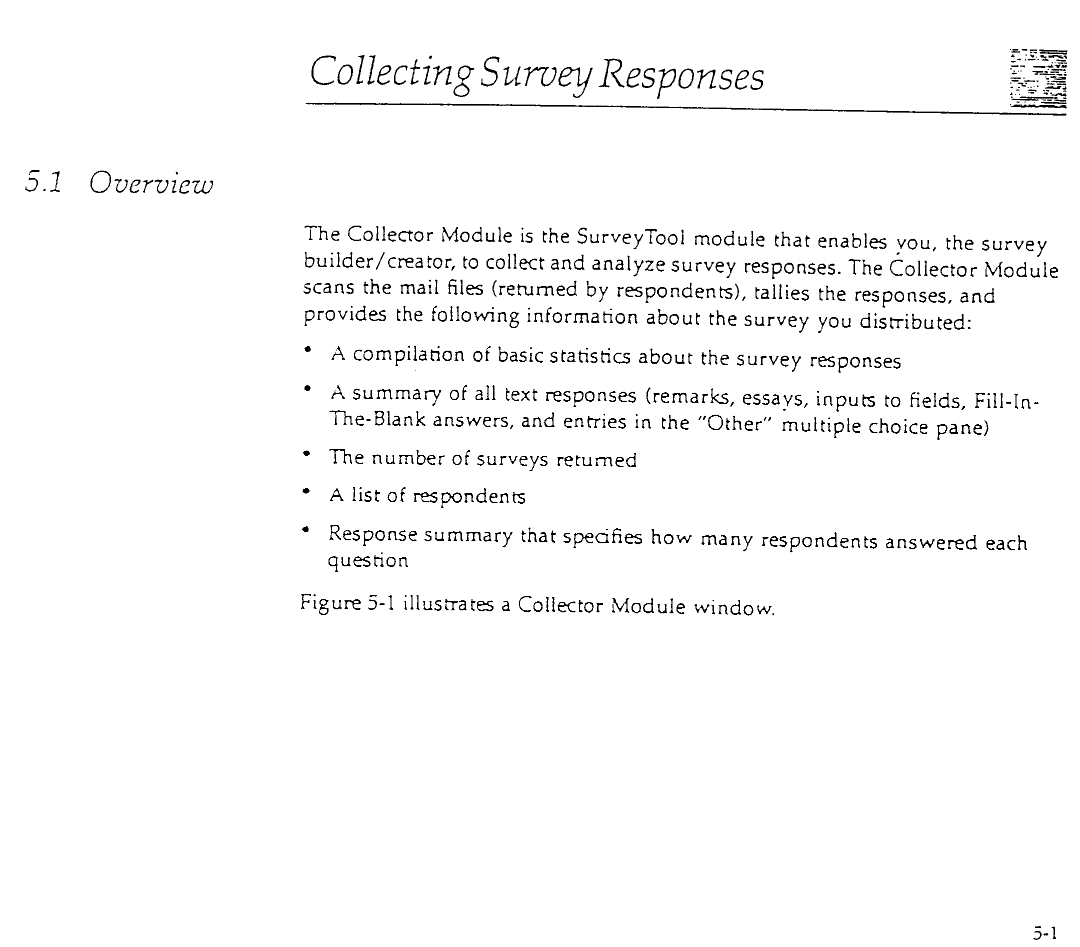

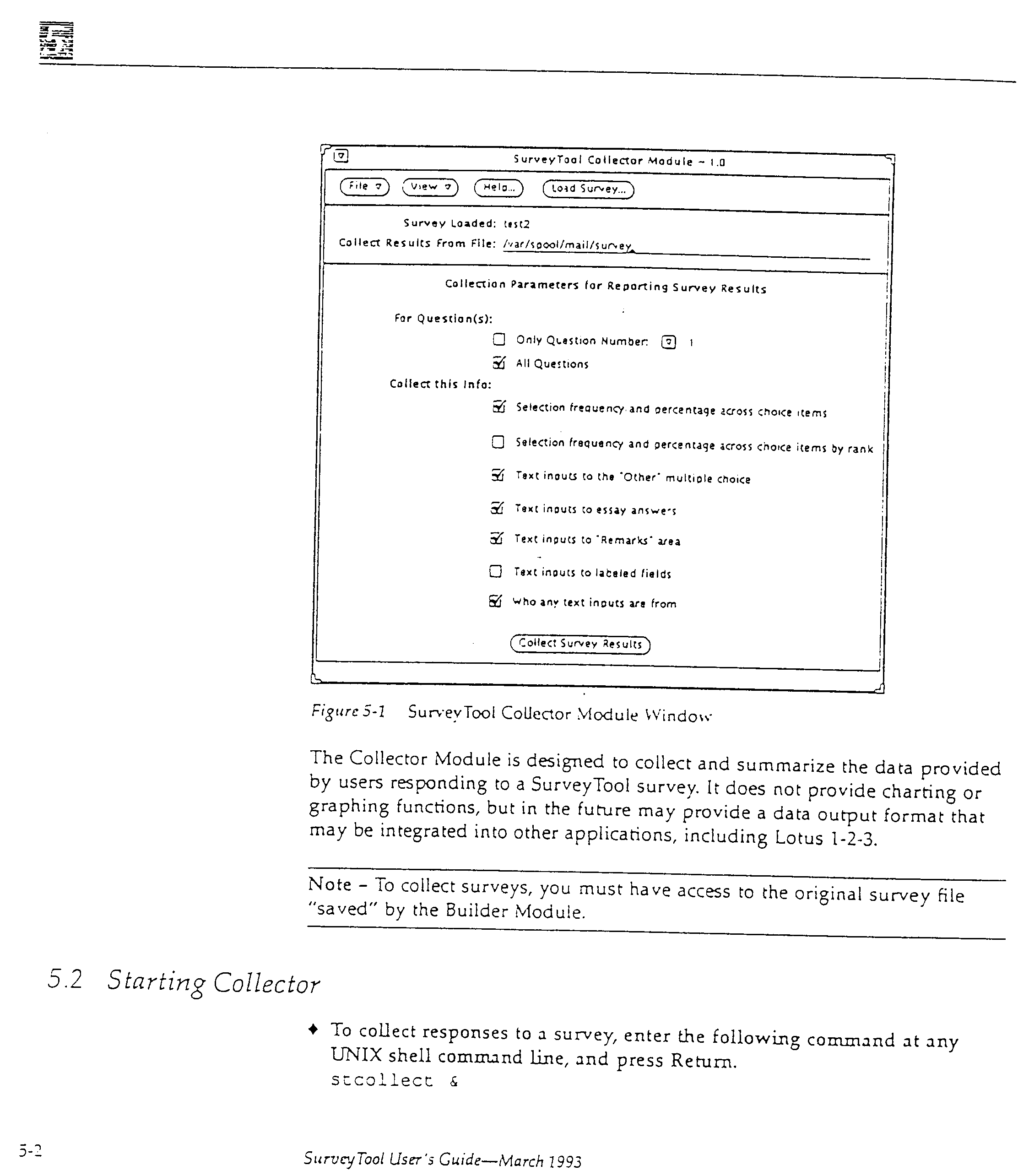

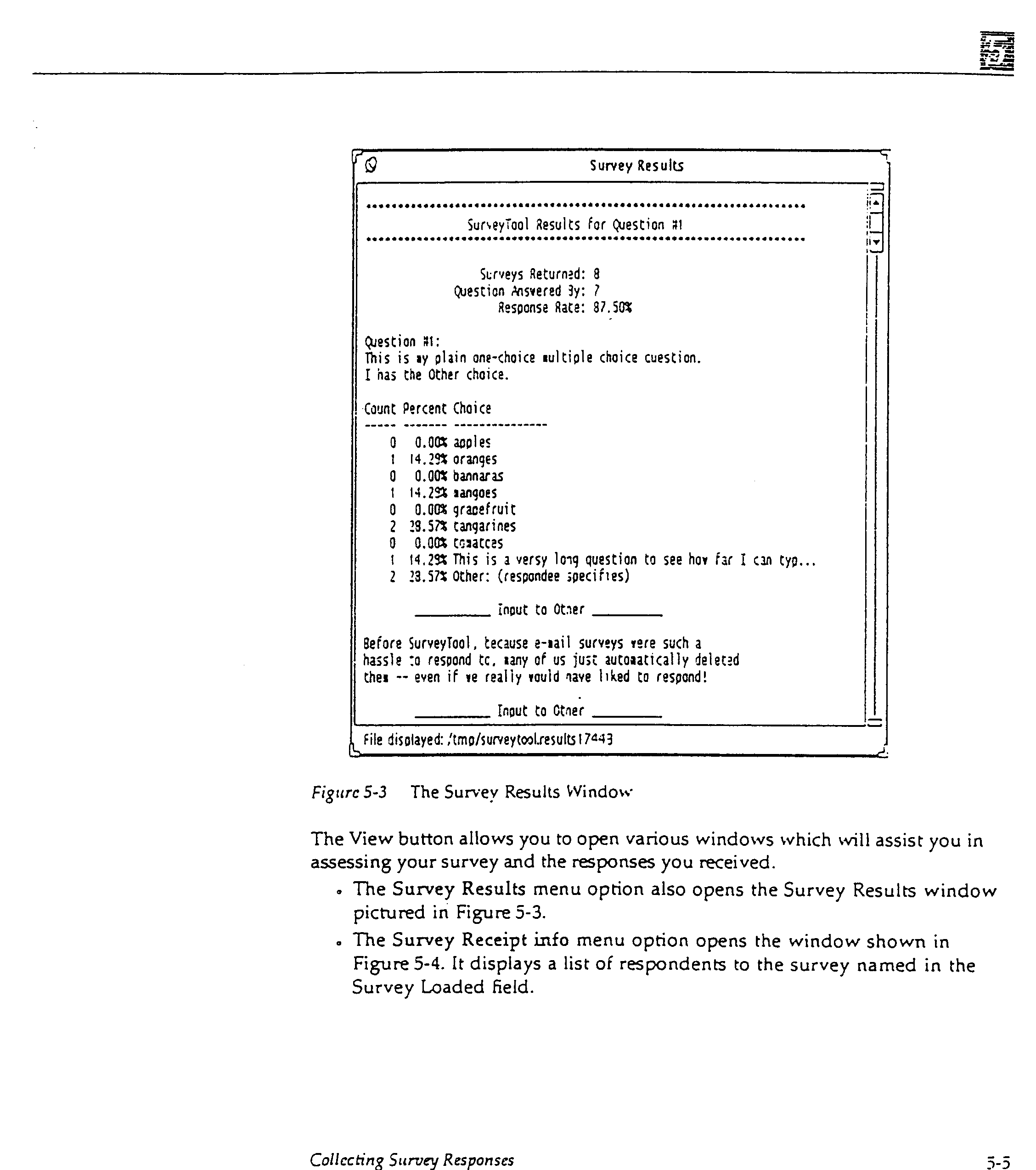

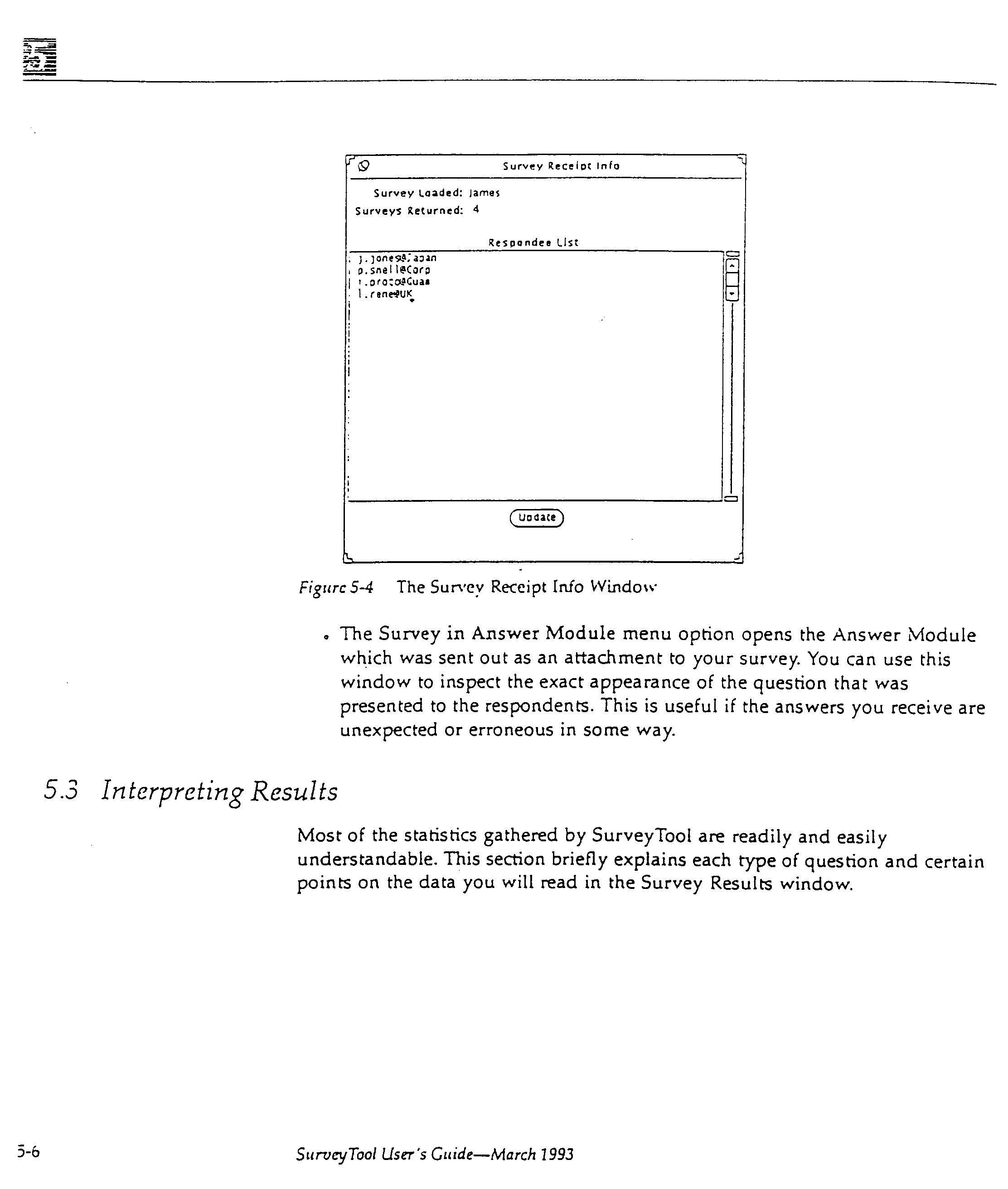

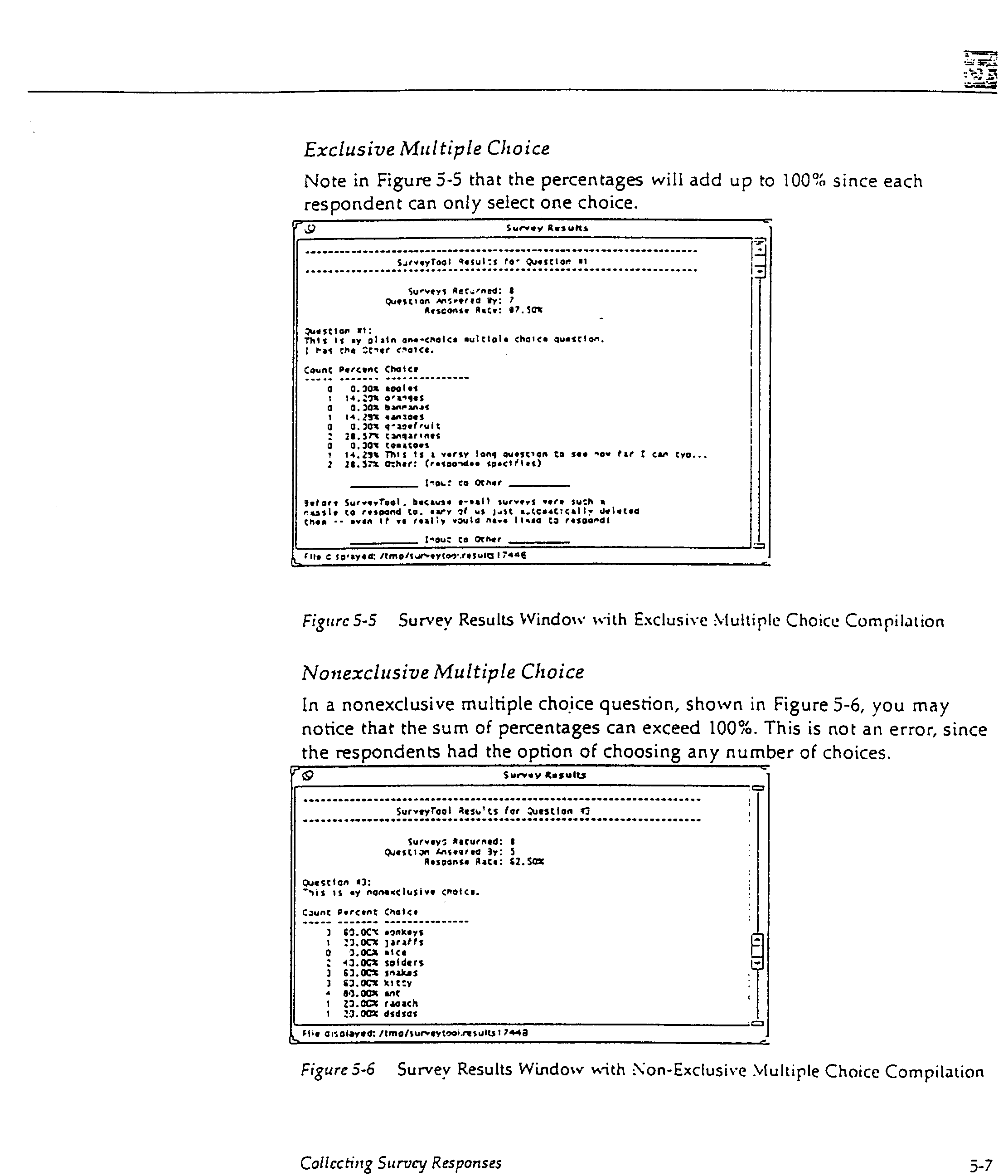

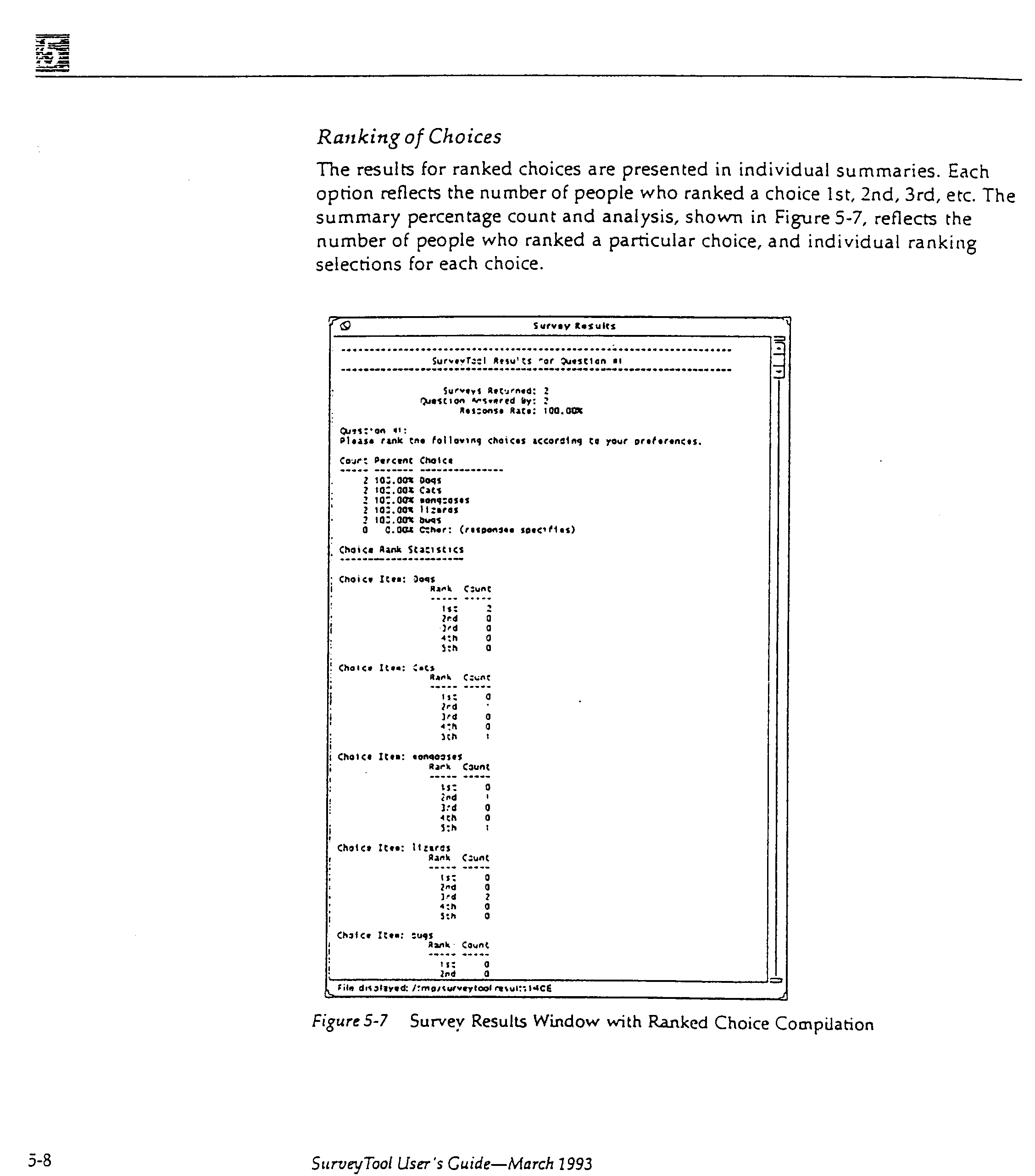

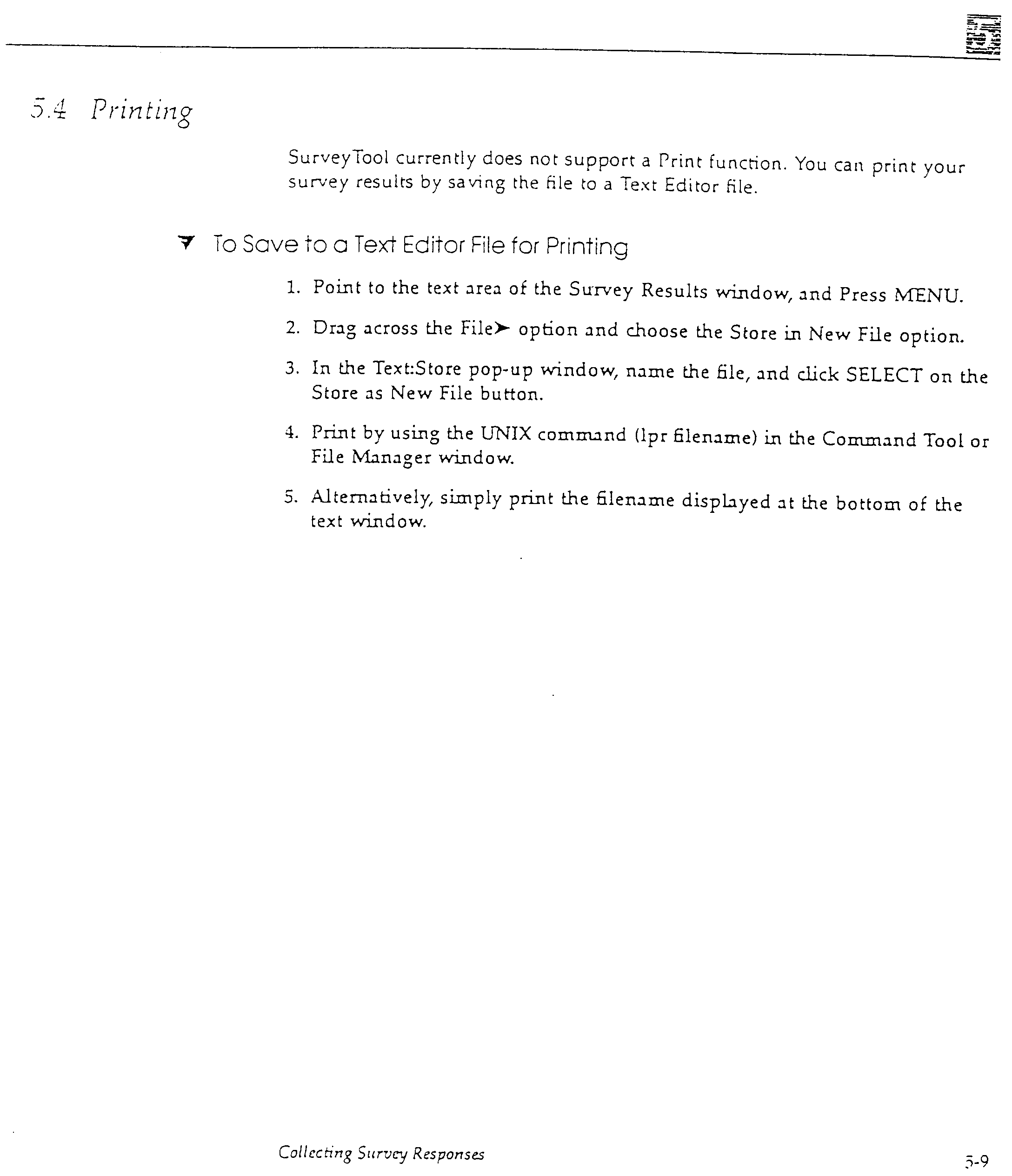

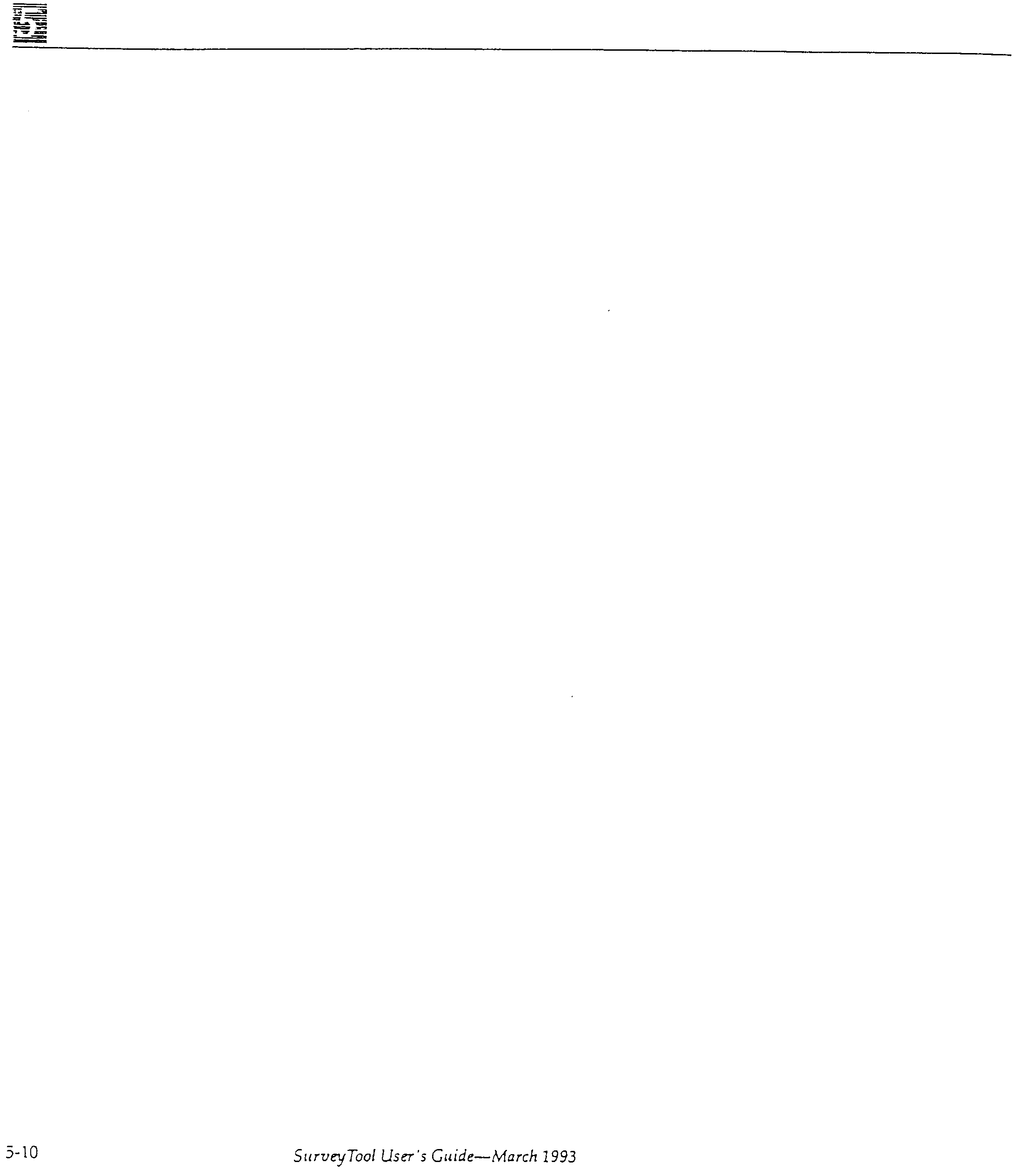

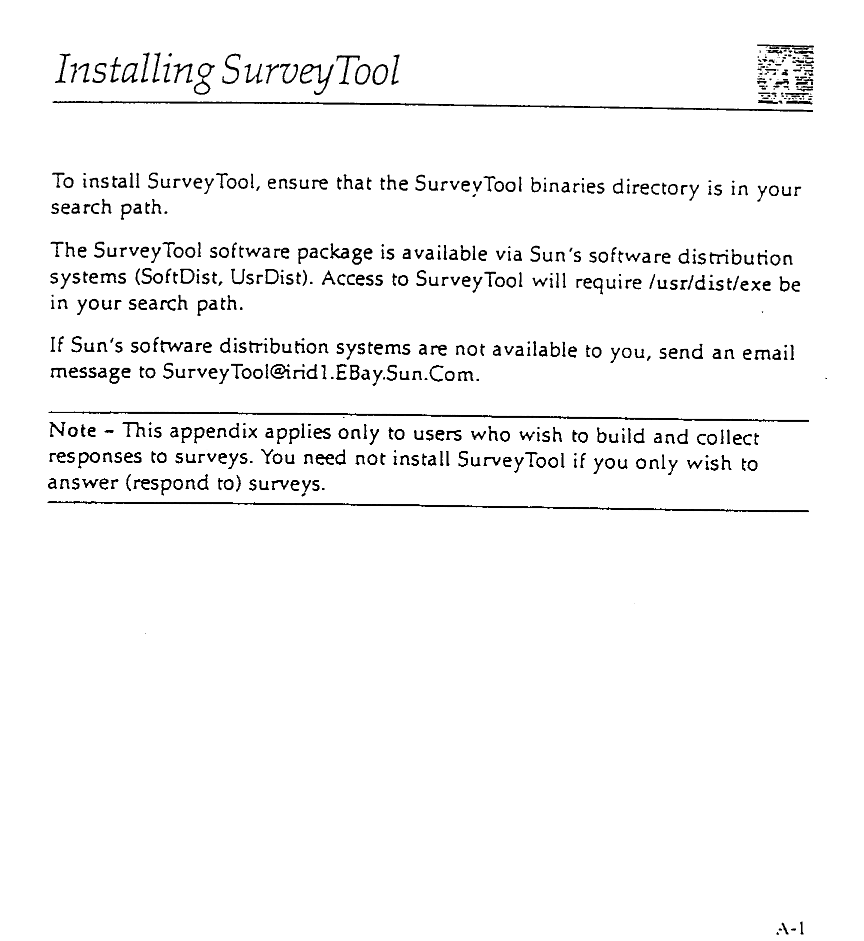

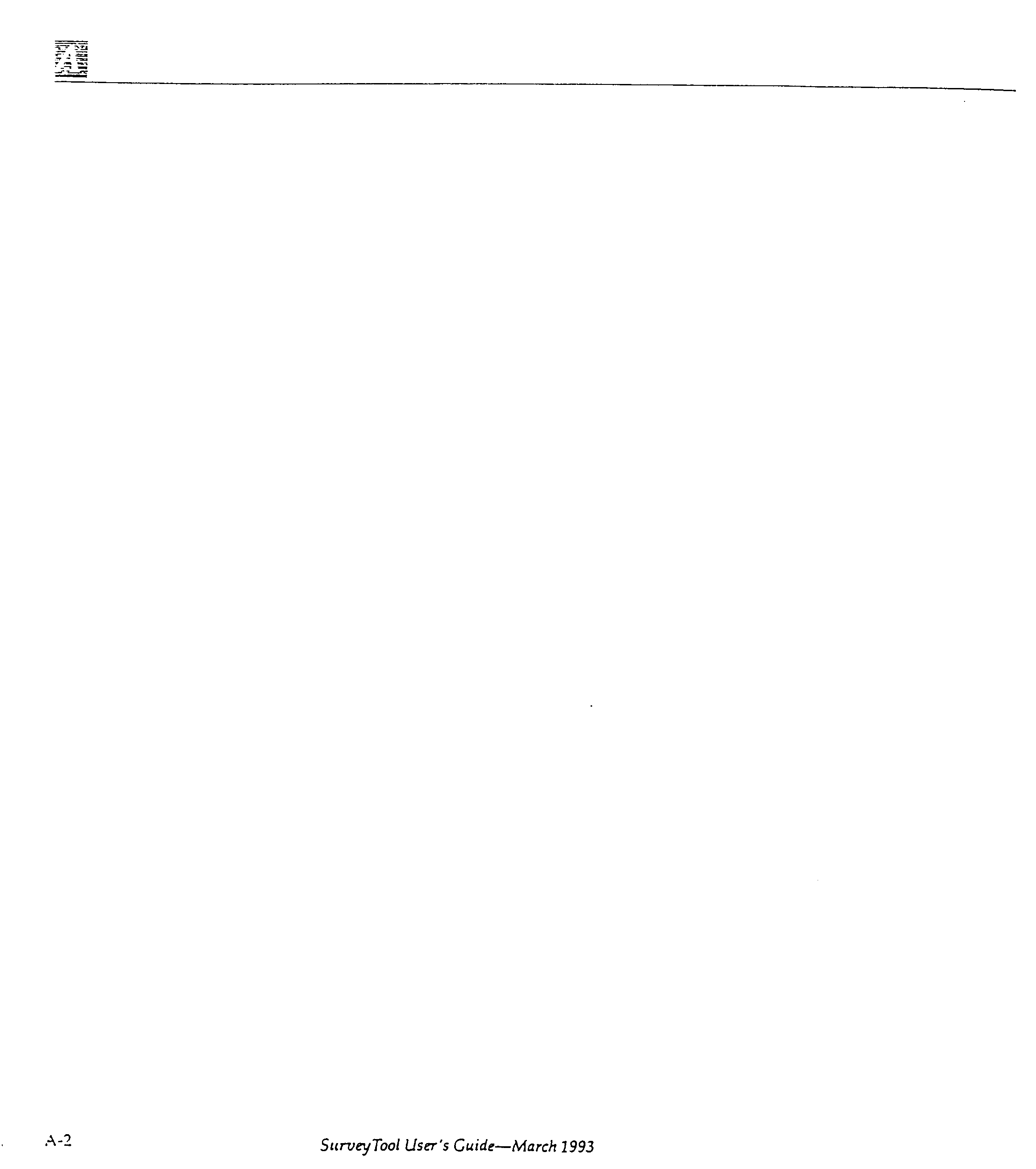

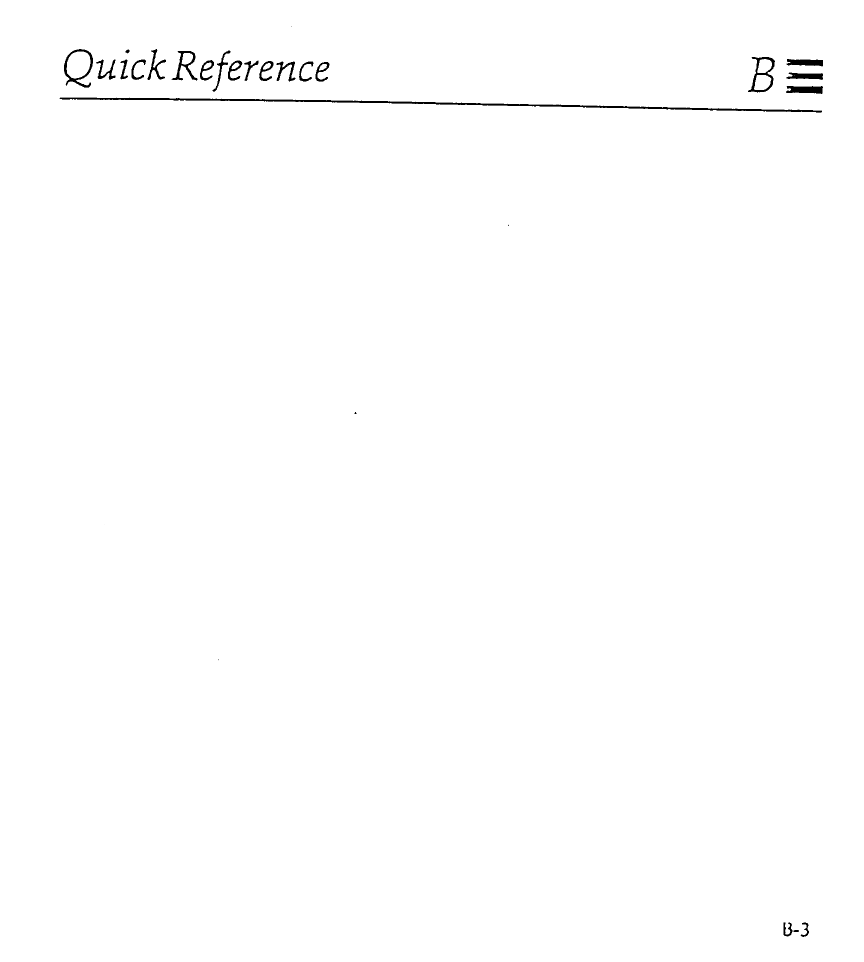

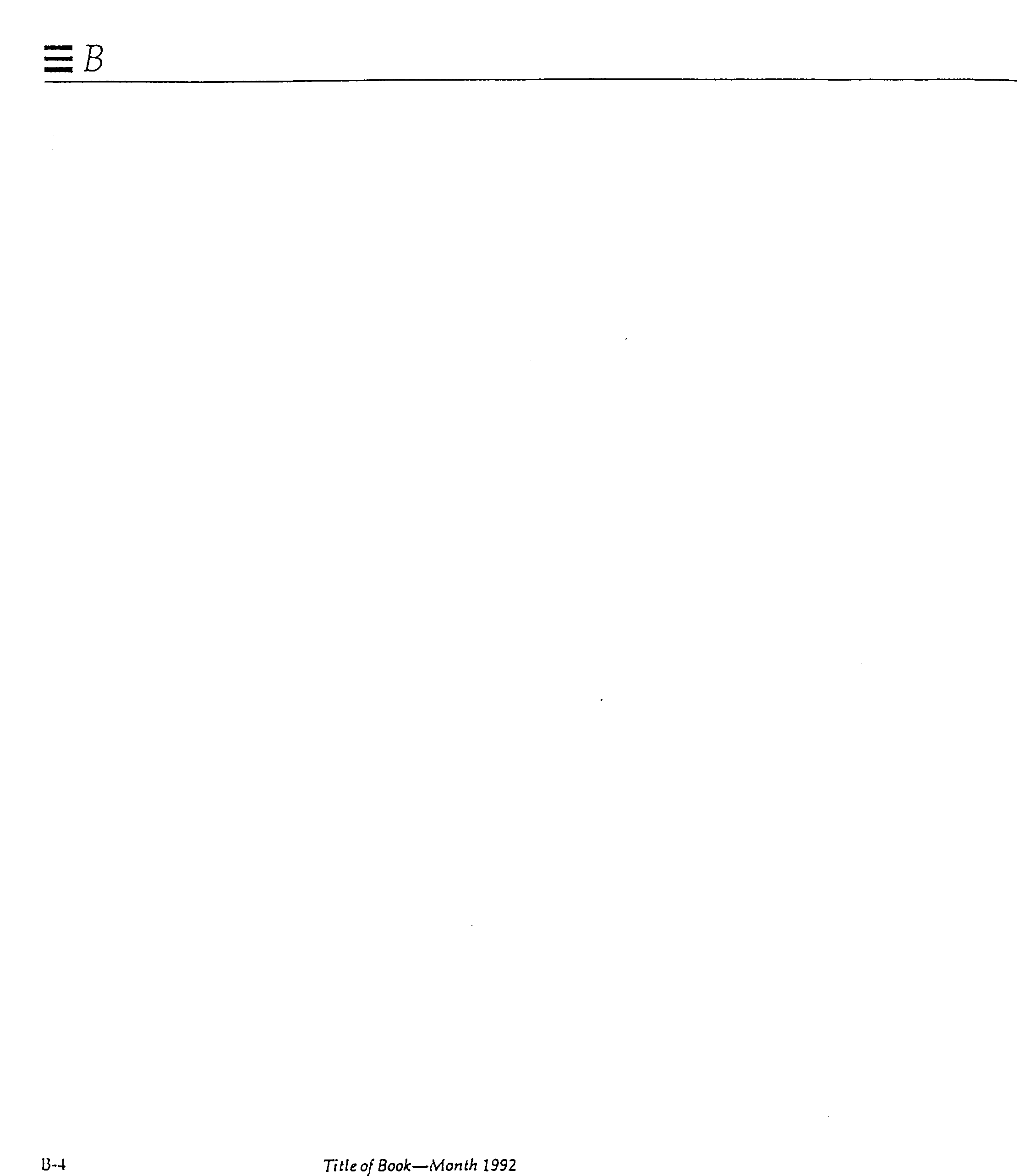

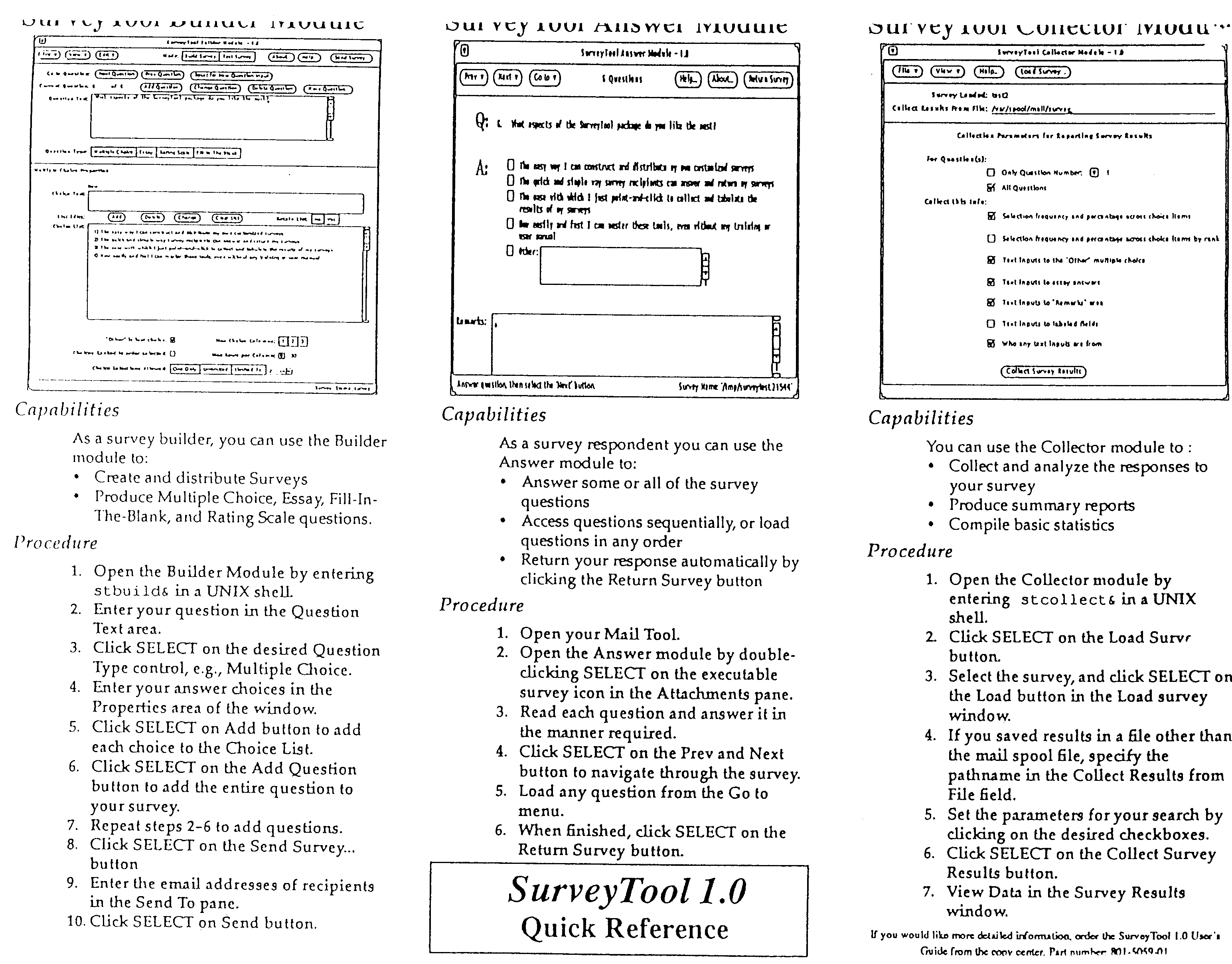

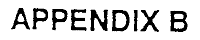

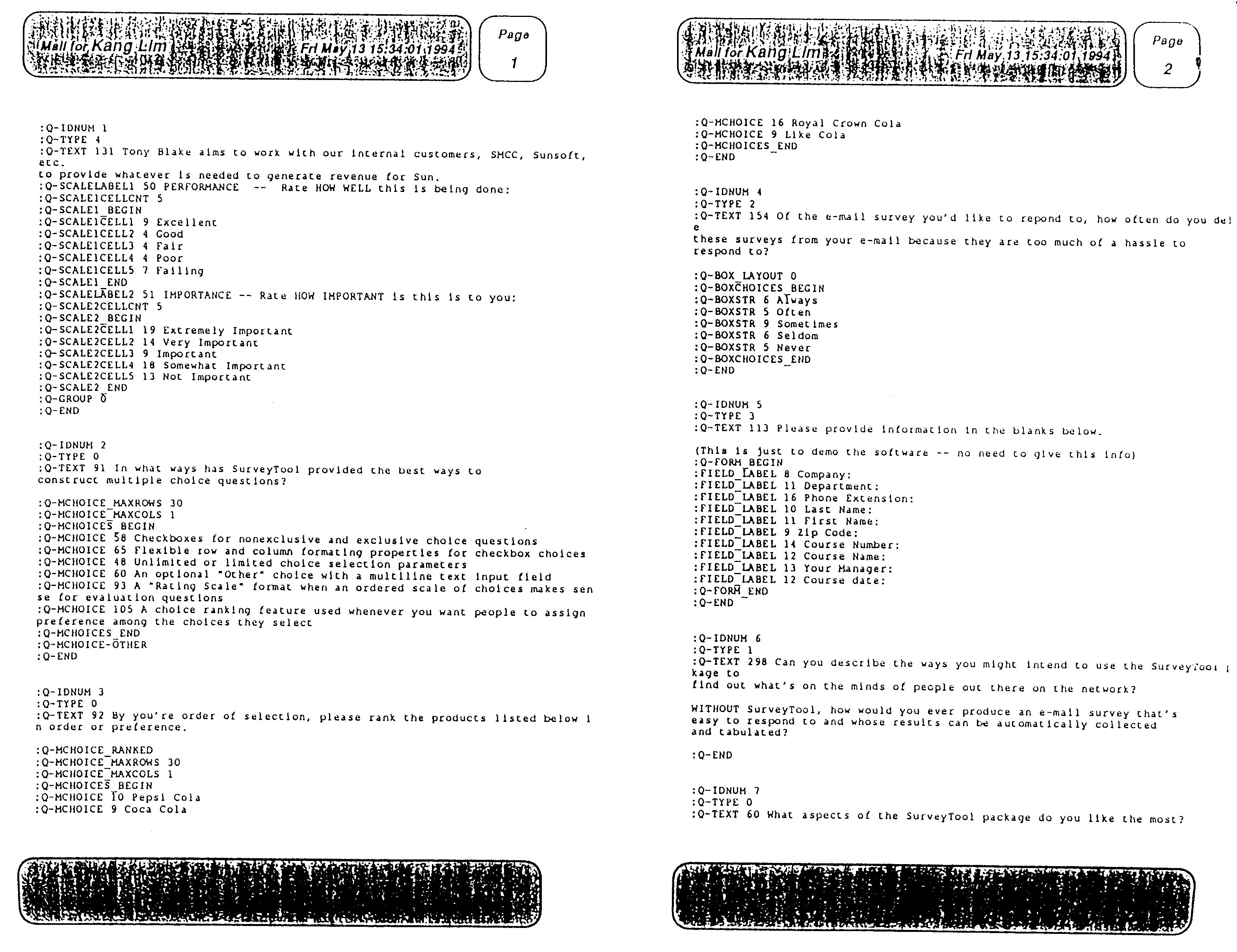

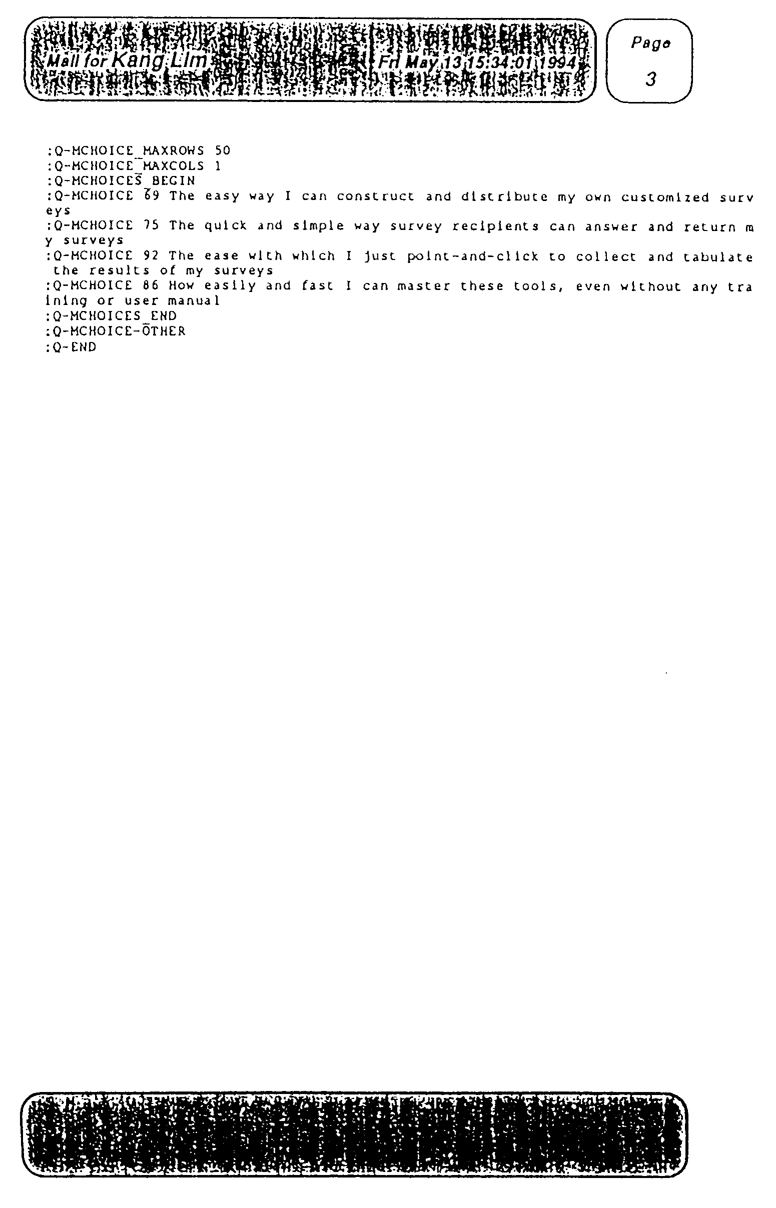

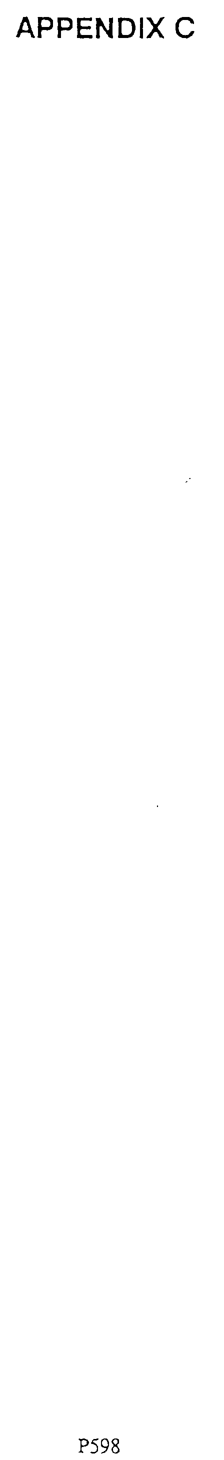

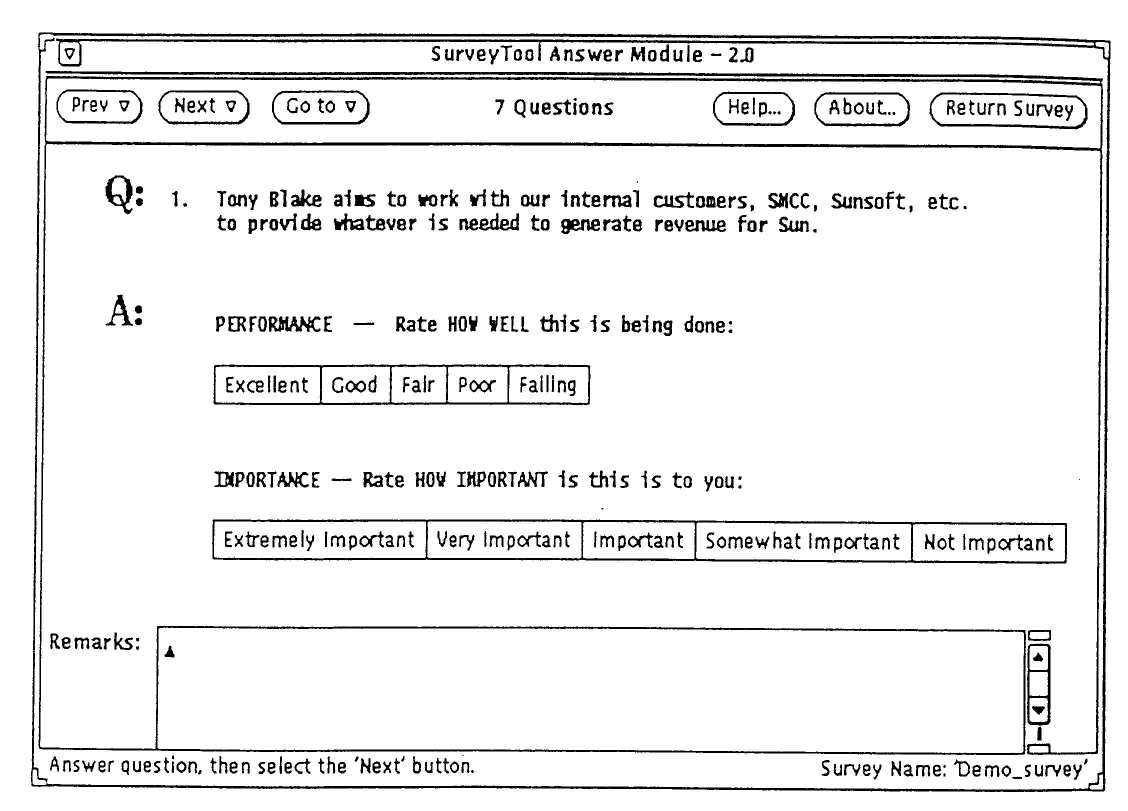

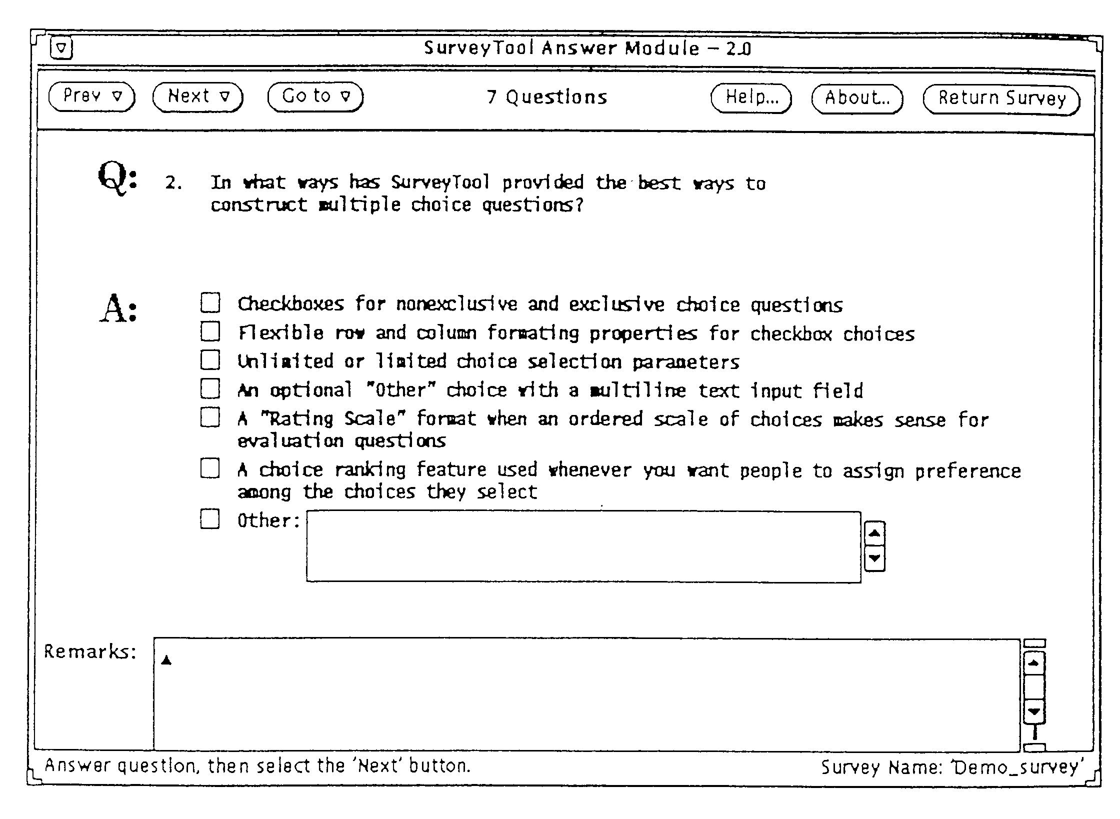

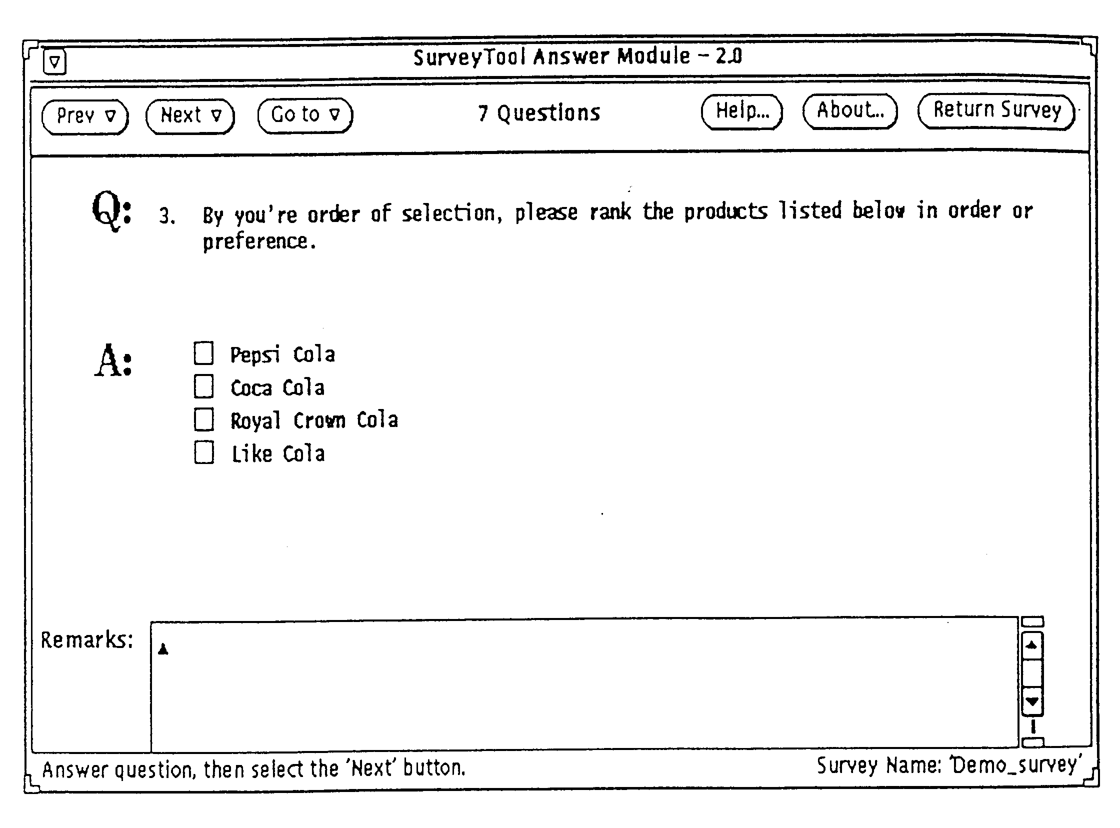

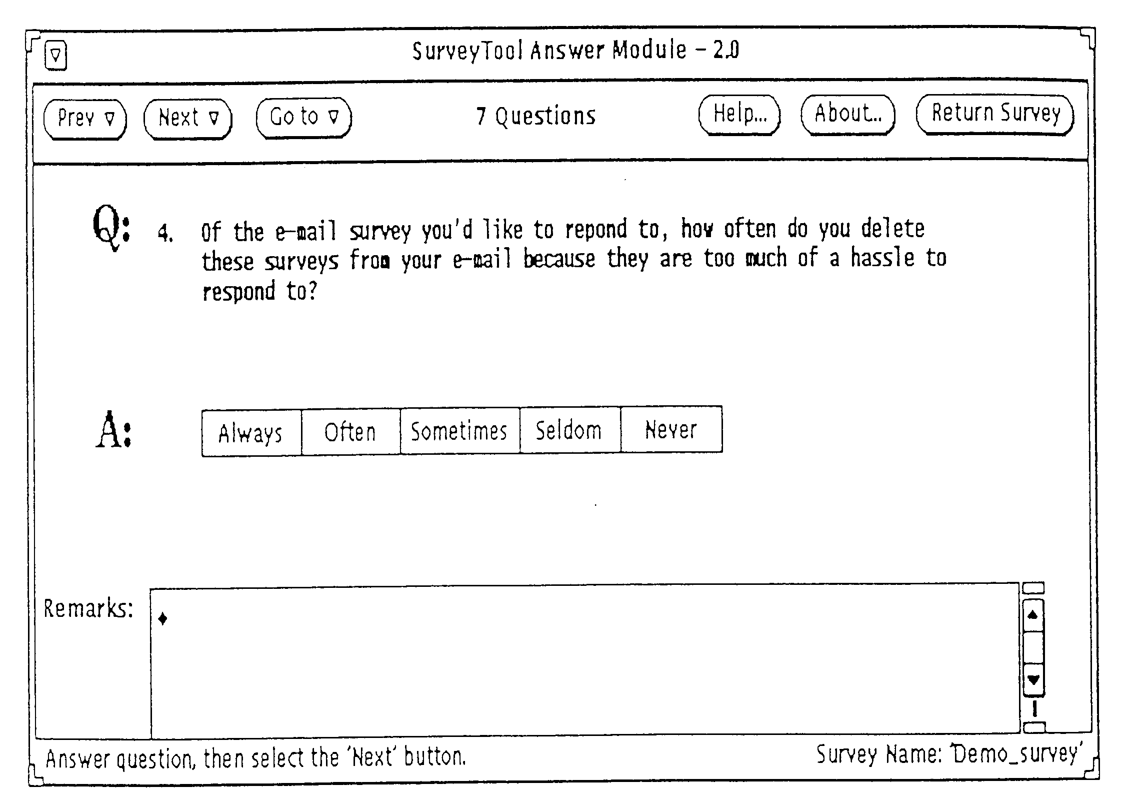

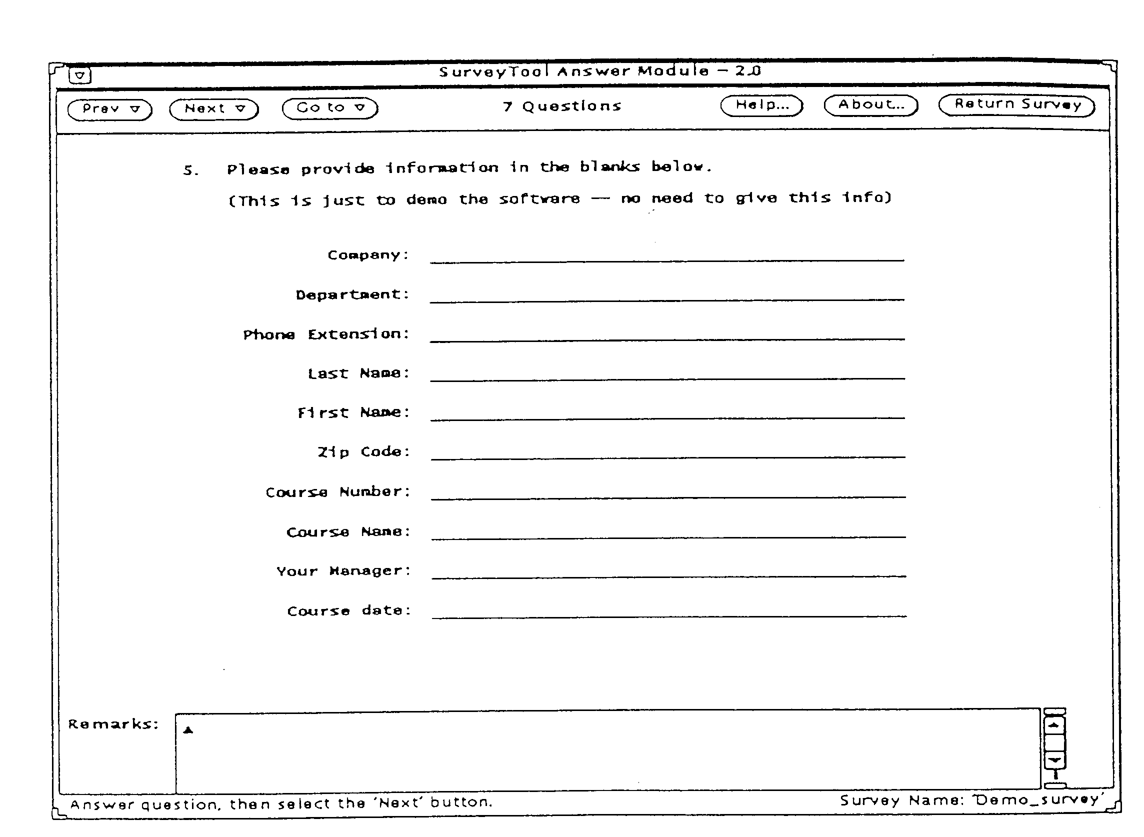

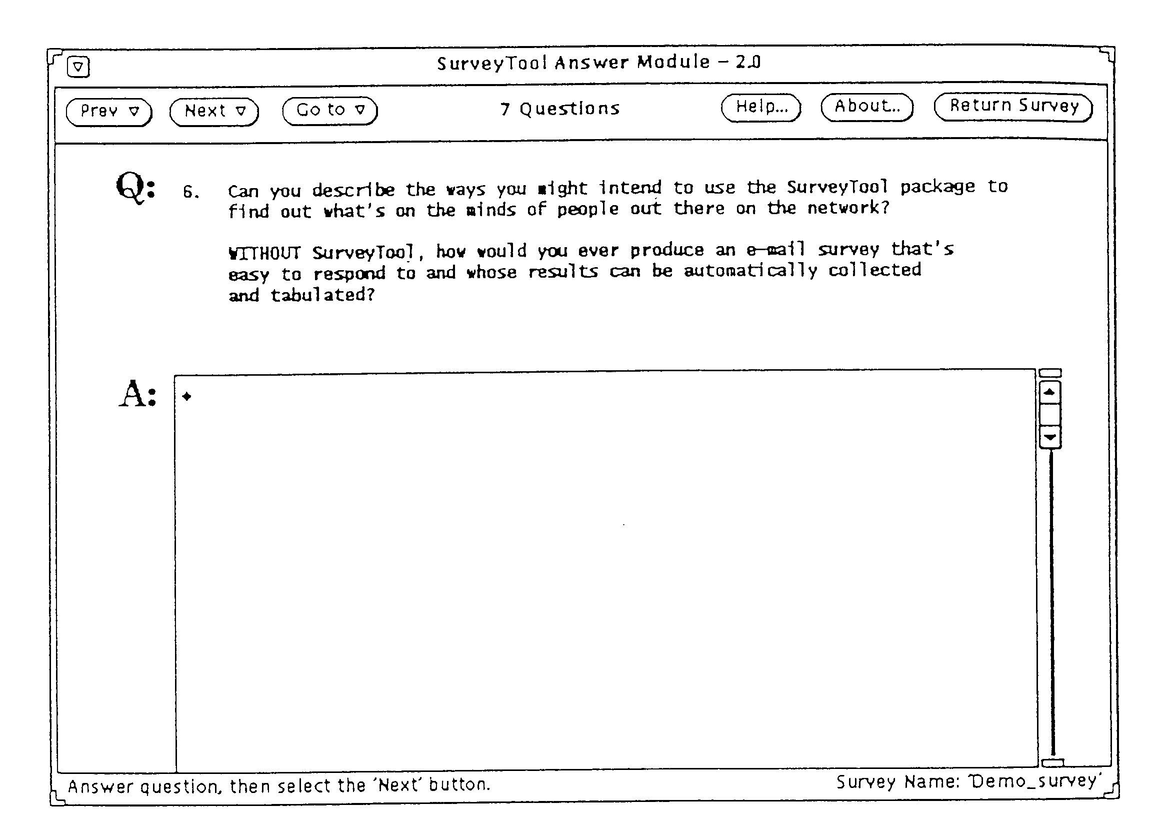

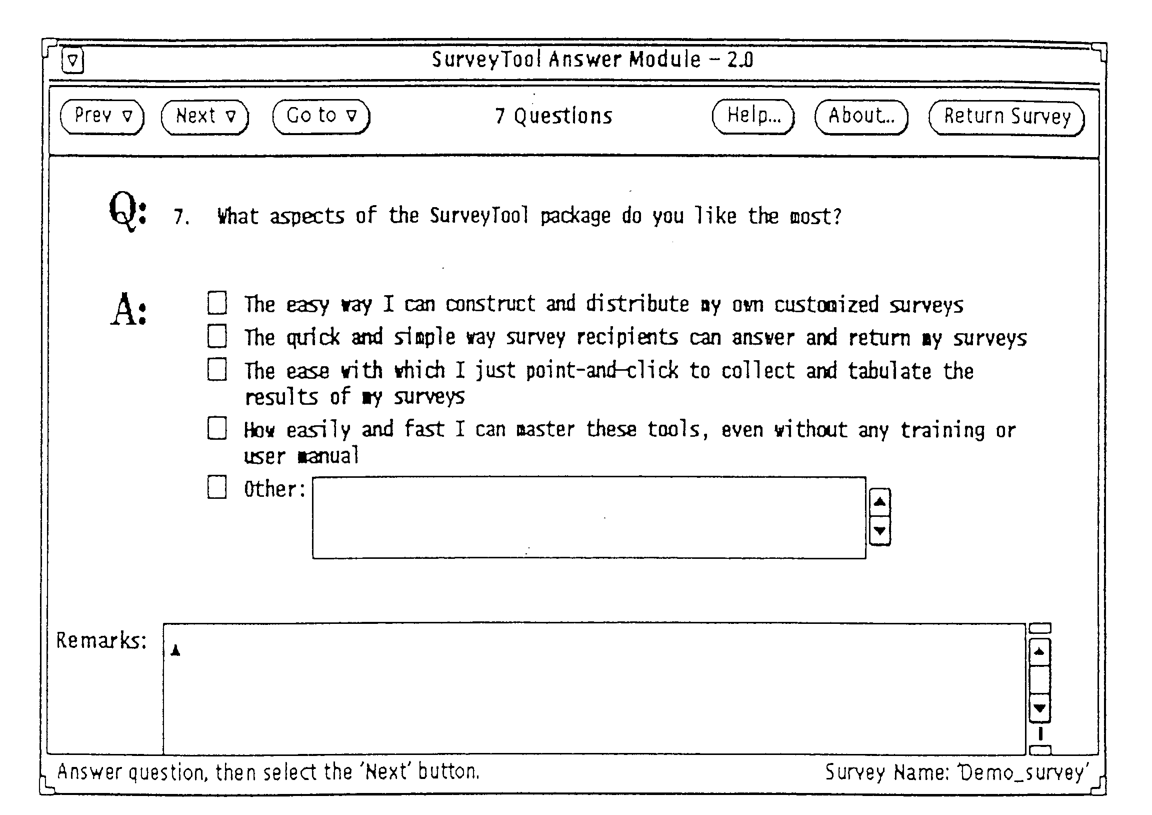

## Claims

1. A method for conducting a graphical survey transmitted over a computer network having a plurality of nodes interconnecting a plurality of computers, the method being implemented as a plurality of program instructions and data stored in the plurality of computers, each said computer including a central processing unit (CPU), a memory coupled to the CPU, a video display device coupled to the CPU, an input device coupled to the CPU, and wherein the plurality of computers include an enquiring computer and a receiving computer, the method including the enquiring computer-implemented steps of:
generating at least one query for said graphical survey;
encoding said graphical survey in a survey description language (SDL); and
transmitting said SDL encoded survey attached to a survey electronic mail (email) over said computer network to a targeted user at said receiving computer.

2. The method of claim 1 wherein said SDL includes ASCII characters.

3. The method of claim 1 or claim 2, further comprising the receiving computer-implemented steps of:
receiving said survey email with said attached SDL encoded survey; and
instantiating said SDL encoded survey.

4. The method of claim 3 wherein said instantiating step include the steps of:
decoding said SDL encoded survey into a graphical form;
generating a graphical interface based on said graphical form on said receiving computer for interacting with said targeted user;
recording at least one survey response from said targeted user;
encoding said survey response in a survey result language (SRL); and
transmitting said SRL encoded survey response attached to an answer email to a designated node of said computer network.

5. The method of claim 4 further comprising the step of storing said SRL encoded survey response in a survey cache coupled to said designated node.

6. The method of claim 4 or claim 5, wherein said graphical interface is bit mapped and includes radio button(s) and textual window(s).

7. The method of any of claims 4 to 6, wherein said SRL includes ASCII characters.

8. The method of any of claims 4 to 7, wherein one of said plurality of computers is a reviewing computer, said method further comprising the reviewing computer-implemented steps of:
retrieving said SRL encoded survey response attached to said answer email;
interpreting said survey response to produce a survey report; and
outputing the survey report.

9. The method of claim 8 wherein the interpreting step includes the computer-implemented steps of:
generating scan pattern tokens;
matching scan patterns with said survey response; and
tabulating matched patterns from the matching step to produce the survey report.

10. A method for responding a graphical survey transmitted over a computer network having a plurality of nodes interconnecting a plurality of computers, the method being implemented as a plurality of program instructions and data stored in the plurality of computers, each said computer including a central processing unit (CPU), a memory coupled to the CPU, a video display device coupled to the CPU, an input device coupled to the CPU, and wherein the plurality of computers include a receiving computer, the method including the receiving computer-implemented steps of:
receiving a survey electronic mail (email) with a graphical survey attachment, said graphical survey including at least one query and encoded in a survey description language (SDL); and
instantiating said SDL encoded survey.

11. The method of claim 10 wherein said instantiating step include the steps of:
decoding said SDL encoded survey into a graphical form;
generating a graphical interface based on said graphical form on said receiving computer for interacting with said targeted user;
recording at least one survey response from said targeted user;
encoding said survey response in a survey result language (SRL); and
transmitting said SRL encoded survey response attached to an answer email to a designated node of said computer network.

12. The method of claim 11 further comprising the step of storing said SRL encoded survey response in a survey cache coupled to said designated node.

13. The method of claim 11 or claim 12, wherein said graphical interface is bit mapped and includes radio button(s) and textual window(s).

14. The method of any of claims 11 to 13, wherein said SRL include ASCII characters.

15. The method of any of claims 11 to 14, wherein one of said plurality of computers is a reviewing computer, said method further comprising the reviewing computer-implemented steps of:
retrieving said SRL encoded survey response attached said answer email;
interpreting said survey response to produce a survey report; and
outputing said survey report.

16. The method of claim 15 wherein the interpreting step includes the computer-implemented steps of:
generating scan pattern tokens;
matching scan patterns with said survey response; and
tabulating matched patterns from the matching step to produce the survey report.

17. A method for processing a survey response transmitted over a computer network having a plurality of nodes interconnecting a plurality of computers, the method being implemented as a plurality of program instructions and data stored in the plurality of computers, each said computer including a central processing unit (CPU), a memory coupled to the CPU, a video display device coupled to the CPU, an input device coupled to the CPU, and wherein the plurality of computers include a reviewing computer, the method including the reviewing computer-implemented steps of:
retrieving a survey response from a node of said computer network, said survey response encoded in a survey result language (SRL);
interpreting said survey response to produce a survey report; and
outputing said survey report.

18. The method of claim 17 wherein the interpreting step includes the computer-implemented steps of:
generating scan pattern tokens;
matching scan patterns with said survey response; and
tabulating matched patterns from the matching step to produce the survey report.

19. The method of claim 17 or claim 18, wherein said SRL include ASCII characters.
